(19) **Europäisches Patentamt / European Patent Office / Office européen des brevets**

(11) **EP 2 570 904 A1**

(12) **EUROPEAN PATENT APPLICATION**
published in accordance with Art. 153(4) EPC

(43) Date of publication:
20.03.2013 Bulletin 2013/12

(51) Int Cl.:
*G06F 3/048* (2013.01)   *G06F 3/041* (2006.01)

(21) Application number: 11780330.4

(22) Date of filing: 28.02.2011

(86) International application number:
PCT/JP2011/001169

(87) International publication number:
WO 2011/142069 (17.11.2011 Gazette 2011/46)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 13.05.2010 JP 2010111545

(71) Applicant: Panasonic Corporation
Kadoma-shi
Osaka 571-8501 (JP)

(72) Inventor: ITO, Hiroyuki
Osaka 540-6207 (JP)

(74) Representative: Grünecker, Kinkeldey,
Stockmair & Schwanhäusser
Leopoldstrasse 4
80802 München (DE)

(54) **ELECTRONIC APPARATUS, DISPLAY METHOD, AND PROGRAM**

(57)   A part of the contents displayed on a display screen is fixed and also the contents of the outside of a target of the fixing are scrolled according to an intuitive and simple manipulation. An electronic apparatus includes a touch input manipulation detecting unit which is arranged on a display unit for displaying an image and detects a touch input manipulation, a fixed area determination processing unit for determining a fixed area including a first contact point and the outside of the fixed area including a second contact point based on the first contact point and the second contact point when the first contact point is fixed and the second contact point is moved in a predetermined direction in a case where there are two contact points of the detected touch input manipulation, a fixed area display processing unit for generating an image corresponding to the fixed area, a fixed area outside display processing unit for generating an image obtained by scrolling an image corresponding to the outside of the fixed area is scrolled in the direction in which the second contact point is moved, a display image generating unit for generating an image displayed on the display unit based on each of the generated images, and a display control unit for performing control such that the generated image is displayed on the display unit.

FIG. 4

**Description**

**Technical Field**

The present invention relates to an electronic apparatus, a display method and a program for splitting information displayed on a display screen into a fixed area and the outside of the fixed area and scrolling the information displayed in a display area of the outside of the fixed area.

**Background Art**

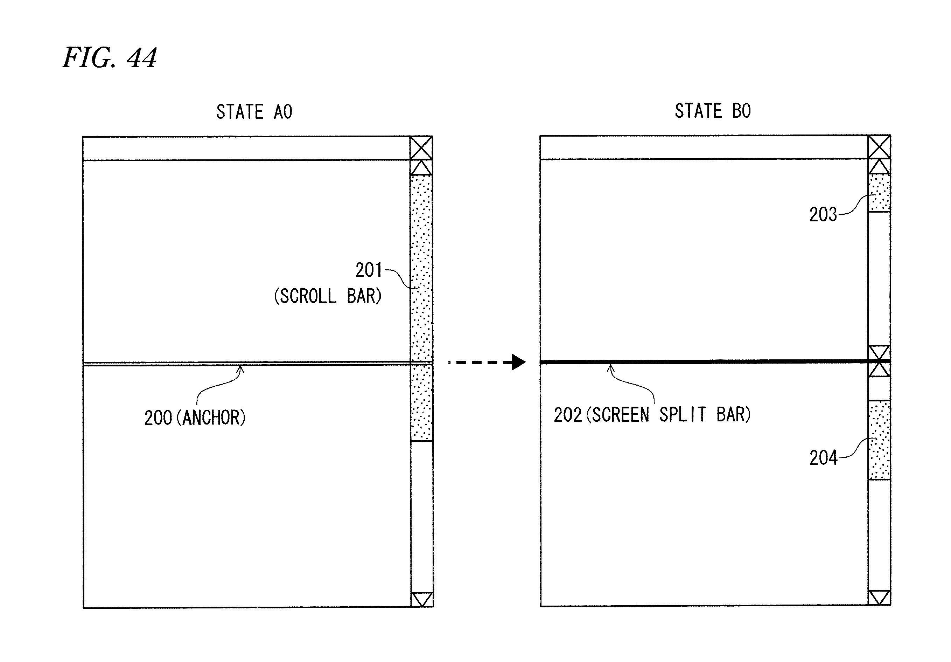

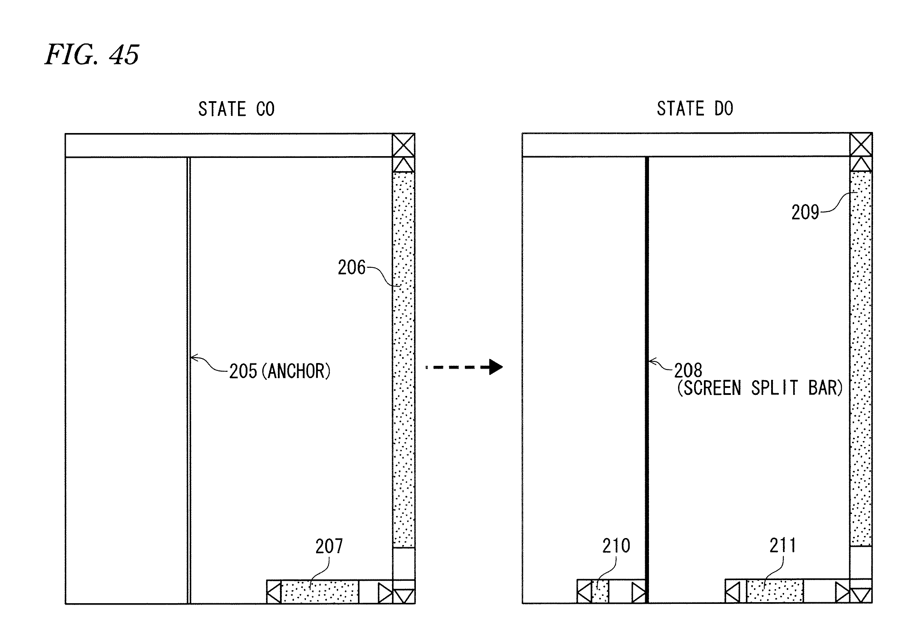

For example, in document preparation applications, spreadsheet applications or mail applications, a display screen can be split in two directions of a vertical direction or a horizontal direction conventionally. An example of splitting a display screen in a conventional application in a vertical direction or a horizontal direction will be described with reference to Figs. 44 and 45. Fig. 44 is an explanatory diagram showing one example of a display screen before and after the display screen in a conventional document preparation application is split in two directions of a vertical direction. A state A0 of Fig. 44 shows the display screen before splitting in the vertical direction, and a state B0 of Fig. 44 shows the display screen after splitting in the vertical direction. Fig. 45 is an explanatory diagram showing one example of a display screen before and after the display screen in a conventional spreadsheet application is split in a horizontal direction. A state C0 of Fig. 45 shows the display screen before splitting in the horizontal direction, and a state D0 of Fig. 45 shows the display screen after splitting in the horizontal direction.

As shown in the state A0 of Fig. 45, in order to split the display screen in the vertical direction, a user performs manipulations in which an anchor 200 for screen splitting is displayed in a document preparation application of a target and the anchor 200 is moved in the vertical direction and the anchor 200 is clicked in a desired screen split position. Accordingly, as shown in the state B0 of Fig. 44, the anchor 200 is changed into a screen split bar 202 and also the display screen split in the vertical direction is displayed in the display screen of the document preparation application. In addition, in a scroll bar 201 displayed on the right end of the display screen in the state A0, with screen splitting of the display screen, a scroll bar 203 is displayed on the right end of the split upper screen shown in the state B0 and a scroll bar 204 is displayed on the right end of the split lower screen shown in the state B0, respectively.

Also, as shown in the state C0 of Fig. 45, in order to split the display screen in the horizontal direction, a user performs manipulations in which an anchor 205 for screen splitting is displayed in a spreadsheet application of a target and the anchor 200 is moved in the horizontal direction and the anchor 205 is clicked in a desired screen split position. Accordingly, as shown in the state D0 of Fig. 45, the anchor 205 is changed into a screen split bar 208 and also the display screen split in the horizontal direction is displayed in the display screen of the spreadsheet application. In addition, in scroll bars 206 and 207 respectively displayed on the right end and the lower end of the display screen in the state C0, with screen splitting of the display screen, a scroll bar 210 is displayed on the lower end of the split left screen shown in the state D0 and scroll bars 209 and 211 are displayed on the right end and the lower end of the split right screen shown in the state D0, respectively.

The screen splitting as described above is not particularly limited to manipulations through a keyboard or a mouse, and can also be performed according to, for example, a touch input manipulation performed by a user on a display screen of an electronic apparatus equipped with a touch panel. In addition, such screen splitting or display control according to the touch panel manipulation is disclosed in Patent Document 1 and Patent Document 2, respectively.

A display apparatus for displaying an image on a display screen and detecting a contact position of a finger of an operator on the display screen and calculating the amount La of movement from a contact start point S to a contact end point E of the finger of the operator and determining whether or not the amount La of movement exceeds a reference amount Ls of movement and calculating a positional deviation $\delta$ of the finger of the operator and determining whether or not the positional deviation $\delta$ falls below a preset reference positional deviation $\delta s$ and splitting the display screen into two pieces when La>Ls and $\delta<\delta s$ is disclosed in Patent Document 1. According to such a display apparatus disclosed in Patent Document 1, the display screen can be split into the two pieces by an extremely easy manipulation in which the operator moves the finger in contact with the display screen by a predetermined amount while tracing the display screen with the finger.

Also, a mode-based graphical user interface for a touch-sensitive input device in which when a user interface is touched, a user interface mode in the touched case is determined and also one or plural GUI elements are activated in response to the detected touch based on the determined user interface mode is disclosed in Patent Document 2.

**Related Art Documents**

**Patent Documents**

Patent Document 1: JP-A-2007-257220
Patent Document 2: JP-A-2008-508600

**Summary of the Invention**

**Problem to be Solved by the Invention**

However, in the method of screen splitting in the applications described above or the method disclosed in Patent Document 1 or Patent Document 2, it was necessary for a user to perform the following manipulation in the case of scrolling the other part of the outside of a target of fixing in a state in which a part of information displayed on the display screen is fixed. Concretely, it is necessary for the user to split the display screen in the front or back of a display area in which information to be fixed is displayed, or scroll after specifying a fixed position of a part of the target inside the display screen. Because of this, there was a problem that the manipulation desired by the user was very complicated.

The state in which a part of the display screen is fixed as described above includes a state in which a display screen portion of one side in the case of splitting the display screen into two pieces is fixed, a state in which a part of an object present inside the display screen is fixed, a state in which one or a series of partial scene in the case of reproducing a series of time-series data such as video is fixed, or a state in which one or continuous partial display in the case of continuous display of list data such as an image is fixed. Consequently, operability necessary for the user in the case of scrolling the other part after a part of the display screen is fixed is desirably intuitive and simple for the user.

The invention has been implemented in view of the conventional circumstances described above, and an object of the invention is to provide an electronic apparatus, a display method and a program for fixing a part of information displayed on a display screen and scrolling the information about the outside of a target of the fixing according to an intuitive and simple manipulation.

**Means for Solving the Problem**

The invention provides an electronic apparatus comprising: a display unit for displaying an image; a touch input manipulation detecting unit which is arranged on the display unit and detects a touch input manipulation; a fixed area determination processing unit for determining a fixed area comprising a first contact point and an outside of the fixed area comprising a second contact point based on the first contact point and the second contact point when the first contact point is fixed and the second contact point is moved in a predetermined direction in a case where the touch input manipulation detecting unit detects two contact points of a touch input manipulation; a fixed area display processing unit for generating an image corresponding to the fixed area determined by the fixed area determination processing unit; a fixed area outside display processing unit for generating an image which is obtained by scrolling an image corresponding to the outside of the fixed area determined by the fixed area determination processing unit in the predetermined direction in which the second contact point is moved; a display image generating unit for generating an image displayed on the display unit based on the images generated by the fixed area display processing unit and the fixed area outside display processing unit, respectively; and a display control unit for performing control such that the image generated by the display image generating unit is displayed on the display unit.

The invention also provides a display method comprising the steps of: displaying an image on a display unit; detecting a predetermined touch input manipulation on the display unit; determining a fixed area comprising a first contact point and an outside of the fixed area comprising a second contact point based on the first contact point and the second contact point when the first contact point is fixed and the second contact point is moved in a predetermined direction in a case where there is two contact points of the detected touch input manipulation; generating an image corresponding to the determined fixed area; generating an image which is obtained by scrolling an image corresponding to the outside of the determined fixed area in the predetermined direction in which the second contact point is moved; generating an image displayed on the display unit based on each of the generated images; and performing control such that the generated image is displayed on the display unit.

The invention also provides a program for causing a computer comprising a display unit to execute the steps of: displaying an image on the display unit; detecting a predetermined touch input manipulation on the display unit; determining a fixed area comprising a first contact point and an outside of the fixed area comprising a second contact point based on the first contact point and the second contact point when the first contact point is fixed and the second contact point is moved in a predetermined direction in a case where there are two contact points of the detected touch input manipulation; generating an image corresponding to the determined fixed area; generating an image which is obtained by scrolling an image corresponding to the outside of the determined fixed area in the predetermined direction in which the second contact point is moved; generating an image displayed on the display unit based on each of the generated images, and performing control such that the generated image is displayed on the display unit.

According to the configuration, a part of information displayed on a display screen can be fixed, and the information about the outside of a target of the fixing can be scrolled, according to an intuitive and simple manipulation.

Advantages of the Invention

The electronic apparatus, the display method, and the program can fix a part of information displayed on a display screen and scroll the information about the outside of a target of the fixing according to an intuitive and simple manipulation.

**Brief Description of the Drawings**

Fig. 1 is a block diagram showing an internal configuration of a mobile telephone of a first embodiment.

Fig. 2 is an explanatory diagram showing one example of a situation before and after splitting into a fixed area and the outside of the fixed area in the first embodiment.
Fig. 3 is an explanatory diagram showing another example of a situation before and after splitting into a fixed area and the outside of the fixed area in the first embodiment.
Fig. 4 is an explanatory diagram showing a further example of a situation before and after splitting into a fixed area and the outside of the fixed area in the first embodiment.
Fig. 5 is a flowchart describing operation of the mobile telephone of the first embodiment.
Fig. 6 is a flowchart describing the operation of the mobile telephone of the first embodiment.
Fig. 7 is a block diagram showing an internal configuration of a mobile telephone of a second embodiment.
Fig. 8 is an explanatory diagram showing one example of a situation before and after splitting into a fixed area and the outside of the fixed area in the second embodiment.
Fig. 9 is a flowchart describing operation of the mobile telephone of the second embodiment.
Fig. 10 is a flowchart describing the operation of the mobile telephone of the second embodiment.
Fig. 11 is a flowchart describing the operation of the mobile telephone of the second embodiment.
Fig. 12 is a flowchart describing the operation of the mobile telephone of the second embodiment.
Fig. 13 is a block diagram showing a configuration of a mobile telephone of a third embodiment.
Fig. 14 is an explanatory diagram showing one example of a situation before and after splitting into a fixed area and the outside of the fixed area in the third embodiment.
Fig. 15 is a flowchart describing operation of the mobile telephone of the third embodiment.
Fig. 16 is a flowchart describing the operation of the mobile telephone of the third embodiment.
Fig. 17 is a flowchart describing the operation of the mobile telephone of the third embodiment.
Fig. 18 is a flowchart describing the operation of the mobile telephone of the third embodiment.
Fig. 19 is a block diagram showing an internal configuration of a mobile telephone of a fourth embodiment.
Fig. 20 is an explanatory diagram showing one example of a touch input manipulation using a scroll wheel in the fourth embodiment.
Fig. 21 is an explanatory diagram showing another example of a touch input manipulation using a scroll wheel in the fourth embodiment.
Fig. 22 is a flowchart describing operation of the mobile telephone of the fourth embodiment.
Fig. 23 is a flowchart describing the operation of the mobile telephone of the fourth embodiment.
Fig. 24 is a flowchart describing the operation of the mobile telephone of the fourth embodiment.
Fig. 25 is a flowchart describing the operation of the mobile telephone of the fourth embodiment.
Fig. 26 is a block diagram showing an internal configuration of a mobile telephone of a modified example 1 of the fourth embodiment.
Fig. 27 is an explanatory diagram showing one example of a touch input manipulation using a scroll wheel in the modified example 1 of the fourth embodiment.
Fig. 28 is a flowchart describing a part of the operation of a scroll wheel processing unit in the modified example 1 of the fourth embodiment.
Fig. 29 is a block diagram showing an internal configuration of a mobile telephone of a modified example 2 of the fourth embodiment.
Fig. 30 is an explanatory diagram showing one example of a touch input manipulation using a scroll wheel in the modified example 2 of the fourth embodiment.

Fig. 31 is a flowchart describing operation in the case of displaying or hiding the scroll wheel by a touch input manipulation in which a second finger double-clicks a certain position of the outside of a fixed area in the modified example 2 of the fourth embodiment.

Fig. 32 is a flowchart describing operation in the case of displaying or hiding the scroll wheel by a touch input manipulation in which a third finger double-clicks or clicks a certain position of the outside of a fixed area in the modified example 2 of the fourth embodiment.

Fig. 33 is a block diagram showing an internal configuration of a mobile telephone of a fifth embodiment.

Fig. 34 is an explanatory diagram showing one example of a touch input manipulation in the fifth embodiment.

Fig. 35 is a flowchart describing operation of the mobile telephone of the fifth embodiment.

Fig. 36 is a flowchart describing the operation of the mobile telephone of the fifth embodiment.

Fig. 37 is a flowchart describing the operation of the mobile telephone of the fifth embodiment.

Fig. 38 is a block diagram showing an internal configuration of a mobile telephone of a sixth embodiment.

Fig. 39 is an explanatory diagram showing one example of a touch input manipulation in the sixth embodiment.

Fig. 40 is a flowchart describing operation of the mobile telephone of the sixth embodiment.

Fig. 41 is a flowchart describing the operation of the mobile telephone of the sixth embodiment.

Fig. 42 is a flowchart describing the operation of the mobile telephone of the sixth embodiment.

Fig. 43 is a flowchart describing the operation of the mobile telephone of the sixth embodiment.

Fig. 44 is an explanatory diagram showing one example of conventional screen splitting.

Fig. 45 is an explanatory diagram showing another example of conventional screen splitting.

## Mode for Carrying Out the invention

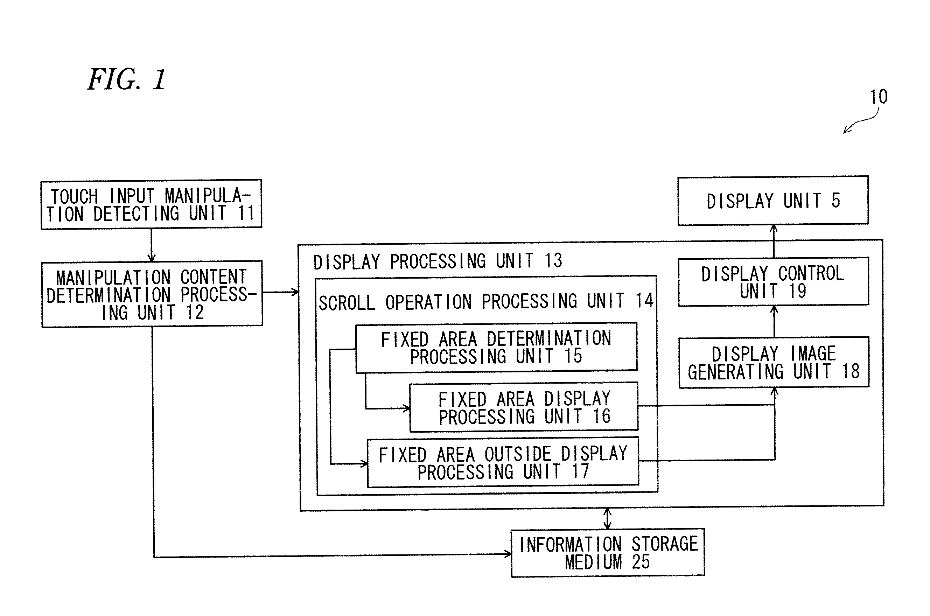

Each of the embodiments of the invention will hereinafter be described with reference to the drawings. In each of the following embodiments, a mobile telephone 10 having a configuration shown in Fig. 1 will be described as an electronic apparatus of the invention by way of example. However, the electronic apparatus of the invention is not limited to the mobile telephone 10 shown in Fig. 1. In addition, the invention can be represented as an apparatus such as the mobile telephone 10 shown in Fig. 1 or a "program" for operating a computer which is the apparatus, and can further be represented as a "method" including steps executed by the mobile telephone 10. That is, the invention can be represented in any category of the apparatus, the method and the program.

In each of the following embodiments, a scroll means a manipulation in which when the mobile telephone 10 cannot display the whole information about a display target on a display screen which is a display unit 5 and only a part of the information is displayed, the other part excluding a part of the information displayed can be displayed by manipulating the mobile telephone 10 as is well known. Consequently, by scrolling, information in which the whole information cannot be displayed at once within the display screen of the mobile telephone 10 can be moved in a vertical direction, a horizontal direction or an oblique direction to display the part incapable of display in the original state. Also, as the information displayed on the display unit 5 by the mobile telephone 10, an "image" is hereinafter illustrated and described, but "animation" may be illustrated as the displayed information in addition to the "image".

Also, one example of all the information to be displayed on the display screen in the invention will be described briefly. For example, in the case of displaying the contents of a page of a part of the document file targeted for browsing or editing, the document file of the non-displayed part can be displayed by scrolling. Also, for example, in the case of displaying a part of the plural image data targeted for browsing or editing, the other plural image data targeted can be displayed sequentially by scrolling. Also, for example, in the case of displaying animation data of a part of the animation data (for example, a set of animation frames every 1/30 [second]) targeted for browsing or editing, the animation frames can be displayed sequentially every one frame by scrolling.

Also, for example, in the case of displaying a part of the map data targeted for browsing or editing, the regional data of the non-displayed part can be displayed by scrolling. Also, for example, in the case of displaying a part of the virtual space in which an icon is placed in a predetermined position on the display screen, by scrolling, a range displayed on the display screen, a display angle of the virtual space, etc. are changed sequentially and a display position of the icon is changed according to time and icons more than those capable of being displayed on the screen at once can be displayed sequentially. Also, for example, in the case of displaying a part of the file names of the inside of a predetermined folder, a list of the file names of the non-displayed part can be displayed by scrolling.

(FIRST EMBODIMENT)

1. CONFIGURATION OF MOBILE TELEPHONE 10 OF FIRST EMBODIMENT

Fig. 1 is a block diagram showing an internal configuration of the mobile telephone 10 which is one example of an electronic apparatus of the invention. As shown in Fig. 1, the mobile telephone 10 includes at least the display unit 5, a touch input manipulation detecting unit 11, a manipulation content determination processing unit 12, a display processing unit 13, and an information storage medium 25. The display processing unit 13 includes a scroll operation processing unit 14, a display image generating unit 18, and a display control unit 19. The scroll operation processing unit 14 includes a fixed area determination processing unit 15, a fixed area display processing unit 16, and a fixed area outside display processing unit 17.

The display unit 5 is constructed of a display of the mobile telephone 10, and displays an image generated by the display image generating unit 18 through the display control unit 19 according to a touch input manipulation detected by the touch input manipulation detecting unit 11.

The touch input manipulation detecting unit 11 is constructed of hardware such as a touch panel arranged on the display unit 5, and detects a touch input manipulation which is an input event in which a finger of a user touches the display unit 5. The touch input manipulation detecting unit 11 outputs information to the effect that the touch input manipulation is performed to the manipulation content determination processing unit 12.

The manipulation content determination processing unit 12 acquires the information to the effect that the touch input manipulation is performed outputted by the touch input manipulation detecting unit 11, and also determines the contents of the touch input manipulation corresponding to the acquired information. The contents of this touch input manipulation include, for example, information to the effect that the finger of the user touches (clicks) the display unit 5 one time, information to the effect that the finger of the user touches (double-clicks) the display unit 5 continuously two times, and information to the effect that the finger of the user touches the display unit 5 and then drags (moves) the display unit 5 in a predetermined direction by a predetermined distance. Further, the contents of the touch input manipulation can include information to the effect that plural fingers of users respectively touch the display unit 5 simultaneously or separately in a predetermined time difference. The manipulation content determination processing unit 12 outputs the determined contents of the touch input manipulation to the display processing unit 13.

The display processing unit 13 acquires the contents of the touch input manipulation outputted by the manipulation content determination processing unit 12, and also generates a combined image in which a fixed image displayed on a display area determined as a fixed area F described below according to the acquired contents of the touch input manipulation is combined with a scrolled image (described below) obtained by scrolling an image displayed on the display area determined as the outside NF of the fixed area described below. The display processing unit 13 performs control so as to display the generated combined image on the display unit 5.

Each component of the scroll operation processing unit 14 will be described. The scroll operation processing unit 14 includes the fixed area determination processing unit 15, the fixed area display processing unit 16, and the fixed area outside display processing unit 17 as described above.

The fixed area determination processing unit 15 determines a display area of the fixed area F and a display area of the outside NF of the fixed area in an image displayed on a display screen of the display unit 5 according to the contents of the touch input manipulation outputted by the manipulation content determination processing unit 12. Here, the fixed area F is a display area at the time of fixing a part of the image displayed on the display screen of the display unit 5 according to the contents of the touch input manipulation outputted by the manipulation content determination processing unit 12. Also, the outside NF of the fixed area is the other display area excluding the display area of the fixed area F in the image displayed on the display screen of the display unit 5 according to the contents of the touch input manipulation outputted by the manipulation content determination processing unit 12. In addition, the contents of the touch input manipulation in the case of specifying the fixed area F and the outside NF of the fixed area include the contents in which when two contact points of the touch input manipulation detected by the touch input manipulation detecting unit 11 is present on the display screen of the display unit 5, a state in which the first contact point is touched by, for example, a stylus pen or a first finger of a user is fixed and maintained and after the second contact point different from the first contact point is touched by, for example, a stylus pen or a second finger of the user, the display screen is dragged in a predetermined direction by a predetermined distance. In the following explanation, the case of the touch by the finger is used, and the finger touching the first contact point is called the "first finger" and the finger touching and dragging the second contact point is called the "second finger", respectively.

Also, the fixed area determination processing unit 15 determines a scroll direction in which an image displayed in the display area of the outside NF of the fixed area is scrolled according to a drag direction and a coordinate change amount by drag from the second contact point, and coordinates of the second contact point on the display screen of the display unit 5. Any of a vertical direction, a horizontal direction and an oblique direction corresponds to this scroll direction. The fixed area determination processing unit 15 outputs information about the determined scroll direction to the fixed area outside display processing unit 17.

The fixed area display processing unit 16 generates an image (hereinafter called a "fixed image") displayed in the display area of the fixed area F determined by the fixed area determination processing unit 15. Also, the fixed area display processing unit 16 may generate an image with the same size as that of an image within the range of a predetermined rectangular area at the time of detecting the first contact point or a predetermined expanded or contracted image according to the contents of operation predefined as a program as the fixed image displayed in the display area of the fixed area F. The fixed area display processing unit 16 outputs the generated fixed image to the display image generating unit 18.

The fixed area outside display processing unit 17 generates an image (hereinafter called a "scrolled image") in which an image of the other part excluding the fixed area F in the image displayed on the display screen of the display unit 5 is scrolled in the scroll direction determined by the fixed area determination processing unit 15. The fixed area outside display processing unit 17 outputs the generated scrolled image to the display image generating unit 18.

The display image generating unit 18 acquires the fixed image generated by the fixed area display processing unit 16 and the scrolled image generated by the fixed area outside display processing unit 17, and also generates an image (hereinafter called a "combined image") displayed on the display unit 5 based on the fixed image and the scrolled image acquired. The display image generating unit 18 outputs this generated combined image to the display control unit 19.

The display control unit 19 acquires the combined image outputted by the display image generating unit 18, and also performs control so as to display the acquired combined image on the display unit 5.

The information storage medium 25 is constructed of a storage medium such as ROM, RAM or a hard disk, and previously stores programs in which operations of the manipulation content determination processing unit 12 and the display processing unit 13 are predefined. Also, the information storage medium 25 operates as respective work memories in the operations of the manipulation content determination processing unit 12 and the display processing unit 13. In addition, the manipulation content determination processing unit 12 and the display processing unit 13 can be constructed of hardware or software, and particularly in the case of being constructed of software, a CPU (Central Processing Unit) reads the programs in which the operations of the manipulation content determination processing unit 12 and the display processing unit 13 are predefined and thereby, the manipulation content determination processing unit 12 and the display processing unit 13 can operate.

Also in the following explanation, information about coordinates touched on the display screen of the display unit 5, coordinates before dragged, coordinates after dragged, a direction of the drag, an angle set according to the drag, etc. is temporarily stored in the information storage medium 25.

2. OPERATION EXAMPLE OF SCROLL OPERATION PROCESSING UNIT 14

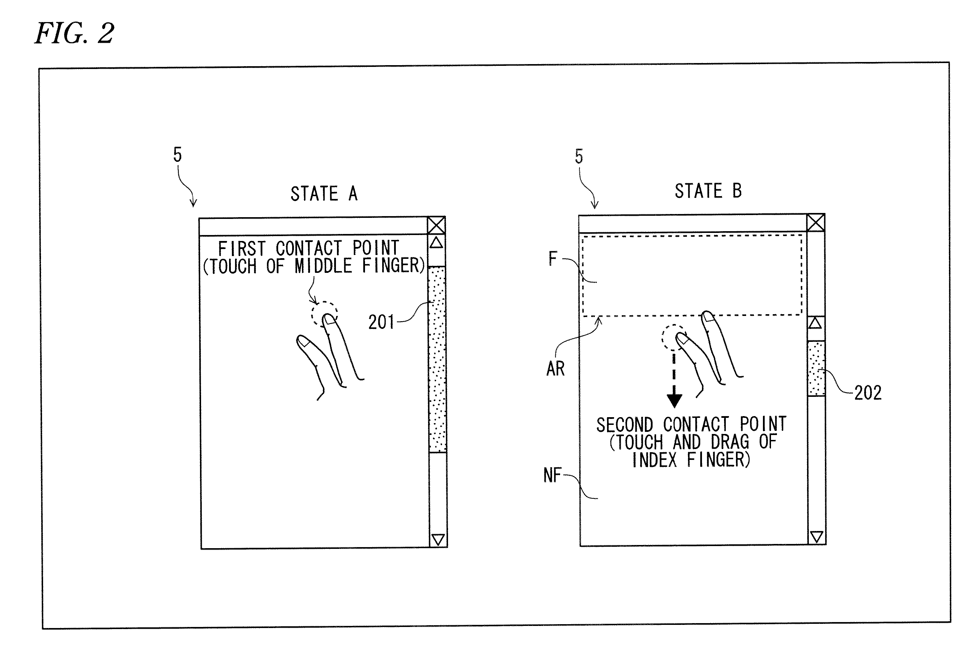

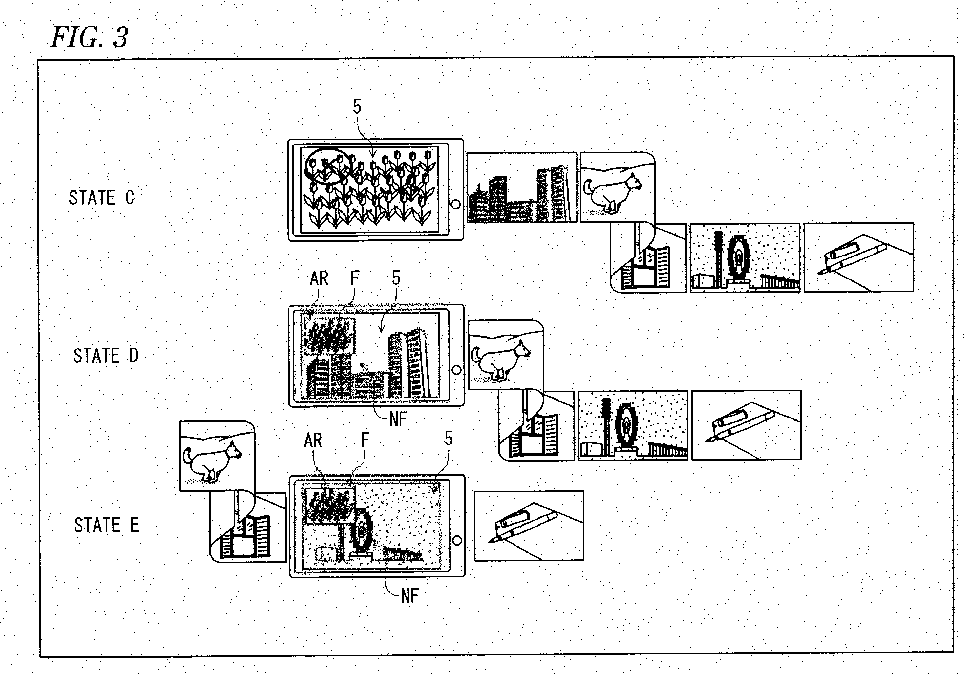

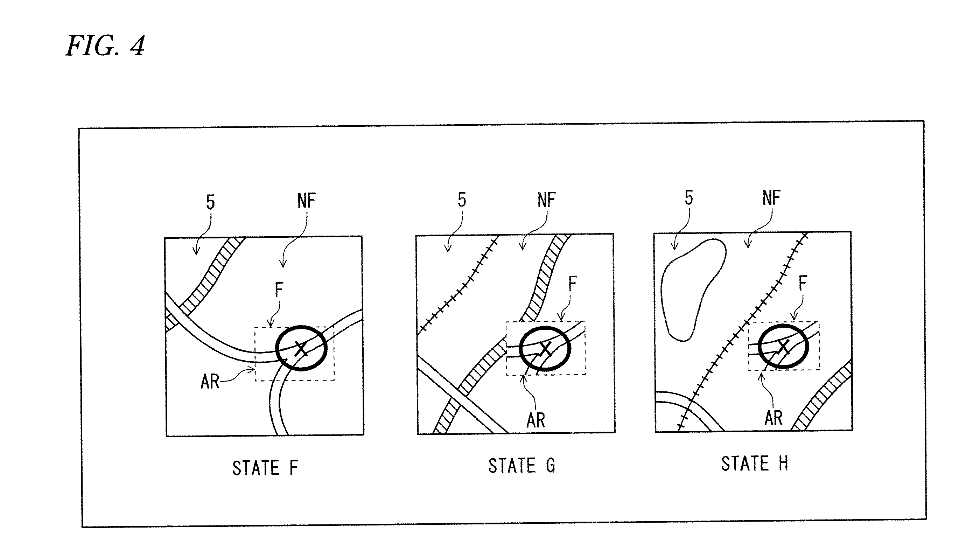

Next, an operation example of the scroll operation processing unit 14 including the fixed area determination processing unit 15, the fixed area display processing unit 16 and the fixed area outside display processing unit 17 will be described with reference to Figs. 2 to 4. Fig. 2 is an explanatory diagram showing one example of a situation before and after display splitting into the fixed area F and the outside NF of the fixed area in the first embodiment. Fig. 2 is an example in which a document preparation application operates in a state A and a state B. Fig. 3 is an explanatory diagram showing another example of a situation before and after display splitting into the fixed area F and the outside NF of the fixed area in the first embodiment. Fig. 3 is an example in which an image browsing application operates in a state C, a state D and a state E. Fig. 4 is an explanatory diagram showing a further example of a situation before and after splitting into the fixed area F and the outside NF of the fixed area in the first embodiment. Fig. 4 is an example in which a map browsing application operates in a state F, a state G and a state H. In addition, all the images shown in Figs. 2 to 4 are displayed on the display screen of the display unit 5 of the mobile telephone 10.

For example, it is assumed that a touch input manipulation in which the middle finger (first finger) of a user first touches a position (first contact point) of the inside of the display screen one time as shown in the state A of Fig. 2 and the index finger (second finger) subsequently touches a position (second contact point) different from that of the middle finger and drags the display screen in a vertical lower direction by a predetermined distance as shown in the state B of Fig. 2 is performed. In this case, the fixed area determination processing unit 15 determines that a range AR of a predetermined rectangular area including the first contact point touched by the middle finger in the state A is the fixed area F for information displayed on the display screen of the display unit 5, and determines that a display area excluding the fixed area F in the whole display screen and including the second contact point touched by the index finger in the state B is the outside NF of the fixed area. In addition, the size of the range AR of the predetermined rectangular area is preferably predefined in operation of the fixed area determination processing unit 15 or the information storage medium 25, and may be, for example, the size of a part of the range AR of the rectangular area shown in the state B. Further, scrolling on an image of the other part excluding the fixed area in an image displayed on the display screen of the display unit 5 shall be performed when a predetermined distance by which the index finger of the user touching the second contact point drags the display screen exceeds a threshold value predefined in operation of the fixed area determination processing unit 15 or the information storage medium 25. The same applies to each of the following embodiments. Also, the fixed area determination processing unit 15 determines that a scroll direction is a vertical lower direction according to a position of the second contact point of the second finger with respect to the display screen of the display unit 5, a direction and a distance of drag of the index finger (second finger), and outputs information about the scroll direction to the fixed area outside display processing unit 17.

The fixed area display processing unit 16 generates an image with the same size as that of an image within the range AR of the predetermined rectangular area at the time of detecting the first contact point by the touch of the middle finger in the state B or a predetermined expanded or contracted image as the fixed image displayed in the display area of the fixed area F.

The fixed area outside display processing unit 17 generates an image in which an image of the outside NF of the fixed area which is the display area excluding the fixed area F in the whole display screen and including the second contact point touched by the index finger in the state B is scrolled in the vertical lower direction which is the scroll direction determined by the fixed area determination processing unit 15 as the scrolled image displayed in the display area of the outside NF of the fixed area. Accordingly, for a scroll bar 201 shown in the state A, the scroll bar is not displayed in the fixed area F of the state B and only a scroll bar 202 in the outside NF of the fixed area of the state B is displayed.

Also, for example, it is assumed that a touch input manipulation in which the first finger of a user first touches a position (first contact point, and see a cross mark in Fig. 3) of the inside of a display screen one time as shown in the state C of Fig. 3 and the second finger subsequently touches a position (second contact point) different from that of the middle finger and drags the display screen in a horizontal left direction by a predetermined distance is performed. In this case, the fixed area determination processing unit 15 determines that a range AR of a predetermined rectangular area including the first contact point touched by the middle finger in the state C is the fixed area F, and determines that a display area excluding the fixed area F in the whole display screen and including the second contact point touched by the second finger in the state C is the outside NF of the fixed area as shown in the state D. In addition, in explanation of Fig. 3, in order of a flowerbed image (image ID=1), a building image (image ID=2), an animal image (image ID=3), a window image (image ID=4), a night view image (image ID=5) and a stationery image (image ID=6), the images are previously stored in the information storage medium 25 of the mobile telephone 10.

The fixed area display processing unit 16 generates the flowerbed image in which the flowerbed image at the time of detecting the first contact point by the touch of the first finger in the state C is contracted so that the whole flowerbed image can be displayed within the range AR of the rectangular area as the fixed image displayed in the display area of the fixed area F (see the state D). Also, the fixed area display processing unit 16 may generate the fixed image displayed in the display area of the fixed area F by extracting the flowerbed image having with the same size as that of the inside of the range AR of the rectangular area in the flowerbed image at the time of detecting the first contact point by the touch of the first finger in the state C from any place of the flowerbed image.

The fixed area outside display processing unit 17 generates the building image in which the flowerbed image displayed in the outside NF of the fixed area excluding the display area of the fixed area F in the whole display screen and including the second contact point touched by the index finger in the state C is scrolled in the horizontal left direction which is the scroll direction determined by the fixed area determination processing unit 15 as the scrolled image displayed in the display area of the outside NF of the fixed area.

Further, it is assumed that a touch input manipulation in which the touch of the first finger is fixed and maintained and the second finger newly drags the display screen continuously three times in a left direction by a predetermined distance in the state D in which the flowerbed image is displayed as the fixed image and the building image is displayed as the scrolled image is performed. In this case, the fixed area determination processing unit 15 determines that the fixed area F of the display screen is not changed since the touch of the first finger on the first contact point in the state D is fixed and maintained, and determines that a display area excluding the fixed area F in the whole display screen and including the second contact point touched by the second finger in the state D is the outside NF of the fixed area for the image displayed on the display screen of the display unit 5. Also, the fixed area determination processing unit 15 determines that a scroll direction is a horizontal left direction according to a position of the second contact point of the second finger with respect to the display screen of the display unit 5, a direction and a distance of drag of the second finger, and outputs information about the scroll direction to the fixed area outside display processing unit 17.

Since the fixed area determination processing unit 15 determines that the fixed area F is not changed, the fixed area display processing unit 16 does not generate a fixed image newly, and outputs the flowerbed image which is the present fixed image as it is to the display image generating unit 18.

The fixed area outside display processing unit 17 generates the night view in which the building image displayed in the outside NF of the fixed area excluding the fixed area F in the whole display screen and including the second contact point touched by the second finger in the state D is scrolled in the horizontal left direction which is the scroll direction determined by the fixed area determination processing unit 15 and three image data are scrolled according to three drags as the scrolled image displayed in the display area of the outside NF of the fixed area (see the state E of Fig. 3).

The fixed area outside display processing unit 17 may generate half of the window image and half of the night view image, for example, when three drag manipulations correspond to the scroll amount of half of one image as the image scrolled by the amount according to a position of the second contact point of the second finger with respect to the display screen of the display unit 5, a direction and a distance of drag of the index finger (second finger). In this case, a relation between the drag distance and the scroll amount of the image is preferably predefined in operation of the fixed area outside display processing unit 17 or the information storage medium 25.

Also, for example, it is assumed that a touch input manipulation in which the first finger of a user first touches a position (first contact point, and see a cross mark in Fig. 4) of the inside of a display screen one time as shown in the state F of Fig. 4 and the second finger subsequently touches a position (second contact point) different from that of the first finger and drags the display screen in an oblique right lower direction by a predetermined distance is performed. In this case, the fixed area determination processing unit 15 determines that a range AR of a predetermined rectangular area including the first contact point touched by the first finger in the state F is the fixed area F for a map image displayed on the display screen of the display unit 5, and determines that a display area excluding the display area of the fixed area F in the whole display screen and including the second contact point touched by the second finger in the state F is the outside NF of the fixed area as shown in the state G. Also, the fixed area determination processing unit 15 determines that a scroll direction is an oblique right lower direction according to a position of the second contact point of the second finger with respect to the display screen of the display unit 5, a direction and a distance of drag of the second finger, and outputs information about the scroll direction to the fixed area outside display processing unit 17.

The fixed area display processing unit 16 generates the map image corresponding to the size of the inside of the range AR of the rectangular area by extracting the map image at the time of detecting the first contact point by the touch of the first finger in the state F as the fixed image displayed in the display area of the fixed area F.

The fixed area outside display processing unit 17 generates the map image in which the map image displayed in the outside NF of the fixed area excluding the fixed area F in the whole display screen and including the second contact point touched by the second finger in the state F is scrolled in the oblique right lower direction which is the scroll direction determined by the fixed area determination processing unit 15 as the scrolled image displayed in the display area of the outside NF of the fixed area.

Further, it is assumed that a touch input manipulation in which the touch of the middle finger is fixed and maintained and the index finger newly drags the display screen continuously in an oblique right lower direction by a predetermined distance in the state G in which the map image surrounded by the range AR of the predetermined rectangular area is displayed as the fixed image and the map image obtained by scrolling an image displayed in the outside NF of the fixed area in the state F in the oblique right lower direction is displayed as the scrolled image is performed. In this case, the fixed area determination processing unit 15 determines that the fixed area F of the display screen is not changed since the touch of the first finger on the first contact point in the state G is fixed and maintained, and determines that a display area excluding the fixed area F in the whole display screen and including the second contact point touched by the second finger in the state G is the outside NF of the fixed area. Also, the fixed area determination processing unit 15 determines that a scroll direction is a horizontal left direction according to a position of the second contact point of the second finger with respect to the display screen of the display unit 5, a direction and a distance of drag of the second finger, and outputs information about the scroll direction to the fixed area outside display processing unit 17.

Since the fixed area determination processing unit 15 determines that the fixed area F is not changed, the fixed area display processing unit 16 does not generate a fixed image newly, and outputs the map image which is the present fixed image as it is to the display image generating unit 18.

The fixed area outside display processing unit 17 generates the map image in which the map image displayed in the outside NF of the fixed area excluding the fixed area F in the whole display screen and including the second contact point touched by the second finger in the state G is scrolled in the oblique right lower direction which is the scroll direction determined by the fixed area determination processing unit 15 as the scrolled image displayed in the display area of the outside NF of the fixed area (see the state H of Fig. 4).

3. EXPLANATION ABOUT OPERATION OF MOBILE TELEPHONE 10 OF FIRST EMBODIMENT

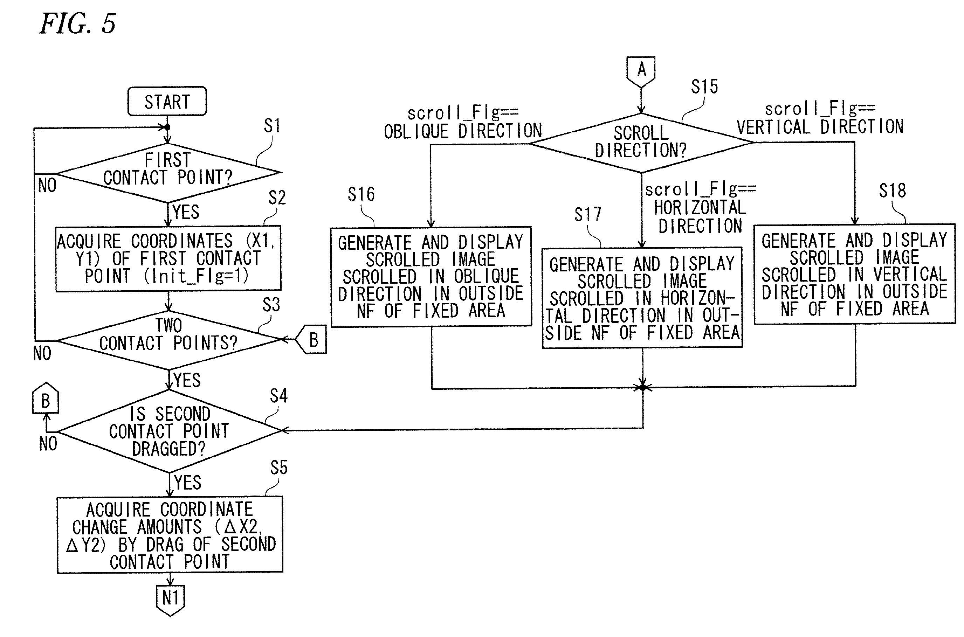

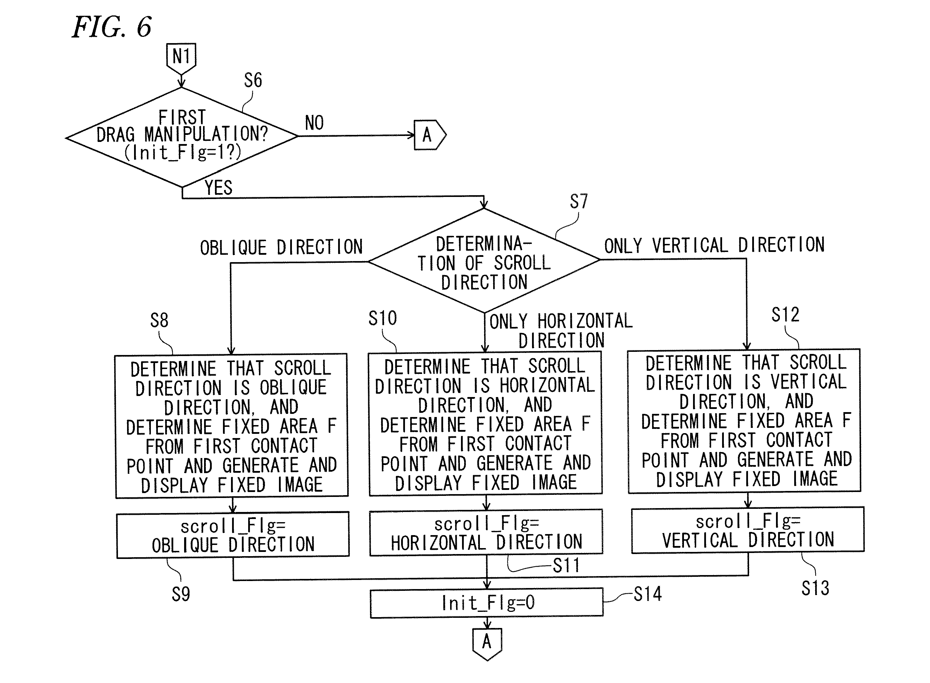

Figs. 5 and 6 are flowcharts showing operation of the mobile telephone 10 of the first embodiment, respectively. Also, in the following explanation, any image shall be previously displayed on the display screen of the display unit 5 of the mobile telephone 10.

In Fig. 5, the manipulation content determination processing unit 12 determines whether or not to perform a touch input manipulation in which a first finger of a user touches the display screen of the display unit 5 (S1). In the case of determining that the touch input manipulation in step S1 is performed, the manipulation content determination processing unit 12 acquires information about coordinates (X1, Y1) of a first contact point touched by the first finger based on the touch input manipulation, and writes the information about coordinates of the first contact point and information to the effect that "initial flag (Init_Flg) = 1" into the information storage medium 25 (S2).

In addition, a state in which the initial flag is "1" refers to a state in which only the first finger touches the display screen of the display unit 5. A state in which the initial flag is "0" refers to a state in which the finger of the user does not touch the display screen of the display unit 5 at all, or a state in which the first finger touches the display screen and a second finger already touches and drags the display screen. In addition, the explanation about this initial flag applies to each of the following embodiments similarly.

The manipulation content determination processing unit 12 determines whether or not to perform a touch input manipulation in which a second finger touches the display screen of the display unit 5 subsequently to the touch of the first finger determined in step S1 (S3). In the case of determining that the touch input manipulation in step S3 is performed, the manipulation content determination processing unit 12 determines whether or not to perform a touch input manipulation in which the second finger touches the display screen of the display unit 5 and then drags the display screen in a predetermined direction by a predetermined distance (S4). In addition, this predetermined direction includes any of a horizontal left direction, a horizontal right direction, a vertical upper direction, a vertical lower direction and an oblique direction, and the same applies to the following explanation.

In the case of determining that the touch input manipulation in step S4 is performed, the manipulation content determination processing unit 12 acquires information about coordinate change amounts ($\Delta$X2, $\Delta$Y2) of a second contact point dragged based on the touch input manipulation, and writes the information about the coordinate change amounts into the information storage medium 25 (S5). In addition, the manipulation content determination processing unit 12 acquires the information about the coordinate change amounts ($\Delta$X2, $\Delta$Y2) of the second contact point based on coordinates (X2s, Y2s) before drag of the second contact point and coordinates (X2e, Y2e) after drag of the second contact point at the time when the second finger touches the display screen of the display unit 5.

After the information about the coordinate change amounts ($\Delta$X2, $\Delta$Y2) of the second contact point is acquired in step S5, the manipulation content determination processing unit 12 determines whether or not drag of the second finger is the first drag, that is, the initial flag is "1" in Fig. 6 (S6). In the case of determining that the drag of the second finger is the first drag, the fixed area determination processing unit 15 determines a scroll direction with respect to an image displayed in the outside NF of the fixed area excluding the predetermined fixed area F including the first contact point from the whole display screen of the display unit 5 and including the second contact point according to coordinates of the second contact point by the second finger with respect to the display screen of the display unit 5, a direction and a distance of drag from the second contact point (S7).

In addition, the fixed area determination processing unit 15 preferably determines the scroll direction of the image of the outside NF of the fixed area including the second contact point based on coordinates of the second contact point on the display screen of the display unit 5 and the coordinate change amounts ($\Delta$X2, $\Delta$Y2) of the second contact point acquired in step S5. For example, when $\Delta$X2 of the coordinate change amounts ($\Delta$X2, $\Delta$Y2) of the second contact point is substantially zero, the fixed area determination processing unit 15 determines that the scroll direction is only a vertical direction. Also, when $\Delta$Y2 of the coordinate change amounts ($\Delta$X2, $\Delta$Y2) of the second contact point is substantially zero, the fixed area determination processing unit 15 determines that the scroll direction is only a horizontal direction. Also, when both $\Delta$X2 and $\Delta$Y2 of the coordinate change amounts ($\Delta$X2, $\Delta$Y2) of the second contact point are not substantially zero, the fixed area determination processing unit 15 determines that the scroll direction is an oblique direction.

In the case of determining that the scroll direction in step S7 is the oblique direction, the fixed area determination processing unit 15 determines that scrolling is performed in the oblique direction with respect to the image of the outside NF of the fixed area including the second contact point according to the drag of the second finger, and also determines that a predetermined rectangular area including the first contact point is the fixed area F (S8). Simultaneously, the fixed area determination processing unit 15 determines that a display area excluding the fixed area F from the whole display screen of the display unit 5 and including the second contact point is the outside NF of the fixed area (S8).

Further, the fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S8). The fixed area determination processing unit 15 writes information to the effect that "scroll flag (Scroll-Flg) = oblique direction" into the information storage medium 25 (S9).

In the case of determining that the scroll direction in step S7 is only the horizontal direction, the fixed area determination processing unit 15 determines that scrolling is performed in the horizontal direction with respect to the image of the outside NF of the fixed area including the second contact point according to the drag of the second finger, and also determines that a predetermined rectangular area including the first contact point is the fixed area F (S10). Simultaneously, the fixed area determination processing unit 15 determines that a display area excluding the fixed area F from the whole display screen of the display unit 5 and including the second contact point is the outside NF of the fixed area (S10).

Further, the fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S 10). The fixed area determination processing unit 15 writes information to the effect that "scroll flag (Scroll_Flg) = horizontal direction" into the information storage medium 25 (S11).

In the case of determining that the scroll direction in step S7 is only the vertical direction, the fixed area determination processing unit 15 determines that scrolling is performed in the vertical direction with respect to the image of the outside NF of the fixed area including the second contact point according to the drag of the second finger, and also determines that a predetermined rectangular area including the first contact point is the fixed area F (S12). Simultaneously, the fixed area determination processing unit 15 determines that a display area excluding the fixed area F from the whole display screen of the display unit 5 and including the second contact point is the outside NF of the fixed area (S12).

Further, the fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S12). The fixed area determination processing unit 15 writes information to the effect that "scroll flag (Scroll_Flg) = vertical direction" into the information storage medium 25 (S13).

After the scroll flag is written into the information storage medium 25 in step S9, step S11 or step S13, the manipulation content determination processing unit 12 updates information about the initial flag by writing information to the effect that "initial flag = 0" into the information storage medium 25 (S14).

After information about the initial flag is updated in step S14, according to the scroll flag stored in the information storage medium 25 (S15), the fixed area outside display processing unit 17 generates and displays a scrolled image in which an image displayed in the outside NF of the fixed area just before the drag of the second finger is scrolled in the scroll direction determined by the fixed area determination processing unit 15 in Fig. 5 (S16 to S18).

Concretely, when the scroll flag indicates the oblique direction, the fixed area outside display processing unit 17 generates the scrolled image in which the image displayed in the outside NF of the fixed area just before the drag of the second finger is scrolled in the oblique direction, and outputs the generated scrolled image to the display image generating unit 18. The display image generating unit 18 outputs the scrolled image to the display control unit 19, and the display control unit 19 displays the scrolled image on the display screen of the display unit 5 (S16).

Also, when the scroll flag indicates the horizontal direction, the fixed area outside display processing unit 17 generates the scrolled image in which the image displayed in the outside NF of the fixed area just before the drag of the second finger is scrolled in the horizontal direction, and outputs the generated scrolled image to the display image generating unit 18. The display image generating unit 18 outputs the scrolled image to the display control unit 19, and the display control unit 19 displays the scrolled image on the display screen of the display unit 5 (S 17).

Also, when the scroll flag indicates the vertical direction, the fixed area outside display processing unit 17 generates the scrolled image in which the image displayed in the outside NF of the fixed area just before the drag of the second finger is scrolled in the vertical direction, and outputs the generated scrolled image to the display image generating unit 18. The display image generating unit 18 outputs the scrolled image to the display control unit 19, and the display control unit 19 displays the scrolled image on the display screen of the display unit 5 (S 18).

In addition, the operations of steps S5 to S18 described above are repeated when the second finger touches the outside of the fixed area and newly drags the outside of the fixed area in a predetermined direction by a predetermined distance in a state in which the first finger of the user touches the fixed area.

As described above, the mobile telephone 10 of the first embodiment determines that a predetermined rectangular area including the first contact point at which the first finger touches an image displayed on the display screen of the display unit 5 is the fixed area F in the whole image, and determines that a display area excluding the fixed area F in the whole image and including the second contact point at which the second finger touches the image is the outside NF of the fixed area.

Also, the mobile telephone 10 generates a fixed image with the predetermined rectangular area determined as the fixed area F, and generates a scrolled image in which an image displayed in the display area determined as the outside NF of the fixed area is scrolled in the scroll direction determined according to coordinates of the second contact point with respect to the display screen of the display unit 5, a direction and a distance of drag of the second finger. The mobile telephone 10 displays a combined image obtained by combining the generated fixed image with the scrolled image on the display screen of the display unit 5.

Consequently, according to the mobile telephone 10 of the first embodiment, a part of the area in the contents displayed on the display screen can be fixed and also the other area of the outside of a target of fixing in the display screen can be scrolled according to an intuitive and simple manipulation. As a result, a user can manipulate the scroll direction with respect to the image displayed in the outside NF of the fixed area or a fixed place or a display split place of the image displayed on the display screen of the display unit 5 by the intuitive and simple manipulation of touch and drag of the fingers, and can easily implement selection of the fixed area F and scrolling of the outside NF of the fixed area by only the manipulation of at least two fingers.

(SECOND EMBODIMENT)

4. CONFIGURATION OF MOBILE TELEPHONE 10A OF SECOND EMBODIMENT

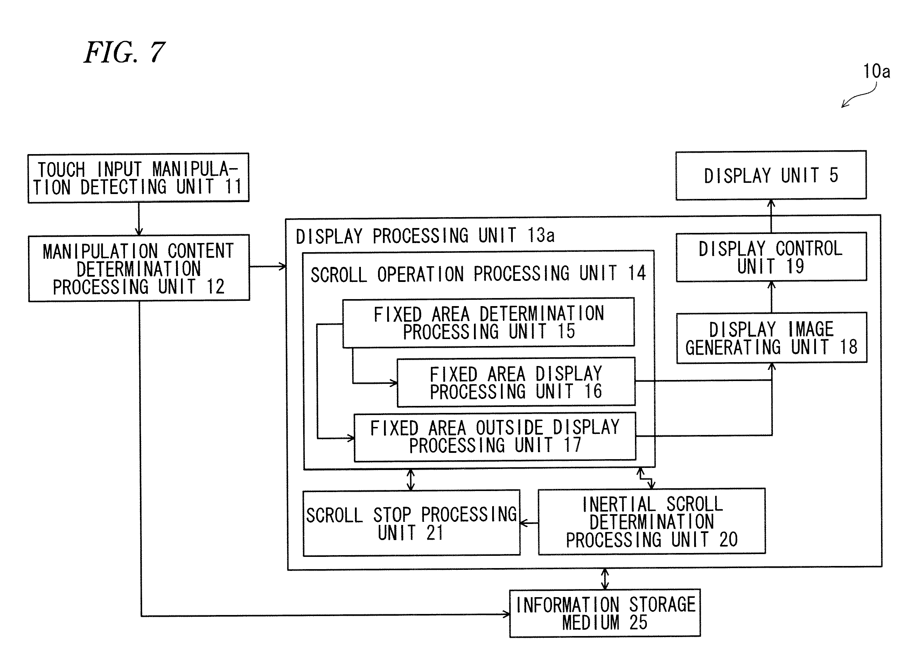

Fig. 7 is a block diagram showing an internal configuration of the mobile telephone 10a which is one example of an electronic apparatus of the invention. As shown in Fig. 7, the mobile telephone 10a includes a display processing unit 13a further including a scroll stop processing unit 21 and an inertial scroll determination processing unit 20 in the display processing unit 13 of the mobile telephone 10 of the first embodiment. Since the other configuration excluding the scroll stop processing unit 21 and the inertial scroll determination processing unit 20 is the same as that of the mobile telephone 10 of the first embodiment, explanation about the same contents is omitted.

The definition of an inertial scroll in each of the following embodiments will be described. When a user directly drags a document displayed on a display screen of a display unit 5 and changes a display range in the display screen, scrolling exceeding the size of the display screen cannot be performed at once. Because of this, in the case of widely scrolling a large document, the user must repeat drag to the document on the display screen many times.

Hence, a direct scroll manipulation by a finger, a stylus pen, etc. has become practical by a flick manipulation in which a document on a display screen is flicked and slid with the finger as paper is flicked and slid on a smooth desk. A scroll for continuously changing a range of the display screen by defining a scroll speed according to a speed of flicking the display screen while being continuously scrolled in a direction in which the display screen is flicked by the flick manipulation in which the display screen is quickly flicked by the finger, the stylus pen, etc. touching the display screen equipped with a touch panel is defined as an "inertial scroll". In addition, the inertial scroll includes the case of gradually changing (for example, decreasing or increasing) the scroll speed of the display screen with a lapse of scroll time in addition to the case where the scroll speed is constant when the scroll speed is defined according to the speed of flicking the display screen.

The inertial scroll determination processing unit 20 determines whether or not an inertial scroll is executed with respect to an image displayed on the display screen of the display unit 5, or determines whether or not execution of the inertial scroll is instructed when a second finger touches a second contact point and drags the second contact point in a predetermined direction by a predetermined distance in a state in which a first finger touches a first contact point. In addition, the case of instructing execution of the inertial scroll refers to the case where the inertial scroll determination processing unit 20 acquires information to the effect that a touch input manipulation of a flick manipulation for executing the inertial scroll described above is performed from a manipulation content determination processing unit 12.

In the case of determining that execution of the inertial scroll with respect to the image displayed on the display screen of the display unit 5 is instructed, the inertial scroll determination processing unit 20 writes information to the effect that "inertial scroll flag (Inertia_Flg) = 1" into an information storage medium 25. In addition, a state in which the inertial scroll flag is "1" refers to a state in which the image displayed on the display screen of the display unit 5 is scrolled inertially. A state in which the inertial scroll flag is "0" refers to a state in which the image displayed on the display screen of the display unit 5 is not scrolled inertially. Consequently, the inertial scroll determination processing unit 20 determines whether or not the inertial scroll is executed according to the inertial scroll flag stored in the information storage medium 25.

When the inertial scroll flag is "1", the inertial scroll determination processing unit 20 acquires coordinate change amounts ($\Delta X2$, $\Delta Y2$) at the time when a second finger touching a second contact point drags the second contact point in a predetermined direction by a predetermined distance, and drag time ($\Delta T2$) from the manipulation content determination processing unit 12. Further, the inertial scroll determination processing unit 20 calculates an inertial scroll speed S1 based on the acquired coordinate change amounts ($\Delta X2$, $\Delta Y2$) and the drag time ($\Delta T2$). For example, the inertial scroll speed S1 can be calculated by the inertial scroll speed $S1 = \sqrt{((\Delta X2)^2 + (\Delta Y2)^2)} / \Delta T2$. The inertial scroll determination processing unit 20 outputs information about the calculated inertial scroll speed S1 to a fixed area outside display processing unit 17. In addition, the inertial scroll determination processing unit 20 may determine whether or not a normal scroll rather than the inertial scroll is executed based on a drag manipulation of the second finger. In the case of determining that the normal scroll is not executed, the inertial scroll determination processing unit 20 preferably stores information to the effect that "scroll flag = 0" indicating that the normal scroll is not executed in the information storage medium 25.

When the inertial scroll determination processing unit 20 determines that the inertial scroll is already executed, the scroll stop processing unit 21 stops execution of the inertial scroll when the first finger and the second finger respectively touch the display screen of the display unit 5. Also, the scroll stop processing unit 21 determines whether the touch finger is the first finger or the second finger when the finger of the user touches the display screen of the display unit 5 in the case where a scrolled image displayed in the outside NF of the fixed area of the display screen of the display unit 5 is not scrolled inertially or scrolled normally.

In the case of determining that the first finger touches the display unit 5 when the scrolled image displayed in the outside NF of the fixed area of the display screen of the display unit 5 is not scrolled inertially or scrolled normally, the scroll stop processing unit 21 releases a display split state of a fixed image and the scrolled image and displays the fixed image touched by the first finger on the whole of the display unit 5. Also, in the case of determining that only the second finger touches the display unit 5 when the scrolled image displayed in the outside NF of the fixed area of the display screen of the display unit 5 is not scrolled inertially or scrolled normally, the scroll stop processing unit 21 releases the display split state of the fixed image and the scrolled image and displays the scrolled image touched by the second finger on the whole of the display unit 5.

In addition, in the case of determining that the finger of the user does not touch the display unit 5 at all when the scrolled image displayed on the display screen of the display unit 5 is not scrolled inertially or scrolled normally, the scroll stop processing unit 21 displays the fixed image or the scrolled image on the display unit 5. In this case, a state of displaying the fixed image or the scrolled image on the display unit 5 is preferably predefined in operation of the scroll stop processing unit 21.

5. OPERATION EXAMPLE OF INERTIAL SCROLL DETERMINATION PROCESSING UNIT 20 AND SCROLL STOP PROCESSING UNIT 21

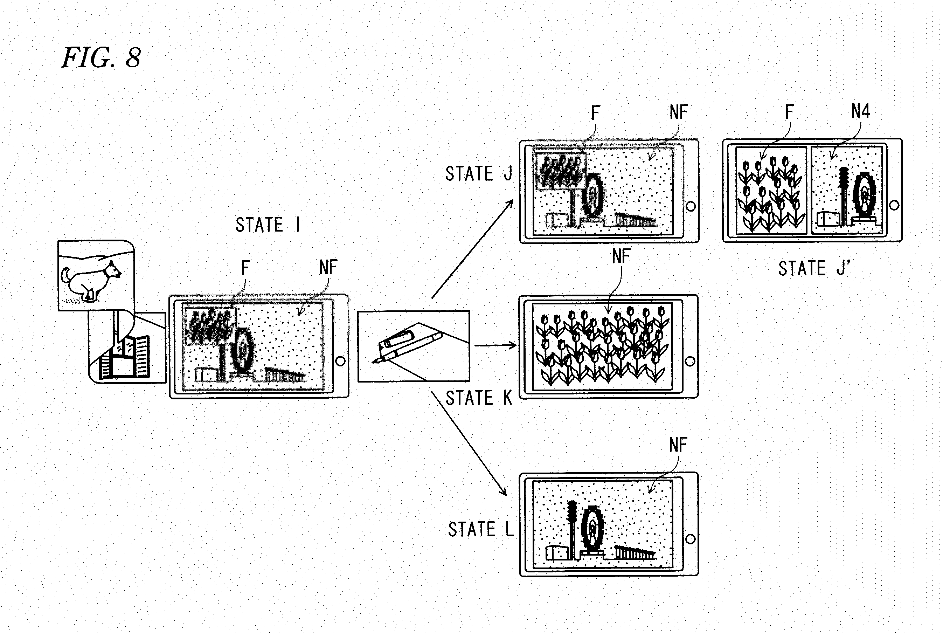

Next, an operation example of the inertial scroll determination processing unit 20 and the scroll stop processing unit 21 will be described with reference to Fig. 8.

Fig. 8 is an explanatory diagram showing one example of a situation before and after display splitting into the fixed area F and the outside NF of the fixed area in the second embodiment. In Fig. 8, an image browsing application operates in a state I, a state J, a state K and a state L. Also, a state J' will be described below. In addition, each image shown in Fig. 8 is displayed on the display screen of the display unit 5 of the mobile telephone 10a. In addition, in explanation of the state I of Fig. 8, in order of a flowerbed image (image ID=1), a building image (image ID=2), an animal image (image ID=3), a window image (image ID=4), a night view image (image ID=5) and a stationery image (image ID=6), the images are previously stored in the information storage medium 25 of the mobile telephone 10.

For example, it is assumed that the inertial scroll determination processing unit 20 determines that an inertial scroll is executed in a horizontal left direction based on the flick manipulation described above in the state I of Fig. 8. In this case, the inertial scroll determination processing unit 20 writes information to the effect that "inertial scroll flag = 1" into the information storage medium 25. Hence, the state I of Fig. 8 is a state in which the flowerbed image is displayed as the fixed image corresponding to the fixed area F and the night view image is displayed in the outside NF of the fixed area as the scrolled image of the moment to execute the inertial scroll in the horizontal left direction.

When a second finger of a user touches any position of the outside NF of the fixed area in which the scrolled image is displayed inside the display screen of the display unit 5 in such a state I, the scroll stop processing unit 21 stops execution of the inertial scroll in the horizontal left direction executed to the outside NF of the fixed area (see the state J). The scroll stop processing unit 21 instructs the fixed area outside display processing unit 17 to display the night view image displayed as the scrolled image of the moment to stop execution of the inertial scroll in the horizontal left direction in the outside NF of the fixed area.

In addition, the fixed area outside display processing unit 17 generates a scrolled image displayed in a display area of the outside NF of the fixed area based on the instructions outputted by the scroll stop processing unit 21. The fixed area outside display processing unit 17 outputs the generated scrolled image to a display image generating unit 18. The display image generating unit 18 outputs the outputted scrolled image to a display control unit 19. The display control unit 19 displays the outputted scrolled image on the display screen of the display unit 5.

Moreover, for example, it is assumed that the inertial scroll determination processing unit 20 determines that a normal scroll or an inertial scroll is not executed in the outside NF of the fixed area of the display screen of the display unit 5 or the execution is stopped in the state I of Fig. 8. In this case, a first finger touches the fixed area F including a first contact point, and a second finger touches the outside NF of the fixed area including a second contact point. Further, the inertial scroll determination processing unit 20 writes information to the effect that "inertial scroll flag = 0" into the information storage medium 25. Hence, the state I of Fig. 8 is a state in which the flowerbed image is displayed as the fixed image corresponding to the fixed area F and the night view image is displayed as the scrolled image corresponding to the outside NF of the fixed area.

When the second finger releases the touch on the outside NF of the fixed area in such a state I, the scroll stop processing unit 21 instructs the fixed area outside display processing unit 17 to release display splitting into the fixed area F and the outside NF of the fixed area with respect to the display screen of the display unit 5 and also display the flowerbed image which is the fixed image of the fixed area F touched by the other first finger touching the display unit 5 on the whole of the display unit 5 (see the state K).

In addition, the fixed area outside display processing unit 17 generates the flowerbed image which is the fixed image displayed in the fixed area F based on the instructions outputted by the scroll stop processing unit 21 as a scrolled image. The fixed area outside display processing unit 17 outputs the generated scrolled image to the display image generating unit 18. The display image generating unit 18 outputs the outputted scrolled image to the display control unit 19. The display control unit 19 displays the outputted scrolled image on the display screen of the display unit 5.

Moreover, for example, it is assumed that the inertial scroll determination processing unit 20 determines that a normal scroll or an inertial scroll is not executed in the outside NF of the fixed area of the display screen of the display unit 5 or the execution is stopped in the state I of Fig. 8. In this case, the first finger touches the fixed area F including the first contact point, and the second finger touches the outside NF of the fixed area including the second contact point. Further, the inertial scroll determination processing unit 20 writes information to the effect that "inertial scroll flag = 0" into the information storage medium 25. Hence, the state I of Fig. 8 is a state in which the flowerbed image is displayed as the fixed image corresponding to the fixed area F and the night view image is displayed as the scrolled image corresponding to the outside NF of the fixed area.

When the first finger releases the touch on the fixed area F in such a state I, the scroll stop processing unit 21 instructs the fixed area outside display processing unit 17 to release display splitting into the fixed area F and the outside NF of the fixed area with respect to the display screen of the display unit 5 and also display the night view image which is the scrolled image of the outside NF of the fixed area touched by the other second finger touching the display unit 5 on the whole of the display unit 5 (see the state L).

In addition, the fixed area outside display processing unit 17 generates the night view image which is the scrolled image displayed in the outside NF of the fixed area based on the instructions outputted by the scroll stop processing unit 21. The fixed area outside display processing unit 17 outputs the generated scrolled image to the display image generating unit 18. The display image generating unit 18 outputs the outputted scrolled image to the display control unit 19. The display control unit 19 displays the outputted scrolled image on the display screen ofthe display unit 5.

6. EXPLANATION ABOUT OPERATION OF MOBILE TELEPHONE 10A OF SECOND EMBODIMENT

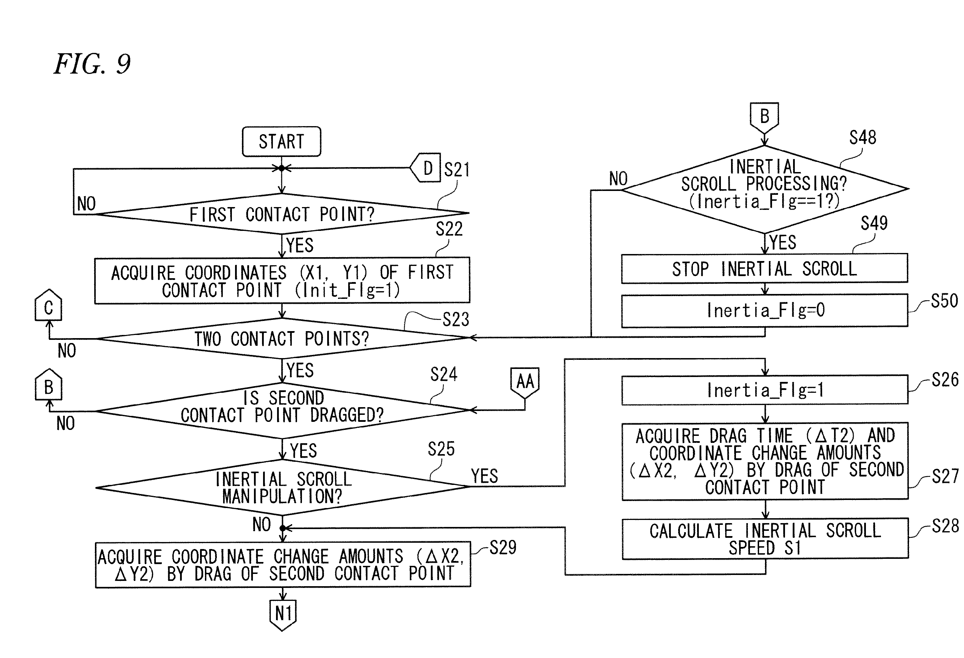

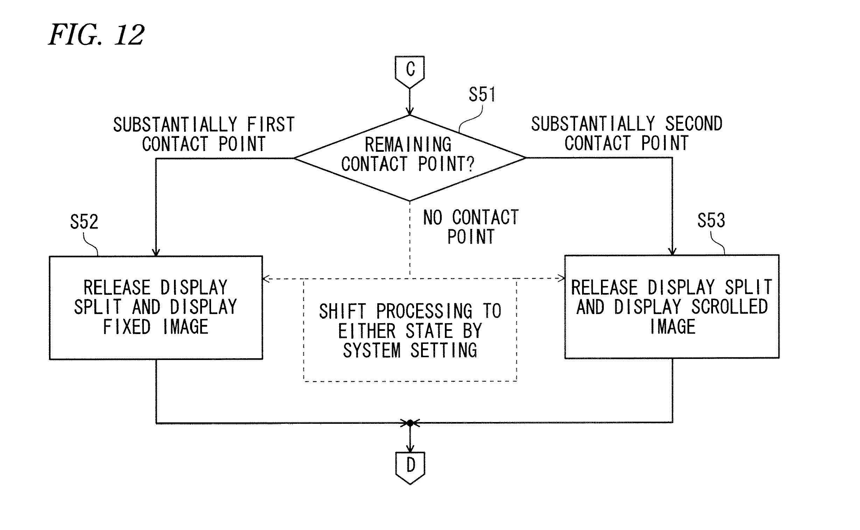

Figs. 9 to 12 are flowcharts showing operation of the mobile telephone 10a of the second embodiment, respectively. Also, in the following explanation, any image shall be previously displayed on the display screen of the display unit 5 of the mobile telephone 10a.

In Fig. 9, the manipulation content determination processing unit 12 determines whether or not to perform a touch input manipulation in which a first finger of a user touches the display screen of the display unit 5 (S21). In the case of determining that the touch input manipulation in step S21 is performed, the manipulation content determination processing unit 12 acquires information about coordinates (X1, Y1) of a first contact point touched by the first finger based on the touch input manipulation, and writes the information about coordinates of the first contact point and information to the effect that "initial flag (Init_Flg) = 1" into the information storage medium 25 (S22).

The manipulation content determination processing unit 12 determines whether or not to perform a touch input manipulation in which a second finger touches the display screen of the display unit 5 subsequently to the touch of the first finger determined in step S21 (S23). In the case of determining that the touch input manipulation in step S23 is performed, the manipulation content determination processing unit 12 determines whether or not to perform a touch input manipulation in which the second finger touches the display screen of the display unit 5 and then drags the display screen in a predetermined direction by a predetermined distance (S24).

In the case of determining that the touch input manipulation in step S24 is performed, the inertial scroll determination processing unit 20 determines whether or not the touch input manipulation is a manipulation for instructing execution of an inertial scroll (S25).

In the case of determining that the touch input manipulation in step S25 is the manipulation for instructing execution of the inertial scroll, the inertial scroll determination processing unit 20 writes information to the effect that "inertial scroll flag (Inertia_Flg) = 1" into the information storage medium 25 (S26). At this time, the inertial scroll determination processing unit 20 acquires coordinate change amounts $(\Delta X2, \Delta Y2)$ at the time when the second finger drags the display screen by a predetermined distance from the second contact point, and drag time $(\Delta T2)$ from the manipulation content determination processing unit 12 (S27). Further, the inertial scroll determination processing unit 20 calculates the inertial scroll speed S1 based on the acquired coordinate change amounts $(\Delta X2, \Delta Y2)$ and the drag time $(\Delta T2)$ as described above (S28).

In the case of determining that the touch input manipulation in step S24 is not the manipulation for instructing execution of the inertial scroll, the manipulation content determination processing unit 12 acquires information about coordinate change amounts $(\Delta X2, \Delta Y2)$ of the second contact point dragged based on the touch input manipulation in step S24, and writes the information about the coordinate change amounts into the information storage medium 25 (S29).

In addition, the manipulation content determination processing unit 12 acquires the information about the coordinate change amounts $(\Delta X2, \Delta Y2)$ of the second contact point by acquiring the information about the coordinate change amounts $(\Delta X2, \Delta Y2)$ of the second contact point based on coordinates (X2s, Y2s) before drag of the second contact point and coordinates (X2e, Y2e) after drag of the second contact point at the time when the second finger touches the display screen of the display unit 5.

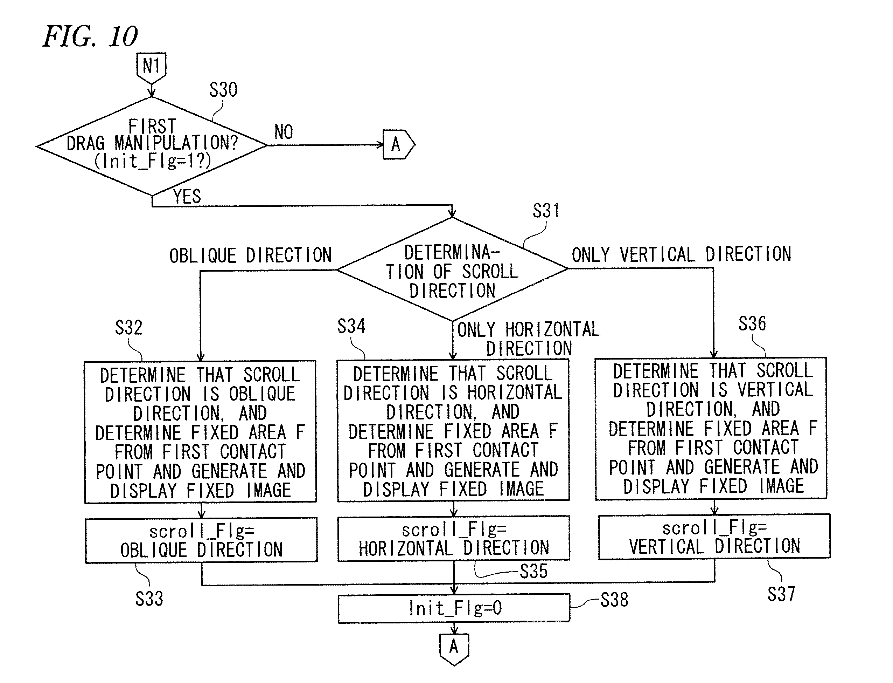

After the information about the coordinate change amounts $(\Delta X2, \Delta Y2)$ of the second contact point is acquired in step S29, the manipulation content determination processing unit 12 determines whether or not drag of the second finger is the first drag, that is, the initial flag is "1" in Fig. 10 (S30). In the case of determining that the drag of the second finger is the first drag, a fixed area determination processing unit 15 determines a scroll direction with respect to an image displayed in the outside NF of the fixed area excluding the predetermined fixed area F including the first contact point from the whole display screen of the display unit 5 and including the second contact point according to coordinates of the second contact point by the second finger with respect to the display screen of the display unit 5, a direction and a distance of drag from the second contact point (S31).

In addition, the fixed area determination processing unit 15 preferably determines the scroll direction of the image of the outside NF of the fixed area including the second contact point based on coordinates of the second contact point on the display screen of the display unit 5 and the coordinate change amounts ($\Delta$X2, $\Delta$Y2) of the second contact point acquired in step S29. For example, when $\Delta$X2 of the coordinate change amounts ($\Delta$X2, $\Delta$Y2) of the second contact point is substantially zero, the fixed area determination processing unit 15 determines that the scroll direction is only a vertical direction. Also, when $\Delta$Y2 of the coordinate change amounts ($\Delta$X2, $\Delta$Y2) of the second contact point is substantially zero, the fixed area determination processing unit 15 determines that the scroll direction is only a horizontal direction. Also, when both $\Delta$X2 and $\Delta$Y2 of the coordinate change amounts ($\Delta$X2, $\Delta$Y2) of the second contact point are not substantially zero, the fixed area determination processing unit 15 determines that the scroll direction is an oblique direction.

In the case of determining that the scroll direction in step S31 is the oblique direction, the fixed area determination processing unit 15 determines that scrolling is performed in the oblique direction with respect to the image of the outside NF of the fixed area including the second contact point according to the drag of the second finger, and also determines that a predetermined rectangular area including the first contact point is the fixed area F (S32). Simultaneously, the fixed area determination processing unit 15 determines that a display area excluding the fixed area F from the whole display screen of the display unit 5 and including the second contact point is the outside NF of the fixed area (S32).

Further, a fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S32). The fixed area determination processing unit 15 writes information to the effect that "scroll flag (Scroll_Flg) = oblique direction" into the information storage medium 25 (S33).

In the case of determining that the scroll direction in step S31 is only the horizontal direction, the fixed area determination processing unit 15 determines that scrolling is performed in the horizontal direction with respect to the image of the outside NF of the fixed area including the second contact point according to the drag of the second finger, and also determines that a predetermined rectangular area including the first contact point is the fixed area F (S34). Simultaneously, the fixed area determination processing unit 15 determines that a display area excluding the fixed area F from the whole display screen of the display unit 5 and including the second contact point is the outside NF of the fixed area (S34).

Further, the fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S34). The fixed area determination processing unit 15 writes information to the effect that "scroll flag (Scroll_Flg) = horizontal direction" into the information storage medium 25 (S35).

In the case of determining that the scroll direction in step S31 is only the vertical direction, the fixed area determination processing unit 15 determines that scrolling is performed in the vertical direction with respect to the image of the outside NF of the fixed area including the second contact point according to the drag of the second finger, and also determines that a predetermined rectangular area including the first contact point is the fixed area F (S36). Simultaneously, the fixed area determination processing unit 15 determines that a display area excluding the fixed area F from the whole display screen of the display unit 5 and including the second contact point is the outside NF of the fixed area (S36).

Further, the fixed area display processing unit 16 generates a fixed image displayed in the fixed area determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S36). The fixed area determination processing unit 15 writes information to the effect that "scroll flag (Scroll_Flg) = vertical direction" into the information storage medium 25 (S37).

After the scroll flag is written into the information storage medium 25 in step S33, step S35 or step S37, the manipulation content determination processing unit 12 updates information about the initial flag by writing information to the effect that "initial flag = 0" into the information storage medium 25 (S38).

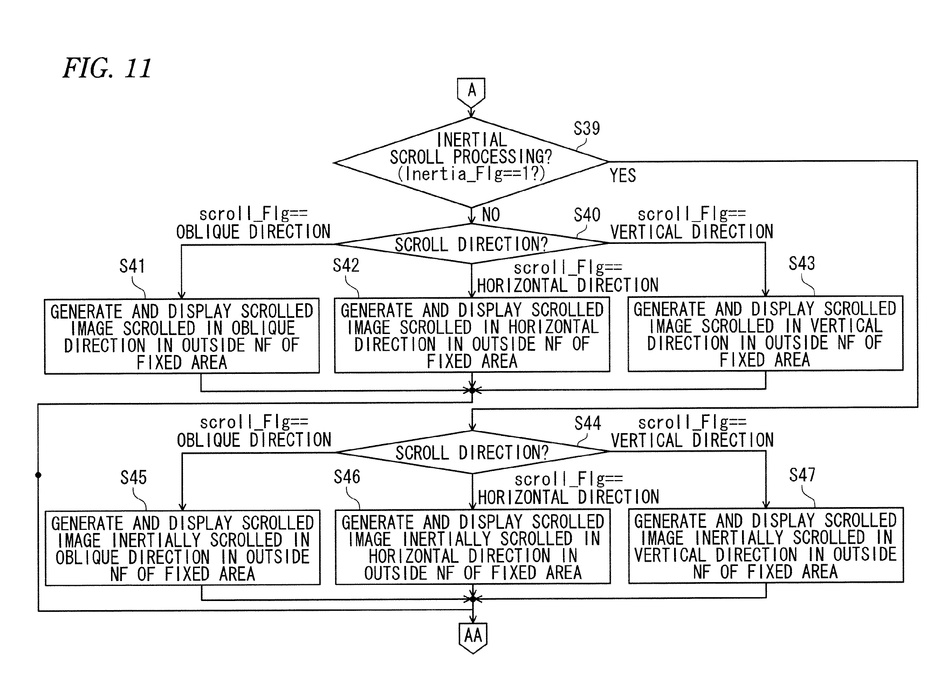

After information about the initial flag is updated in step S38, the inertial scroll determination processing unit 20 determines whether or not a scrolled image of the outside NF of the fixed area displayed on the display screen of the display unit 5 is scrolled inertially in Fig. 11 (S39).

In the case of determining that the scrolled image of the outside NF of the fixed area displayed on the display screen of the display unit 5 is not scrolled inertially, according to the scroll flag stored in the information storage medium 25 (S40), the fixed area outside display processing unit 17 generates and displays a scrolled image in which an image displayed in the outside NF of the fixed area just before the drag of the second finger is scrolled in the scroll direction determined by the fixed area determination processing unit 15 (S41 to S43).

Concretely, when the scroll flag indicates the oblique direction, the fixed area outside display processing unit 17 generates the scrolled image in which the image displayed in the outside NF of the fixed area just before the drag of the second finger is scrolled in the oblique direction, and outputs the generated scrolled image to the display image generating unit 18. The display image generating unit 18 outputs the scrolled image to the display control unit 19, and the display control unit 19 displays the scrolled image on the display screen of the display unit 5 (S41).

Also, when the scroll flag indicates the horizontal direction, the fixed area outside display processing unit 17 generates the scrolled image in which the image displayed in the outside NF of the fixed area just before the drag of the second finger is scrolled in the horizontal direction, and outputs the generated scrolled image to the display image generating unit 18. The display image generating unit 18 outputs the scrolled image to the display control unit 19, and the display control unit 19 displays the scrolled image on the display screen of the display unit 5 (S42).

Also, when the scroll flag indicates the vertical direction, the fixed area outside display processing unit 17 generates the scrolled image in which the image displayed in the outside NF of the fixed area just before the drag of the second finger is scrolled in the vertical direction, and outputs the generated scrolled image to the display image generating unit 18. The display image generating unit 18 outputs the scrolled image to the display control unit 19, and the display control unit 19 displays the scrolled image on the display screen of the display unit 5 (S43).

In the case of determining that the scrolled image of the outside NF of the fixed area displayed on the display screen of the display unit 5 is scrolled inertially, according to the scroll flag stored in the information storage medium 25 (S44), the fixed area outside display processing unit 17 generates and displays a scrolled image in which an image displayed in the outside NF of the fixed area just before the drag of the second finger is scrolled inertially at the inertial scroll speed S1 in the scroll direction determined by the fixed area determination processing unit 15 (S45 to S47).

Concretely, when the scroll flag indicates the oblique direction, the fixed area outside display processing unit 17 generates the scrolled image in which the image displayed in the outside NF of the fixed area just before the drag of the second finger is scrolled inertially at the inertial scroll speed S1 in the oblique direction, and outputs the generated scrolled image to the display image generating unit 18. The display image generating unit 18 outputs the scrolled image to the display control unit 19, and the display control unit 19 displays the scrolled image on the display screen of the display unit 5 (S45).

Also, when the scroll flag indicates the horizontal direction, the fixed area outside display processing unit 17 generates the scrolled image in which the image displayed in the outside NF of the fixed area just before the drag of the second finger is scrolled inertially at the inertial scroll speed S1 in the horizontal direction, and outputs the generated scrolled image to the display image generating unit 18. The display image generating unit 18 outputs the scrolled image to the display control unit 19, and the display control unit 19 displays the scrolled image on the display screen of the display unit 5 (S46).

Also, when the scroll flag indicates the vertical direction, the fixed area outside display processing unit 17 generates the scrolled image in which the image displayed in the outside NF of the fixed area just before the drag of the second finger is scrolled inertially at the inertial scroll speed S1 in the vertical direction, and outputs the generated scrolled image to the display image generating unit 18. The display image generating unit 18 outputs the scrolled image to the display control unit 19, and the display control unit 19 displays the scrolled image on the display screen of the display unit 5 (S47).

When the scrolled image is displayed and then the first finger touches the fixed area F and the second finger touches the outside NF of the fixed area but does not drag the outside NF of the fixed area, the inertial scroll determination processing unit 20 determines whether or not the scrolled image displayed in the outside NF of the fixed area of the display screen of the display unit 5 is scrolled inertially (S48). In the case of determining that the scrolled image displayed in the outside NF of the fixed area of the display screen of the display unit 5 is scrolled inertially, the scroll stop processing unit 21 stops execution of the inertial scroll by a state touched by both of the first finger and the second finger (S49). At this time, the inertial scroll determination processing unit 20 updates information about the inertial scroll flag by writing the inertial scroll flag stored in the information storage medium 25 as "0" (S50).

When the scrolled image displayed in the outside NF of the fixed area of the display screen of the display unit 5 is not scrolled inertially and the finger of the user touches the display unit 5, the scroll stop processing unit 21 determines whether the touch finger is the first finger or the second finger (S51).

In the case of determining that the first finger touches the display unit 5 in step S51, the scroll stop processing unit 21 instructs the fixed area outside display processing unit 17 to release a display split state of a fixed image and the scrolled image and display the fixed image touched by the first finger on the whole of the display unit 5 (S52). In addition, the fixed area outside display processing unit 17 generates the fixed image displayed in the fixed area F based on the instructions outputted by the scroll stop processing unit 21 as a scrolled image. The fixed area outside display processing unit 17 outputs the generated scrolled image to the display image generating unit 18. The display image generating unit 18 outputs the outputted scrolled image to the display control unit 19. The display control unit 19 displays the outputted scrolled image on the display screen of the display unit 5. In addition, coordinates at the time when the first finger touches the display unit 5 are preferably the same as coordinates of the first contact point (X1, Y1) acquired in step S22, but may be the vicinity of the coordinates.

In the case of determining that the second finger touches the display unit 5 in step S51, the scroll stop processing unit 21 instructs the fixed area outside display processing unit 17 to release the display split state of the fixed image and the scrolled image and display the scrolled image touched by the second finger on the whole of the display unit 5 (S53). In addition, the fixed area outside display processing unit 17 generates a scrolled image displayed in the outside NF of the fixed area based on the instructions outputted by the scroll stop processing unit 21. The fixed area outside display processing unit 17 outputs the generated scrolled image to the display image generating unit 18. The display image generating unit 18 outputs the outputted scrolled image to the display control unit 19. The display control unit 19 displays the outputted scrolled image on the display screen of the display unit 5. In addition, coordinates at the time when the second finger touches the display unit 5 are preferably the same as coordinates of the second contact point (X2, Y2) acquired in step S29, but may be the vicinity of the coordinates.

In addition, in the case of determining that the finger of the user does not touch the display unit 5 when the scrolled image displayed in the outside NF of the fixed area of the display screen of the display unit 5 is not scrolled inertially, the scroll stop processing unit 21 displays the fixed image or the scrolled image on the display screen of the display unit 5. In this case, a state of displaying the fixed image or the scrolled image on the display unit 5 is preferably predefined in operation of the scroll stop processing unit 21. Thereafter, the operations of steps S21 to S53 described above are repeated.

As described above, the mobile telephone 10a of the second embodiment determines that a predetermined rectangular area including the first contact point at which the first finger touches an image displayed on the display screen of the display unit 5 is the fixed area F in the whole image, and determines that a display area excluding the fixed area F in the whole image and including the second contact point at which the second finger touches the image is the outside NF of the fixed area.

Also, the mobile telephone 10a generates a fixed image with the predetermined rectangular area determined as the fixed area F, and generates a scrolled image in which an image displayed in the display area determined as the outside NF of the fixed area is scrolled in the scroll direction determined according to coordinates of the second contact point with respect to the display screen of the display unit 5, a direction and a distance of drag of the second finger. The mobile telephone 10a displays a combined image obtained by combining the generated fixed image with the scrolled image on the display screen of the display unit 5.

Further, when a normal scroll or an inertial scroll is executed in the scrolled image displayed in the outside NF of the fixed area of the display screen of the display unit 5, the mobile telephone 10a stops execution of the normal scroll or the inertial scroll when the second finger touches the display unit 5, and also then displays the fixed image or the scrolled image scrolled normally or scrolled inertially on the whole display screen of the display unit 5 according to the first finger or the second finger touching the display unit 5.

Consequently, according to the mobile telephone 10a of the second embodiment, a part of the area in the contents displayed on the display screen can be fixed and also the other area of the outside of a target of fixing in the display screen can be scrolled according to an intuitive and simple manipulation. As a result, a user can manipulate the scroll direction with respect to the image displayed in the outside NF of the fixed area or a display split place or a fixed place of the image displayed on the display screen of the display unit 5 by the intuitive and simple manipulation of touch and drag of the fingers, and can easily implement selection of the fixed area F and scrolling of the outside NF of the fixed area by only the manipulation of at least two fingers.

Further, according to the mobile telephone 10a, a manipulation of the normal scroll or the inertial scroll can be started or stopped intuitively and simply by only the manipulation of the two fingers. Hence, when the manipulation of the normal scroll or the inertial scroll is stopped, the fixed image in an initial state or the scrolled image in a scrolled state can be displayed by the intuitive and simple manipulation of touch of the first finger or the second finger.


(THIRD EMBODIMENT)


7. CONFIGURATION OF MOBILE TELEPHONE 10B OF THIRD EMBODIMENT

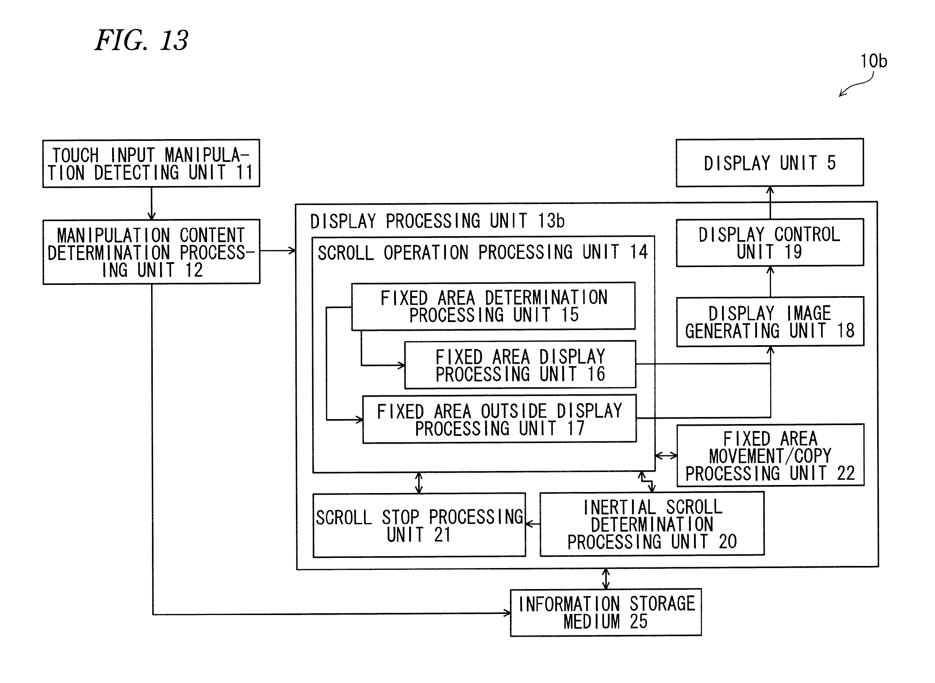

Fig. 13 is a block diagram showing an internal configuration of the mobile telephone 10b which is one example of an electronic apparatus of the invention. As shown in Fig. 13, the mobile telephone 10b includes a display processing unit 13b further including a fixed area movement/copy processing unit 22 in the display processing unit 13a of the mobile telephone 10a of the second embodiment. Since the other configuration excluding this fixed area movement/copy processing unit 22 is the same as that of the mobile telephone 10a of the second embodiment, explanation about the same contents is omitted.

The fixed area movement/copy processing unit 22 determines whether or not to perform a touch input manipulation in which a first finger drags a display screen in a predetermined direction by a predetermined distance in a state in which the first finger touches a fixed image displayed on the display screen of a display unit 5 and a second finger touches a scrolled image displayed on the display screen of the display unit 5. In the case of determining that the touch input manipulation is performed, the fixed area movement/copy processing unit 22 displays a dialog window for causing a user to select movement or copy of the fixed image so as to be displayed in an interrupt state just in the front of the scrolled image on the display unit 5.

The fixed area movement/copy processing unit 22 moves or copies the fixed image so as to be displayed in an interrupt state just in the front of the scrolled image according to selection of the user, and updates order of image data stored in an information storage medium 25.

## 8. OPERATION EXAMPLE OF FIXED AREA MOVEMENT/COPY PROCESSING UNIT 22

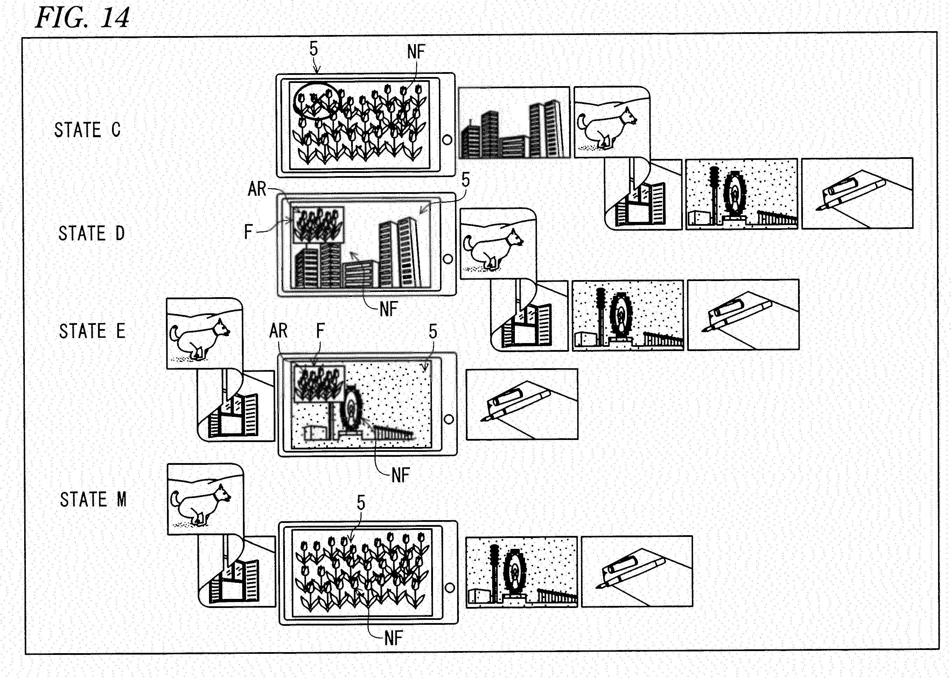

Next, an operation example of the fixed area movement/copy processing unit 22 will be described with reference to Fig. 14. Fig. 14 is an explanatory diagram showing one example of a situation before and after display splitting into a fixed area F and the outside NF of the fixed area in the third embodiment. In Fig. 14, an image browsing application operates in a state C, a state D, a state E and a state M shown in Fig. 3. In addition, each image shown in Fig. 14 is displayed on the display screen of the display unit 5 of the mobile telephone 10b. In addition, since a state C and a state D of Fig. 14 are similar to the state C and the state D shown in Fig. 3, explanation about the state C and the state D is omitted. In addition, in explanation of the state C to the state E of Fig. 14, in order of a flowerbed image (image ID=1), a building image (image ID=2), an animal image (image ID=3), a window image (image ID=4), a night view image (image ID=5) and a stationery image (image ID=6), the images are previously stored in the information storage medium 25 of the mobile telephone 10.

For example, in the state E of Fig. 14, on the display unit 5, the flowerbed image which is a fixed image is displayed within a range AR of a predetermined rectangular area showing the fixed area F touched by the first finger, and the night view image which is a scrolled image scrolled normally or scrolled inertially is displayed in the outside NF of the fixed area which is a display area excluding the fixed area F from the whole display screen and including a second contact point touched by the second finger.

When the first finger drags the display screen in a predetermined direction by a predetermined distance in this state E, the fixed area movement/copy processing unit 22 displays the dialog window for causing a user to select movement or copy of the fixed image displayed in the fixed area F so as to be displayed in an interrupt state just in the front of the scrolled image on the display unit 5.

For example, when the user selects the movement from this dialog window, the fixed area movement/copy processing unit 22 updates order of the image ID, of the image related to the movement, of the image IDs of the image data stored in the information storage medium 25 by moving the flowerbed image which is the fixed image just in the front of the night view image which is the scrolled image, that is, in a position of the previous image ID of the night view image. Concretely, in the state M of Fig. 14, the order is updated in order of the building image (image ID=1), the animal image (image ID=2), the window image (image ID=3), the flowerbed image (image ID=4), the night view image (image ID=5) and the stationery image (image ID=6). At this time, the fixed area movement/copy processing unit 22 outputs information to the effect that the flowerbed image which is the fixed image is moved just in the front of the night view image which is the scrolled image to a fixed area determination processing unit 15.

The fixed area determination processing unit 15 respectively instructs a fixed area display processing unit 16 and a fixed area outside display processing unit 17 to display the moved flowerbed image on the whole of the display unit 5. In this case, the fixed area display processing unit 16 does not generate the fixed image, and the fixed area outside display processing unit 17 generates a flowerbed image in which the moved flowerbed image is formed in the size capable of being displayed in a display area (the whole display screen of the display unit 5) of the outside NF of the fixed area, and outputs the flowerbed image to a display image generating unit 18. The display image generating unit 18 outputs the outputted flowerbed image to a display control unit 19. The display control unit 19 displays the outputted flowerbed image on the whole display screen of the display unit 5.

For example, when the user selects the copy from this dialog window, the fixed area movement/copy processing unit 22 performs updating so as to increment the image IDs of the images subsequent to the copied flowerbed image by one in the orders of the image IDs of the image data stored in the information storage medium 25 by copying the flowerbed image which is the fixed image just in the front of the night view image which is the scrolled image, that is, in a position of the previous image ID of the night view image. Concretely, in the state M of Fig. 14, the order is updated in order of the flowerbed image (image ID=1), the building image (image ID=2), the animal image (image ID=3), the window image (image ID=4), the flowerbed image (image ID=5), the night view image (image ID=6) and the stationery image (image ID=7). At this time, the fixed area movement/copy processing unit 22 outputs information to the effect that the flowerbed image which is the fixed image is copied just in the front of the night view image which is the scrolled image to the fixed area determination processing unit 15.

The fixed area determination processing unit 15 respectively instructs the fixed area display processing unit 16 and the fixed area outside display processing unit 17 to display the copied flowerbed image on the whole of the display unit 5. In this case, the fixed area display processing unit 16 does not generate the fixed image, and the fixed area outside display processing unit 17 generates a flowerbed image in which the moved flowerbed image is formed in the size capable of being displayed in a display area (the whole display screen of the display unit 5) of the outside NF of the fixed area, and outputs the flowerbed image to the display image generating unit 18. The display image generating unit 18 outputs the outputted flowerbed image to the display control unit 19. The display control unit 19 displays the outputted flowerbed image on the whole display screen of the display unit 5.

## 9. EXPLANATION ABOUT OPERATION OF MOBILE TELEPHONE 10B OF THIRD EMBODIMENT

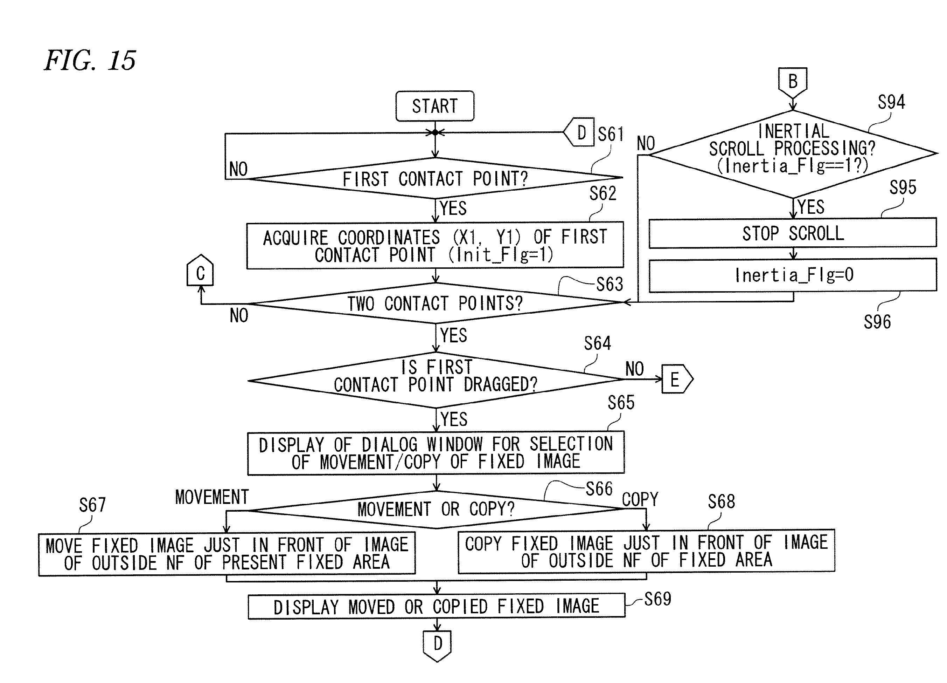

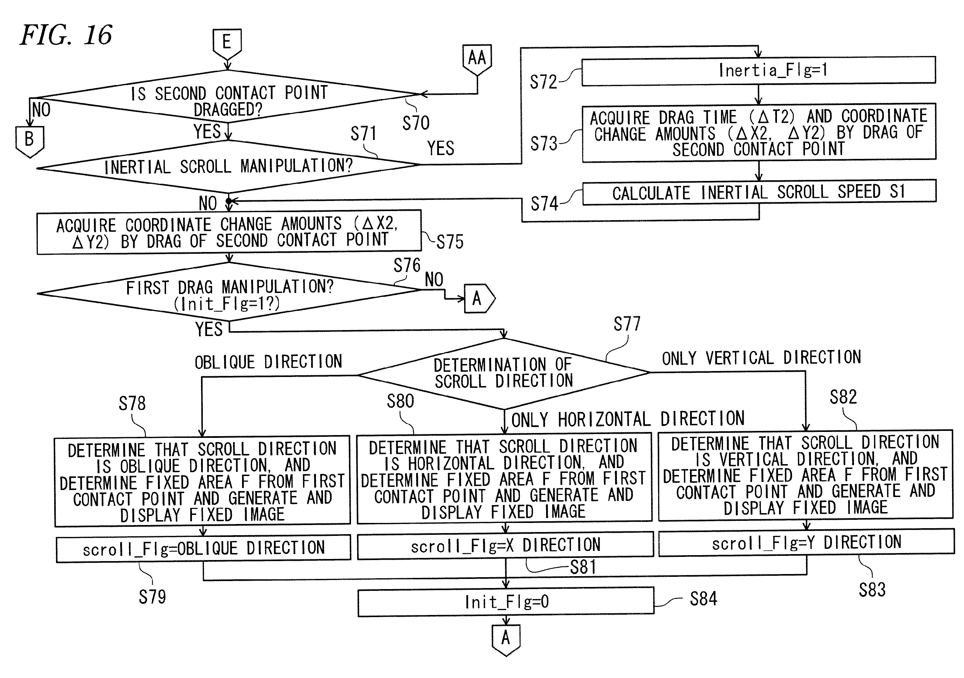

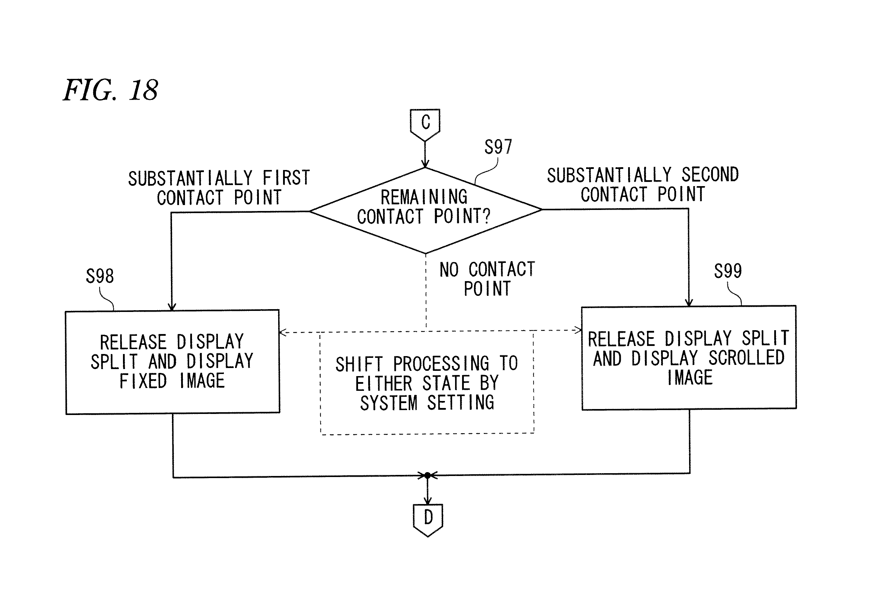

Figs. 15 to 18 are flowcharts showing operation of the mobile telephone 10b of the third embodiment, respectively. Also, prior to the following explanation, any image shall be previously displayed on the display screen of the display unit 5 of the mobile telephone 10b.

In Fig. 15, a manipulation content determination processing unit 12 determines whether or not to perform a touch input manipulation in which a first finger of a user touches the display screen of the display unit 5 (S61). In the case of determining that the touch input manipulation in step S61 is performed, the manipulation content determination processing unit 12 acquires information about coordinates (X1, Y1) of a first contact point touched by the first finger based on the touch input manipulation, and writes the information about coordinates of the first contact point and information to the effect that "initial flag (Init_Flg) = 1" into the information storage medium 25 (S62).

The manipulation content determination processing unit 12 determines whether or not to perform a touch input manipulation in which a second finger touches the display screen of the display unit 5 subsequently to the touch of the first finger determined in step S61 (S63). In the case of determining that the touch input manipulation in step S63 is performed, the manipulation content determination processing unit 12 determines whether or not to perform a touch input manipulation in which the second finger touches the display unit 5 and then the first finger drags the display screen in a predetermined direction by a predetermined distance from the first contact point of the display unit 5 (S64).

In the case of determining that the touch input manipulation in step S64 is performed, the fixed area movement/copy processing unit 22 displays the dialog window for causing a user to select movement or copy of a fixed image displayed in the fixed area F so as to be displayed in an interrupt state just in the front of a scrolled image displayed in a display area of the outside NF of the fixed area on the display unit 5 (S65).

According to the touch input manipulation which is selection of the user (S66), the fixed area movement/copy processing unit 22 moves or copies the fixed image so as to be displayed in the interrupt state just in the front of the scrolled image (S67, S68).

Concretely, when the user selects the movement (S66), the fixed area movement/copy processing unit 22 moves the fixed image displayed in the fixed area F so as to be displayed in the interrupt state just in the front of the scrolled image displayed in the outside NF of the present fixed area (S67). At this time, the fixed area movement/copy processing unit 22 updates order of the image ID, of the image related to the movement, of the image IDs of image data stored in the information storage medium 25 by moving the fixed image so as to be displayed in the interrupt state just in the front of the scrolled image. At this time, the fixed area movement/copy processing unit 22 outputs information to the effect that the fixed image is moved just in the front of the scrolled image to the fixed area determination processing unit 15.

The fixed area determination processing unit 15 respectively instructs the fixed area display processing unit 16 and the fixed area outside display processing unit 17 to display the moved fixed image on the whole of the display unit 5. In this case, the fixed area display processing unit 16 does not generate the fixed image, and the fixed area outside display processing unit 17 generates an image in which the moved fixed image is formed in the size capable of being displayed in the whole of the display unit 5, and outputs the image to the display image generating unit 18. As a result, the display image generating unit 18 outputs the image outputted by the fixed area outside display processing unit 17 to the display control unit 19, and the display control unit 19 displays the outputted image on the whole display screen of the display unit 5 (S69).

When the user selects the copy (S66), the fixed area movement/copy processing unit 22 copies the fixed image displayed in the fixed area F so as to be displayed in the interrupt state just in the front of the scrolled image displayed in the outside NF of the present fixed area (S68). At this time, the fixed area movement/copy processing unit 22 performs updating so as to increment the image IDs of the images subsequent to the copied flowerbed image by one in the orders of the image IDs of the image data stored in the information storage medium 25 by copying the fixed image so as to be displayed in the interrupt state just in the front of the scrolled image. Also, the fixed area movement/copy processing unit 22 outputs information to the effect that the fixed image is copied just in the front of the scrolled image to the fixed area determination processing unit 15.

The fixed area determination processing unit 15 respectively instructs the fixed area display processing unit 16 and the fixed area outside display processing unit 17 to display the copied fixed image on the whole of the display unit 5. In this case, the fixed area display processing unit 16 does not generate the fixed image, and the fixed area outside display processing unit 17 generates an image in which the copied fixed image is formed in the size capable of being displayed in the whole of the display unit 5, and outputs the image to the display image generating unit 18. As a result, the display image generating unit 18 outputs the image outputted by the fixed area outside display processing unit 17 to the display control unit 19, and the display control unit 19 displays the outputted image on the whole display screen of the display unit 5 (S69).

After the fixed image moved or copied in step S69 is displayed on the whole display screen of the display unit 5, the manipulation content determination processing unit 12 determines whether or not to perform a touch input manipulation in which the first finger of the user touches the display unit 5 (S61). In the case of determining that the touch input manipulation in step S61 is performed, the manipulation content determination processing unit 12 acquires information about coordinates $(X1, Y1)$ of the first contact point touched by the first finger based on the touch input manipulation, and writes the information about coordinates of the first contact point and information to the effect that "initial flag (Init_Flg) = 1" into the information storage medium 25 (S62).

The manipulation content determination processing unit 12 determines whether or not to perform a touch input manipulation in which the second finger touches the display unit 5 subsequently to the touch of the first finger determined in step S61 (S63). In the case of determining that the touch input manipulation in step S63 is performed, the manipulation content determination processing unit 12 determines whether or not to perform a touch input manipulation in which the second finger touches the display unit 5 and then the first finger drags the display unit 5 in a predetermined direction by a predetermined distance from the first contact point of the display unit 5 (S64).

In the case of determining that the touch input manipulation in step S64 is not performed, the manipulation content determination processing unit 12 determines whether or not to perform a touch input manipulation in which the second finger touches the display unit 5 and then drags the display unit 5 in a predetermined direction by a predetermined distance (S70).

In the case of determining that the touch input manipulation in step S70 is performed, an inertial scroll determination processing unit 20 determines whether or not the touch input manipulation is a manipulation for instructing execution of an inertial scroll (S71).

In the case of determining that the touch input manipulation in step S71 is the manipulation for instructing execution of the inertial scroll, the inertial scroll determination processing unit 20 writes information to the effect that "inertial scroll flag = 1" into the information storage medium 25 (S72). At this time, the inertial scroll determination processing unit 20 acquires coordinate change amounts $(\triangle X2, \triangle Y2)$ at the time when the second finger drags the display screen by a predetermined distance from the second contact point, and drag time $(\triangle T2)$ from the manipulation content determination processing unit 12 (S73). Further, the inertial scroll determination processing unit 20 calculates an inertial scroll speed S1 based on the acquired coordinate change amounts $(\triangle X2, \triangle Y2)$ and the drag time $(\triangle T2)$ as described above (S74).

In the case of determining that the touch input manipulation in step S71 is not the manipulation for instructing execution of the inertial scroll, the manipulation content determination processing unit 12 acquires information about coordinate change amounts $(\triangle X2, \triangle Y2)$ of the second contact point dragged based on the touch input manipulation in step S70, and writes the information about the coordinate change amounts into the information storage medium 25 (S75).

In addition, the manipulation content determination processing unit 12 acquires the information about the co-ordinate change amounts $(\triangle X2, \triangle Y2)$ of the second contact point by acquiring the information about the coordinate change amounts $(\triangle X2, \triangle Y2)$ of the second contact point based on coordinates $(X2s, Y2s)$ before drag of the second contact point and coordinates $(X2e, Y2e)$ after drag of the second contact point at the time when the second finger touches the display screen of the display unit 5.

The manipulation content determination processing unit 12 determines whether or not drag of the second finger is the first drag, that is, the initial flag is "1" (S76). In the case of determining that the drag of the second finger is the first drag, the fixed area determination processing unit 15 determines a scroll direction with respect to an image displayed in the outside NF of the fixed area excluding the predetermined fixed area F including the first contact point from the whole display screen of the display unit 5 and including the second contact point according to coordinates of the second contact point by the second finger with respect to the display screen, a direction and a distance of drag from the second contact point (S77).

In addition, the fixed area determination processing unit 15 preferably determines the scroll direction of the image of the outside NF of the fixed area including the second contact point based on coordinates of the second contact point on the display screen of the display unit 5 and the coordinate change amounts ($\Delta X2$, $\Delta Y2$) of the second contact point acquired in step S29. For example, when $\Delta X2$ of the coordinate change amounts ($\Delta X2$, $\Delta Y2$) of the second contact point is substantially zero, the fixed area determination processing unit 15 determines that the scroll direction is only a vertical direction. Also, when $\Delta Y2$ of the coordinate change amounts ($\Delta X2$, $\Delta Y2$) of the second contact point is substantially zero, the fixed area determination processing unit 15 determines that the scroll direction is only a horizontal direction. Also, when both $\Delta X2$ and $\Delta Y2$ of the coordinate change amounts ($\Delta X2$, $\Delta Y2$) of the second contact point are not substantially zero, the fixed area determination processing unit 15 determines that the scroll direction is an oblique direction.

In the case of determining that the scroll direction in step S77 is the oblique direction, the fixed area determination processing unit 15 determines that scrolling is performed in the oblique direction with respect to the image of the outside NF of the fixed area including the second contact point according to the drag of the second finger, and also determines that a predetermined rectangular area including the first contact point is the fixed area F (S78). Simultaneously, the fixed area determination processing unit 15 determines that a display area excluding the fixed area F from the whole display screen of the display unit 5 and including the second contact point of the second finger is the outside NF of the fixed area (S78).

Further, the fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S78). The fixed area determination processing unit 15 writes information to the effect that "scroll flag (Scroll_Flg) = oblique direction" into the information storage medium 25 (S79).

In the case of determining that the scroll direction in step S77 is only the horizontal direction, the fixed area determination processing unit 15 determines that scrolling is performed in the horizontal direction with respect to the image of the outside NF of the fixed area including the second contact point according to the drag of the second finger, and also determines that a predetermined rectangular area including the first contact point is the fixed area F (S80). Simultaneously, the fixed area determination processing unit 15 determines that a display area excluding the fixed area F from the whole display screen of the display unit 5 and including the second contact point of the second finger is the outside NF of the fixed area (S80).

Further, the fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S80). The fixed area determination processing unit 15 writes information to the effect that "scroll flag (Scroll_Flg) = horizontal direction" into the information storage medium 25 (S81).

In the case of determining that the scroll direction in step S77 is only the vertical direction, the fixed area determination processing unit 15 determines that scrolling is performed in the vertical direction with respect to the image of the outside NF of the fixed area including the second contact point according to the drag of the second finger, and also determines that a predetermined rectangular area including the first contact point is the fixed area F (S82). Simultaneously, the fixed area determination processing unit 15 determines that a display area excluding the fixed area F from the whole display screen of the display unit 5 and including the second contact point of the second finger is the outside NF of the fixed area (S82).

Further, the fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S82). The fixed area determination processing unit 15 writes information to the effect that "scroll flag (Scroll_Flg) = vertical direction" into the information storage medium 25 (S82).

After the scroll flag is written into the information storage medium 25 in step S79, step S81 or step S83, the manipulation content determination processing unit 12 updates information about the initial flag by writing information to the effect that "initial flag = 0" into the information storage medium 25 (S84).

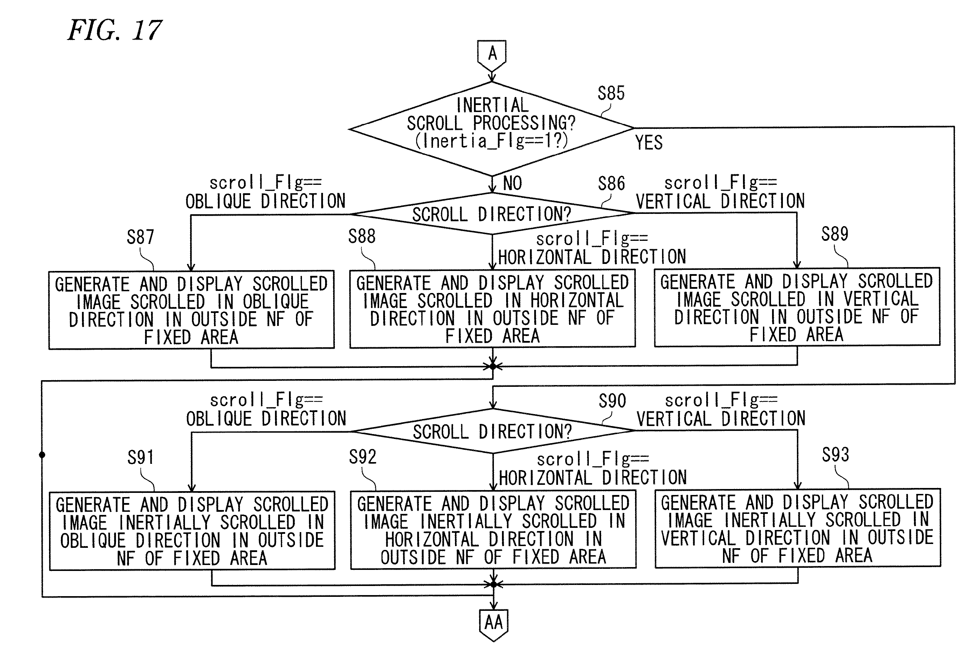

After information about the initial flag is updated in step S84, the inertial scroll determination processing unit 20 determines whether or not a scrolled image of the outside NF of the fixed area displayed on the display screen of the display unit 5 is scrolled inertially in Fig. 17 (S85).

In the case of determining that the scrolled image of the outside NF of the fixed area displayed on the display screen of the display unit 5 is not scrolled inertially, according to the scroll flag stored in the information storage medium 25 (S86), the fixed area outside display processing unit 17 generates and displays a scrolled image in which an image displayed in the outside NF of the fixed area just before the drag of the second finger is scrolled in the scroll direction determined by the fixed area determination processing unit 15 (S87 to S89).

Concretely, when the scroll flag indicates the oblique direction, the fixed area outside display processing unit 17 generates the scrolled image in which the image displayed in the outside NF of the fixed area just before the drag of the second finger is scrolled in the oblique direction, and outputs the generated scrolled image to the display image generating unit 18. The display image generating unit 18 outputs the scrolled image to the display control unit 19, and the display control unit 19 displays the scrolled image on the display screen of the display unit 5 (S87).

Further, when the scroll flag indicates the horizontal direction, the fixed area outside display processing unit 17 generates the scrolled image in which the image displayed in the outside NF of the fixed area just before the drag of the second finger is scrolled in the horizontal direction, and outputs the generated scrolled image to the display image generating unit 18. The display image generating unit 18 outputs the scrolled image to the display control unit 19, and the display control unit 19 displays the scrolled image on the display screen of the display unit 5 (S88).

Furthermore, when the scroll flag indicates the vertical direction, the fixed area outside display processing unit 17 generates the scrolled image in which the image displayed in the outside NF of the fixed area just before the drag of the second finger is scrolled in the vertical direction, and outputs the generated scrolled image to the display image generating unit 18. The display image generating unit 18 outputs the scrolled image to the display control unit 19, and the display control unit 19 displays the scrolled image on the display screen of the display unit 5 (S89).

In the case of determining that the scrolled image of the outside NF of the fixed area displayed on the display screen of the display unit 5 is scrolled inertially, according to the scroll flag stored in the information storage medium 25 (S90), the fixed area outside display processing unit 17 generates and displays a scrolled image in which an image displayed in the outside NF of the fixed area just before the drag of the second finger is scrolled inertially at the inertial scroll speed S1 in the scroll direction determined by the fixed area determination processing unit 15 (S91 to S93).

Concretely, when the scroll flag indicates the oblique direction, the fixed area outside display processing unit 17 generates the scrolled image in which the image displayed in the outside NF of the fixed area just before the drag of the second finger is scrolled inertially at the inertial scroll speed S1 in the oblique direction, and outputs the generated scrolled image to the display image generating unit 18. The display image generating unit 18 outputs the scrolled image to the display control unit 19, and the display control unit 19 displays the scrolled image on the display screen of the display unit 5 (S91).

Also, when the scroll flag indicates the horizontal direction, the fixed area outside display processing unit 17 generates the scrolled image in which the image displayed in the outside NF of the fixed area just before the drag of the second finger is scrolled inertially at the inertial scroll speed S1 in the horizontal direction, and outputs the generated scrolled image to the display image generating unit 18. The display image generating unit 18 outputs the scrolled image to the display control unit 19, and the display control unit 19 displays the scrolled image on the display screen of the display unit 5 (S92).

Also, when the scroll flag indicates the vertical direction, the fixed area outside display processing unit 17 generates the scrolled image in which the image displayed in the outside NF of the fixed area just before the drag of the second finger is scrolled inertially at the inertial scroll speed S1 in the vertical direction, and outputs the generated scrolled image to the display image generating unit 18. The display image generating unit 18 outputs the scrolled image to the display control unit 19, and the display control unit 19 displays the scrolled image on the display screen of the display unit 5 (S93).

When the scrolled image is displayed and then the first finger touches the fixed area F and the second finger touches the outside NF of the fixed area but does not drag the outside NF of the fixed area, the inertial scroll determination processing unit 20 determines whether or not the scrolled image displayed in the outside NF of the fixed area of the display screen of the display unit 5 is scrolled inertially (S94). In the case of determining that the scrolled image displayed in the outside NF of the fixed area of the display screen of the display unit 5 is scrolled inertially, a scroll stop processing unit 21 stops execution of the inertial scroll by a state touched by both of the first finger and the second finger (S95). At this time, the inertial scroll determination processing unit 20 updates information about the inertial scroll flag by writing the inertial scroll flag stored in the information storage medium 25 as "0" (S96).

When the scrolled image displayed in the outside NF of the fixed area of the display screen of the display unit 5 is not scrolled inertially and the finger of the user touches the display unit 5, the scroll stop processing unit 21 determines whether the touch finger is the first finger or the second finger (S97).

In the case of determining that the first finger touches the display unit 5 in step S97, the scroll stop processing unit 21 instructs the fixed area outside display processing unit 17 to release a display split state of a fixed image and the scrolled image and display the fixed image touched by the first finger on the whole of the display unit 5 (S98). In addition, the fixed area outside display processing unit 17 generates the fixed image displayed in the fixed area F based on the instructions outputted by the scroll stop processing unit 21 as a scrolled image. The fixed area outside display processing unit 17 outputs the generated scrolled image to the display image generating unit 18. The display image generating unit 18 outputs the outputted scrolled image to the display control unit 19. The display control unit 19 displays the outputted scrolled image on the display screen of the display unit 5. In addition, coordinates at the time when the first finger touches the display unit 5 may be the same as or the vicinity of coordinates of the first contact point (X1, Y1) acquired in step S62.

In the case of determining that the second finger touches the display unit 5 in step S97, the scroll stop processing unit 21 instructs the fixed area outside display processing unit 17 to release the display split state of the fixed image and the scrolled image and display the scrolled image touched by the second finger on the whole of the display unit 5 (S99). In addition, the fixed area outside display processing unit 17 generates a scrolled image displayed in the outside NF of the fixed area based on the instructions outputted by the scroll stop processing unit 21. The fixed area outside display processing unit 17 outputs the generated scrolled image to the display image generating unit 18. The display image generating unit 18 outputs the outputted scrolled image to the display control unit 19. The display control unit 19 displays the outputted scrolled image on the display screen of the display unit 5.

In addition, in the case of determining that the finger of the user does not touch the display unit 5 when the scrolled image displayed in the outside NF of the fixed area of the display screen of the display unit 5 is not scrolled inertially, the scroll stop processing unit 21 displays the fixed image or the scrolled image on the display screen of the display unit 5. In this case, a state of displaying the fixed image or the scrolled image on the display unit 5 is preferably predefined in operation of the scroll stop processing unit 21. Thereafter, the operations of steps S61 to S99 described above are repeated.

As described above, the mobile telephone 10b of the third embodiment determines that a predetermined rectangular area including the first contact point at which the first finger touches an image displayed on the display screen of the display unit 5 is the fixed area F in the whole image, and determines that a display area excluding the fixed area F in the whole image and including the second contact point at which the second finger touches the image is the outside NF of the fixed area.

Further, the mobile telephone 10b generates a fixed image with the predetermined rectangular area determined as the fixed area F, and generates a scrolled image in which an image displayed in the display area determined as the outside NF of the fixed area is scrolled in the scroll direction determined according to coordinates of the second contact point with respect to the display screen of the display unit 5, a direction and a distance of drag of the second finger. The mobile telephone 10b displays a combined image obtained by combining the generated fixed image with the scrolled image on the display screen of the display unit 5.

Further, when a normal scroll or an inertial scroll is executed in the scrolled image displayed in the outside NF of the fixed area of the display screen of the display unit 5, the mobile telephone 10b stops execution of the normal scroll or the inertial scroll when the second finger touches the display unit 5, and also then displays the fixed image or the scrolled image scrolled normally or scrolled inertially on the whole of the display unit 5 according to the first finger or the second finger touching the display unit 5.

Further, in the case where the first finger drags the display unit 5 in a predetermined direction by a predetermined distance when the first finger and the second finger respectively touch the display unit 5, the mobile telephone 10b displays the dialog window for moving or copying the fixed image of the fixed area F touched by the first finger so as to be displayed in an interrupt state just in the front of the scrolled image of the outside NF of the fixed area touched by the second finger on the display unit 5. According to selection of a user with respect to movement or copy, the mobile telephone 10b performs the movement or the copy and updates order of image data. The mobile telephone 10b displays the moved or copied fixed image so as to be displayed in the interrupt state just in the front of the scrolled image on the whole display screen of the display unit 5.

Consequently, according to the mobile telephone 10b of the third embodiment, a part of the area in the contents displayed on the display screen can be fixed and also the other area of the outside of a target of fixing in the display screen can be scrolled according to an intuitive and simple manipulation. As a result, a user can manipulate the scroll direction with respect to the image displayed in the outside NF of the fixed area or a display split place or a fixed place of the image displayed on the display screen of the display unit 5 by the intuitive and simple manipulation of touch and drag of the fingers, and can easily implement selection of the fixed area F and scrolling of the outside NF of the fixed area by only the manipulation of at least two fingers.

Further, according to the mobile telephone 10b, a manipulation of the normal scroll or the inertial scroll can be started or stopped intuitively and simply by only the manipulation of the two fingers. Hence, when the manipulation of the normal scroll or the inertial scroll is stopped, the fixed image in an initial state or the scrolled image in a scrolled state can be displayed by the intuitive and simple manipulation of touch of the first finger or the second finger.

Further, according to the mobile telephone 10b, by an intuitive and simple manipulation of drag of the first finger in a predetermined direction by a predetermined distance, the fixed image touched by the first finger can easily be moved or copied so as to be displayed in the interrupt state just in the front of the scrolled image, and the moved or copied fixed image can be displayed on the whole display screen of the display unit 5.

(FOURTH EMBODIMENT)

10. CONFIGURATION OF MOBILE TELEPHONE 10C OF FOURTH EMBODIMENT

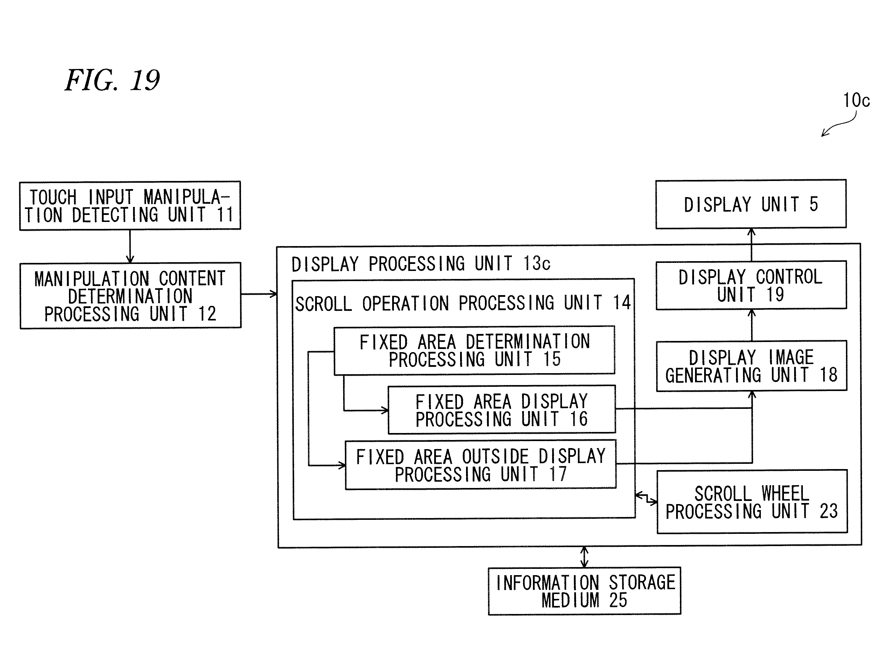

Fig. 19 is a block diagram showing an internal configuration of the mobile telephone 10c which is one example of an electronic apparatus of the invention. As shown in Fig. 19, the mobile telephone 10c includes a display processing unit 13c further including a scroll wheel processing unit 23 in the display processing unit 13 of the mobile telephone 10 of the first embodiment. Since the other configuration excluding this scroll wheel processing unit 23 is the same as that of the mobile telephone 10 of the first embodiment, explanation about the same contents is omitted.

11. OUTLINE OF OPERATION OF SCROLL WHEEL PROCESSING UNIT 23

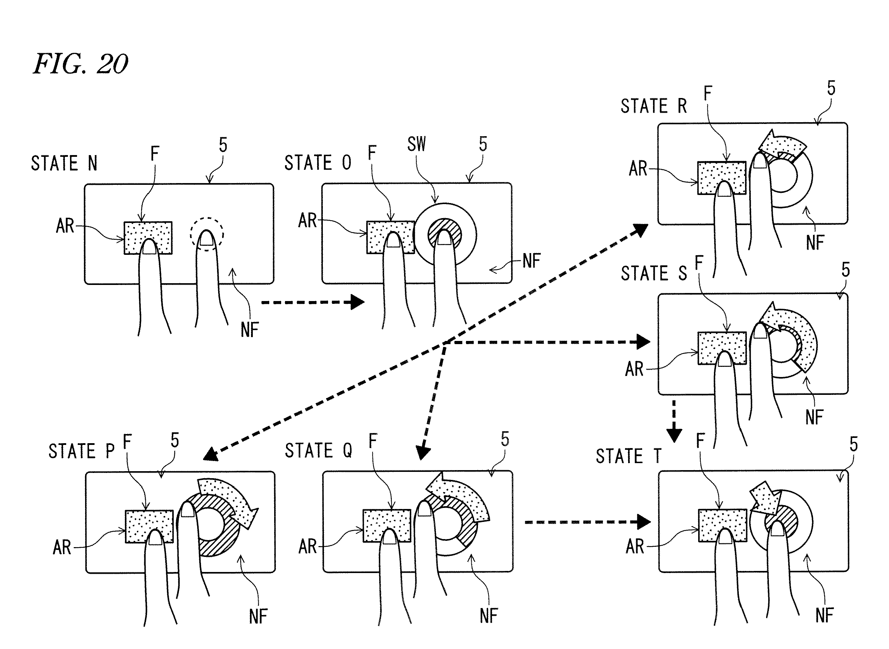

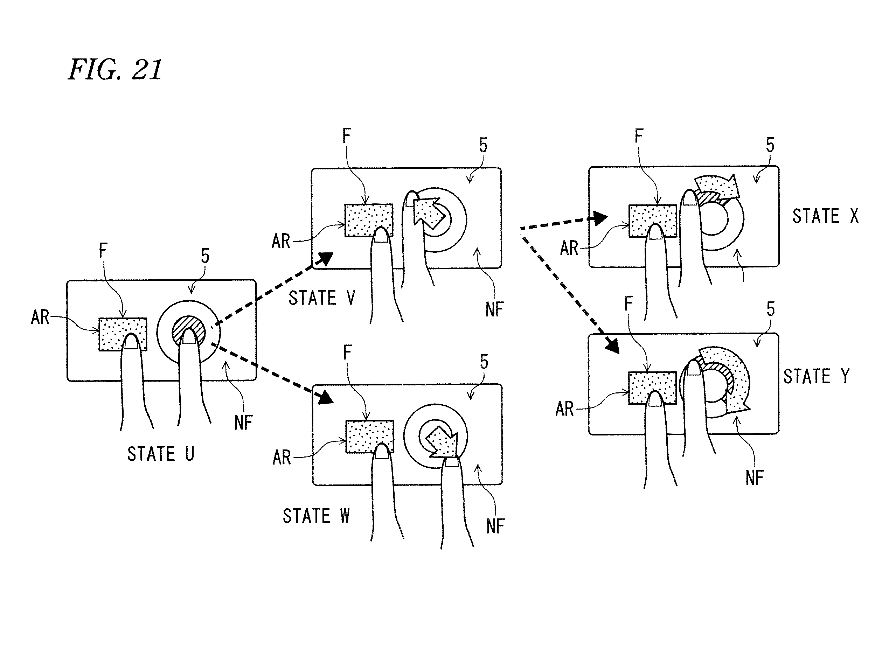

An outline of animation of the scroll wheel processing unit 23 will be described with reference to Figs. 20 and 21. Fig. 20 is an explanatory diagram showing one example of a touch input manipulation using a scroll wheel SW in the fourth embodiment, and shows one example at the time when a scrolled image displayed in the outside NF of a fixed area is scrolled in a horizontal direction or a vertical direction. Fig. 21 is an explanatory diagram showing another example of a touch input manipulation using the scroll wheel SW in the fourth embodiment, and shows one example at the time when the scrolled image displayed in the outside NF of the fixed area is scrolled in an oblique direction. In addition, in Figs. 20 and 21, an image browsing application operates on a display unit 5 of the mobile telephone 10c. In addition, image data stored in an information storage medium 25 is displayed on a display screen of the display unit 5 of the mobile telephone 10c shown in Figs. 20 and 21. In addition, in Figs. 20 and 21, "the index finger" of a user is described as a first finger and "the middle finger" is described as a second finger.

In a state N of Fig. 20, on the display unit 5, a fixed image is displayed within a range AR of a predetermined rectangular area showing a fixed area F touched by the first finger, and a scrolled image scrolled is displayed in the outside NF of the fixed area which is a display area excluding the fixed area F from the whole display screen and including a second contact point touched by the second finger.

The scroll wheel processing unit 23 determines whether or not to perform a touch input manipulation in which the second finger double-clicks a certain position in the outside NF of the fixed area in this state N. In the case of determining that the touch input manipulation is performed, the scroll wheel processing unit 23 displays the concentric scroll wheel SW respectively having diameters with predetermined lengths around the second contact point touched by the second finger as shown in a state O. The lengths of the respective diameters of this scroll wheel SW are preferably predefined in operation of the scroll wheel processing unit 23 or the information storage medium 25.

Also, in the state O, the scroll wheel processing unit 23 determines whether or not to perform a touch input manipulation in which the second finger is rotated clockwise (or counterclockwise) from the center toward the periphery of the scroll wheel SW as shown in a state P or a state Q. In the case of determining that the touch input manipulation is performed, the scroll wheel processing unit 23 instructs a fixed area outside display processing unit 17 to generate a scrolled image in which the scrolled image displayed in a display area of the outside NF of the fixed area is scrolled in a horizontal right direction or a vertical lower direction (or in a horizontal left direction or a vertical upper direction).

In addition, the fixed area outside display processing unit 17 generates the scrolled image in which the scrolled image displayed in the display area of the outside NF of the fixed area is scrolled in the horizontal right direction or the vertical lower direction (or in the horizontal left direction or the vertical upper direction) based on the instructions by the scroll wheel processing unit 23. The fixed area outside display processing unit 17 outputs the generated scrolled image to a display image generating unit 18. The display image generating unit 18 outputs the outputted scrolled image to a display control unit 19. The display control unit 19 displays the outputted scrolled image on the display screen of the display unit 5.

Also, in the state O, the scroll wheel processing unit 23 determines whether or not to perform a touch input manipulation in which the second finger is rotated clockwise (or counterclockwise) at a small rotational angle or a large rotational angle from the center toward the periphery of the scroll wheel SW as shown in a state R or a state S. In the case of determining that the touch input manipulation is performed, the scroll wheel processing unit 23 instructs the fixed area outside display processing unit 17 to generate a scrolled image in which the scrolled image displayed in the display area of the outside NF of the fixed area is scrolled at a scroll speed S2 according to the rotational angle in a horizontal right direction or a vertical lower direction (or in a horizontal left direction or a vertical upper direction).

In addition, the fixed area outside display processing unit 17 generates the scrolled image in which the scrolled image displayed in the display area of the outside NF of the fixed area is scrolled at the scroll speed S2 according to the rotational angle in the horizontal right direction or the vertical lower direction (or in the horizontal left direction or the vertical upper direction) based on the instructions by the scroll wheel processing unit 23. The fixed area outside display processing unit 17 outputs the generated scrolled image to the display image generating unit 18. The display image generating unit 18 outputs the outputted scrolled image to the display control unit 19. The display control unit 19 displays the outputted scrolled image on the display screen of the display unit 5.

In addition, in the case of determining that the touch input manipulation in which the second finger is rotated clockwise from the center toward the periphery of the scroll wheel SW is performed, the scroll wheel processing unit 23 determines whether a scroll direction of the scrolled image is the horizontal right direction or the vertical lower direction according to coordinates of the second contact point of the second finger with respect to the display screen of the display unit 5, coordinate change amounts of the second contact point after display of the scroll wheel SW and an inclination determined by the coordinate change amounts. Similarly, in the case of determining that the touch input manipulation in which the second finger is rotated counterclockwise from the center toward the periphery of the scroll wheel SW is performed, the scroll wheel processing unit 23 determines whether a scroll direction of the scrolled image is the horizontal left direction or the vertical upper direction according to coordinates of the second contact point of the second finger with respect to the display screen of the display unit 5, coordinate change amounts of the second contact point after display of the scroll wheel SW and an inclination determined by the coordinate change amounts.

Further, a relation between and the rotational angle at which the second finger is rotated from the center toward the periphery of the scroll wheel SW and the scroll speed according to the rotational angle is preferably predefined in operation of the scroll wheel processing unit 23 or the information storage medium 25.

Also, the scroll wheel processing unit 23 determines whether or not to perform a touch input manipulation in which the second finger drags the display screen from the periphery to the center of the scroll wheel SW as shown in a state T. In the case of determining that the touch input manipulation is performed, the scroll wheel processing unit 23 stops execution of a scroll with respect to the scrolled image displayed in the display area of the outside NF of the fixed area. The scroll wheel processing unit 23 instructs the fixed area outside display processing unit 17 to display a scrolled image of the moment to stop execution of the scroll executed with respect to the scrolled image in the outside NF of the fixed area.

In addition, the fixed area outside display processing unit 17 generates the scrolled image displayed in the display area of the outside NF of the fixed area based on the instructions by the scroll wheel processing unit 23. The fixed area outside display processing unit 17 outputs the generated scrolled image to the display image generating unit 18. The display image generating unit 18 outputs the outputted scrolled image to the display control unit 19. The display control unit 19 displays the outputted scrolled image on the display screen of the display unit 5.

In a state U of Fig. 21, on the display unit 5, a fixed image is displayed within a range AR of a predetermined rectangular area showing a fixed area F touched by the first finger, and a scrolled image scrolled is displayed in the outside NF of the fixed area which is a display area excluding the fixed area F from the whole display screen and including a second contact point touched by the second finger.

Also, in the state U, the scroll wheel processing unit 23 determines whether or not to perform a touch input manipulation in which the second finger drags the display screen from the center toward the periphery of the scroll wheel SW in an oblique direction as shown in information V or a state W and is rotated clockwise (or counterclockwise) at a small rotational angle or a large rotational angle using a position after the drag as an initial point as shown in a state X or a state Y. In the case of determining that the touch input manipulation is performed, the scroll wheel processing unit 23 instructs the fixed area outside display processing unit 17 to generate a scrolled image in which the scrolled image displayed in the display area of the outside NF of the fixed area is scrolled at a scroll speed S2 according to the rotational angle in the oblique direction dragged.

In addition, the fixed area outside display processing unit 17 generates the scrolled image in which the scrolled image displayed in the display area of the outside NF of the fixed area is scrolled at the scroll speed S2 according to the rotational angle in the oblique direction based on the instructions by the scroll wheel processing unit 23. The fixed area outside display processing unit 17 outputs the generated scrolled image to the display image generating unit 18. The display image generating unit 18 outputs the outputted scrolled image to the display control unit 19. The display control unit 19 displays the outputted scrolled image on the display screen of the display unit 5.

## 12. EXPLANATION ABOUT OPERATION OF MOBILE TELEPHONE 10C OF FOURTH EMBODIMENT

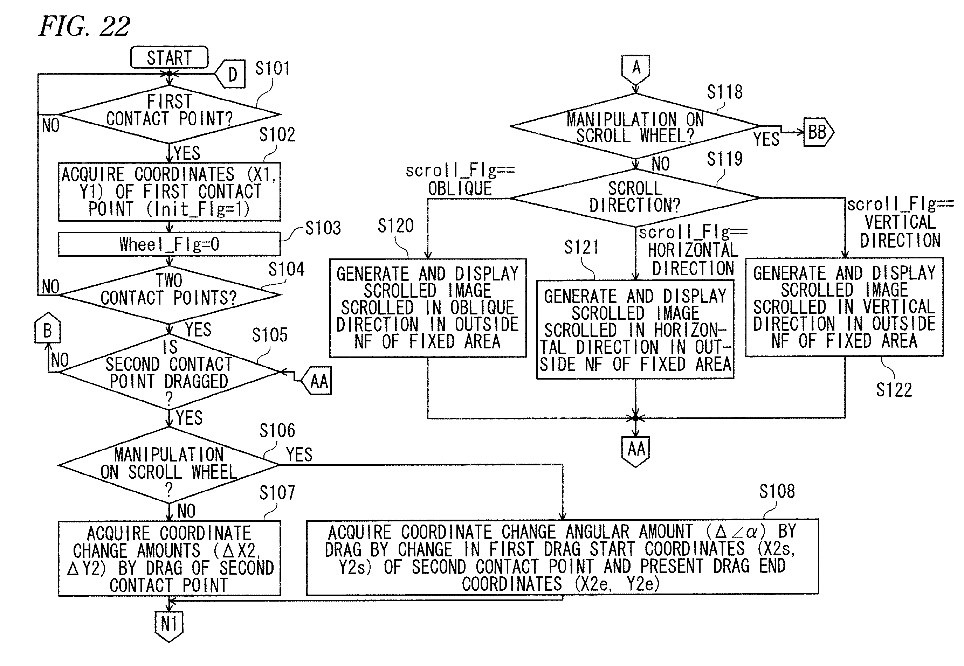

Figs. 22 to 25 are flowcharts showing operation of the mobile telephone 10c of the fourth embodiment, respectively. Also, in the following explanation, any image shall be previously displayed on the display screen of the display unit 5 of the mobile telephone 10c.

In Fig. 22, a manipulation content determination processing unit 12 determines whether or not to perform a touch input manipulation in which a first finger of a user touches the display unit 5 (S101). In the case of determining that the touch input manipulation in step S101 is performed, the manipulation content determination processing unit 12 acquires information about coordinates (X1, Y1) of a first contact point touched by the first finger based on the touch input manipulation, and writes the information about coordinates of the first contact point and information to the effect that "initial flag (Init_Flg) = 1" into the information storage medium 25 (S102).

The scroll wheel processing unit 23 writes information to the effect that "wheel flag (Wheel_Flg) = 0" into the information storage medium 25 (S103). In addition, a state in which the wheel flag is "0" refers to a state in which the scroll wheel SW is not displayed on the display screen of the display unit 5. Also, a state in which the wheel flag is "1" refers to a state in which the scroll wheel SW is displayed on the display screen of the display unit 5.

After the information to the effect that the wheel flag is "0" is written into the information storage medium 25, the manipulation content determination processing unit 12 determines whether or not to perform a touch input manipulation in which a second finger touches the display screen of the display unit 5 subsequently to the touch of the first finger determined in step S101 (S104). In the case of determining that the touch input manipulation in step S 104 is performed, the manipulation content determination processing unit 12 determines whether or not to perform a touch input manipulation in which the second finger touches the display screen of the display unit 5 and then drags the display screen in a predetermined direction by a predetermined distance (S105).

In the case of determining that the touch input manipulation in step S105 is performed, the scroll wheel processing unit 23 determines whether or not the touch input manipulation is a manipulation on the scroll wheel SW (S106). In addition, when the scroll wheel SW is displayed on the display screen of the display unit 5, the scroll wheel processing unit 23 stores coordinate information indicating a display range of the displayed scroll wheel SW in the information storage medium 25 as described below. The scroll wheel processing unit 23 determines whether or not the touch input manipulation is the manipulation on the scroll wheel SW by acquiring target coordinates of the touch input manipulation in step S105 from the manipulation content determination processing unit 12 and comparing the acquired target coordinates with the coordinate information indicating the display range of the scroll wheel SW.

In the case of determining that the touch input manipulation in step S106 is not the manipulation on the scroll wheel SW, the manipulation content determination processing unit 12 acquires information about coordinate change amounts ($\Delta$X2, $\Delta$Y2) of the second contact point dragged based on the touch input manipulation, and writes the information about the coordinate change amounts into the information storage medium 25 (S107). In addition, the manipulation content determination processing unit 12 acquires the information about the coordinate change amounts ($\Delta$X2, $\Delta$Y2) of the second contact point by acquiring the information about the coordinate change amounts ($\Delta$X2, $\Delta$Y2) of the second contact point based on coordinates (X2s, Y2s) before drag of the second contact point and coordinates (X2e, Y2e) after drag of the second contact point at the time when the second finger touches the display screen of the display unit 5.

In the case of determining that the touch input manipulation in step S106 is the manipulation on the scroll wheel SW, the scroll wheel processing unit 23 acquires a coordinate change angular amount ($\Delta\angle\alpha$) by drag by a change in the first drag start coordinates (X2s, Y2s) of the second contact point and the present drag end coordinates (X2e, Y2e) after drag by the touch input manipulation of step S 105, and writes information about the coordinates before and after the drag and the coordinate change angular amount into the information storage medium 25 (S108).

Also, in this step S108, the scroll wheel processing unit 23 acquires the contents of the manipulation using the scroll wheel SW, which is the touch input manipulation in step S106, from the manipulation content determination processing unit 12. The following manipulations correspond to the contents of the manipulation using the scroll wheel SW acquired from this manipulation content determination processing unit 12.

For example, a "touch input manipulation A" in which the second finger drags the display screen from the center toward the periphery of the scroll wheel SW in an oblique direction and is rotated clockwise (or counterclockwise) at a small rotational angle or a large rotational angle using a position after the drag as an initial point corresponds.

Also, a "touch input manipulation B" in which the second finger is rotated clockwise at a small rotational angle or a large rotational angle from the center toward the periphery of the scroll wheel SW corresponds.

Also, a "touch input manipulation C" in which the second finger is rotated counterclockwise at a small rotational angle or a large rotational angle from the center toward the periphery of the scroll wheel SW corresponds.

The scroll wheel processing unit 23 decides any of these touch input manipulation A, touch input manipulation B and touch input manipulation C by scroll direction determination processing (S110 to S116) by the first drag manipulation of the second finger described below, and acquires the contents of the manipulation using the scroll wheel SW, which is the touch input manipulation, from the manipulation content determination processing unit 12, and writes the scroll information into the information storage medium 25.

Concretely, when "scroll flag (Scroll_Fig) = oblique direction" is written into the information storage medium 25, the scroll wheel processing unit 23 decides that the touch input manipulation is the touch input manipulation A by the scroll direction determination processing of S110 to S116 described below. Further, the scroll wheel processing unit 23 preferably determines that a detailed direction of the oblique direction is a direction of an inclination of the coordinate change angular amount ($\Delta\angle\alpha$) determined by the first drag start coordinates (X2s, Y2s) of the second contact point in step S108 and the drag end coordinates (X2e, Y2e) after drag. For example, when the manipulation using the scroll wheel SW as shown in the state V of Fig. 21 is performed, the scroll wheel processing unit 23 determines that an oblique left upper direction is the scroll direction, and writes "scroll flag (Scroll_Fig) = oblique left upper direction" into the information storage medium 25. Also, when the manipulation using the scroll wheel SW as shown in the state W of Fig. 21 is performed, the scroll wheel processing unit 23 determines that an oblique right lower direction is the scroll direction, and writes "scroll flag (Scroll_Flg) = oblique right lower direction" into the information storage medium 25.

Also, when "scroll flag (Scroll_Flg) = horizontal direction or vertical direction" is written into the information storage medium 25, the scroll wheel processing unit 23 decides that the touch input manipulation is the touch input manipulation B or the touch input manipulation C by the scroll direction determination processing of S110 to S116 described below.

Also, the scroll wheel processing unit 23 determines that the scroll direction is a horizontal right direction or a vertical lower direction according to the touch input manipulation B, and writes "scroll flag (Scroll_Flg) = horizontal right direction" or "scroll flag (Scroll_Flg) = vertical lower direction" into the information storage medium 25. In determination of either the horizontal right direction or the vertical lower direction, when "scroll flag (Scroll_Flg) = horizontal direction" is written into the information storage medium 25, it is determined that the scroll direction is the horizontal right direction and when "scroll flag (Scroll_Flg) = vertical direction" is written into the information storage medium 25, it is determined that the scroll direction is the vertical lower direction by the scroll direction determination processing of S110 to S116 described below.

Also, the scroll wheel processing unit 23 determines that the scroll direction is a horizontal left direction or a vertical upper direction according to the touch input manipulation C, and writes "scroll flag (Scroll_Flg) = horizontal left direction" or "scroll flag (Scroll_Flg) = vertical upper direction" into the information storage medium 25. In determination of either the horizontal left direction or the vertical upper direction, when "scroll flag (Scroll_Flg) = horizontal direction" is written into the information storage medium 25, it is determined that the scroll direction is the horizontal left direction and when "scroll flag (Scroll_Flg) = vertical direction" is written into the information storage medium 25, it is determined that the scroll direction is the vertical upper direction by the scroll direction determination processing of S 110 to S116 described below.

After step S107 or step S108, the manipulation content determination processing unit 12 determines whether or not drag of the second finger is the first drag, that is, the initial flag is "1" (S109). In the case of determining that the drag of the second finger is the first drag, a fixed area determination processing unit 15 determines a scroll direction with respect to an image displayed in the outside NF of the fixed area excluding the predetermined fixed area F including the first contact point from the whole display screen of the display unit 5 and including the second contact point according to coordinates of the second contact point by the second finger with respect to the display screen, a direction and a distance of drag from the second contact point (S110).

In the case of determining that the scroll direction in step S110 is the oblique direction, the fixed area determination processing unit 15 determines that scrolling is performed in the oblique direction with respect to the image of the outside NF of the fixed area including the second contact point according to the drag of the second finger, and also determines that a predetermined rectangular area including the first contact point is the fixed area F (S111). Simultaneously, the fixed area determination processing unit 15 determines that a display area excluding the fixed area F from the whole display screen of the display unit 5 and including the second contact point of the second finger is the outside NF of the fixed area (S111).

Further, a fixed area display processing unit 16 generates a fixed image displayed in the fixed area determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S111). The fixed area determination processing unit 15 writes information to the effect that "scroll flag (Scroll_Flg) = oblique direction" into the information storage medium 25 (S112).

In the case of determining that the scroll direction in step S110 is only the horizontal direction, the fixed area determination processing unit 15 determines that scrolling is performed in the horizontal direction with respect to the image of the outside NF of the fixed area including the second contact point according to the drag ofthe second finger, and also determines that a predetermined rectangular area including the first contact point is the fixed area F (S113). Simultaneously, the fixed area determination processing unit 15 determines that a display area excluding the fixed area F from the whole display screen of the display unit 5 and including the second contact point of the second finger is the outside NF of the fixed area (S 113).

Further, the fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S113). The fixed area determination processing unit 15 writes information to the effect that "scroll flag (Scroll_Flg) = horizontal direction" into the information storage medium 25 (S114).

In the case of determining that the scroll direction in step S110 is only the vertical direction, the fixed area determination processing unit 15 determines that scrolling is performed in the vertical direction with respect to the image of the outside NF of the fixed area including the second contact point according to the drag of the second finger, and also determines that a predetermined rectangular area including the first contact point is the fixed area F (S115). Simultaneously, the fixed area determination processing unit 15 determines that a display area excluding the fixed area F from the whole display screen of the display unit 5 and including the second contact point of the second finger is the outside NF of the fixed area (S115).

Further, the fixed area display processing unit 16 generates a fixed image displayed in the fixed area determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S115). The fixed area determination processing unit 15 writes information to the effect that "scroll flag (Scroll_Flg) = vertical direction" into the information storage medium 25 (S116).

After the scroll flag is written into the information storage medium 25 in step S112, step S114 or step S116, the manipulation content determination processing unit 12 updates information about the initial flag by writing information to the effect that "initial flag = 0" into the information storage medium 25 (S117).

After information about the initial flag is updated in step S 117, in the case of determining that a touch input manipulation in which the second finger drags a certain position in the outside NF of the fixed area of the display screen of the display unit 5 in a predetermined direction by a predetermined distance is performed, the scroll wheel processing unit 23 determines whether or not the touch input manipulation is a manipulation on the scroll wheel SW in Fig. 22 (S118).

In the case of determining that the touch input manipulation in step S118 is not the manipulation on the scroll wheel SW, according to the scroll flag stored in the information storage medium 25 (S119), the fixed area outside display processing unit 17 generates and displays a scrolled image in which an image displayed in the outside NF of the fixed area just before the drag of the second finger is scrolled in the scroll direction determined by the fixed area determination processing unit 15 (S120 to S122).

Concretely, when the scroll flag indicates the oblique direction, the fixed area outside display processing unit 17 generates the scrolled image in which the image displayed in the outside NF of the fixed area just before the drag of the second finger is scrolled in the oblique direction, and outputs the generated scrolled image to the display image generating unit 18. The display image generating unit 18 outputs the scrolled image to the display control unit 19, and the display control unit 19 displays the scrolled image on the display screen of the display unit 5 (S120).

Also, when the scroll flag indicates the horizontal direction, the fixed area outside display processing unit 17 generates the scrolled image in which the image displayed in the outside NF of the fixed area just before the drag of the second finger is scrolled in the horizontal direction, and outputs the generated scrolled image to the display image generating unit 18. The display image generating unit 18 outputs the scrolled image to the display control unit 19, and the display control unit 19 displays the scrolled image on the display screen of the display unit 5 (S121).

Also, when the scroll flag indicates the vertical direction, the fixed area outside display processing unit 17 generates the scrolled image in which the image displayed in the outside NF of the fixed area just before the drag of the second finger is scrolled in the vertical direction, and outputs the generated scrolled image to the display image generating unit 18. The display image generating unit 18 outputs the scrolled image to the display control unit 19, and the display control unit 19 displays the scrolled image on the display screen of the display unit 5 (S 122).

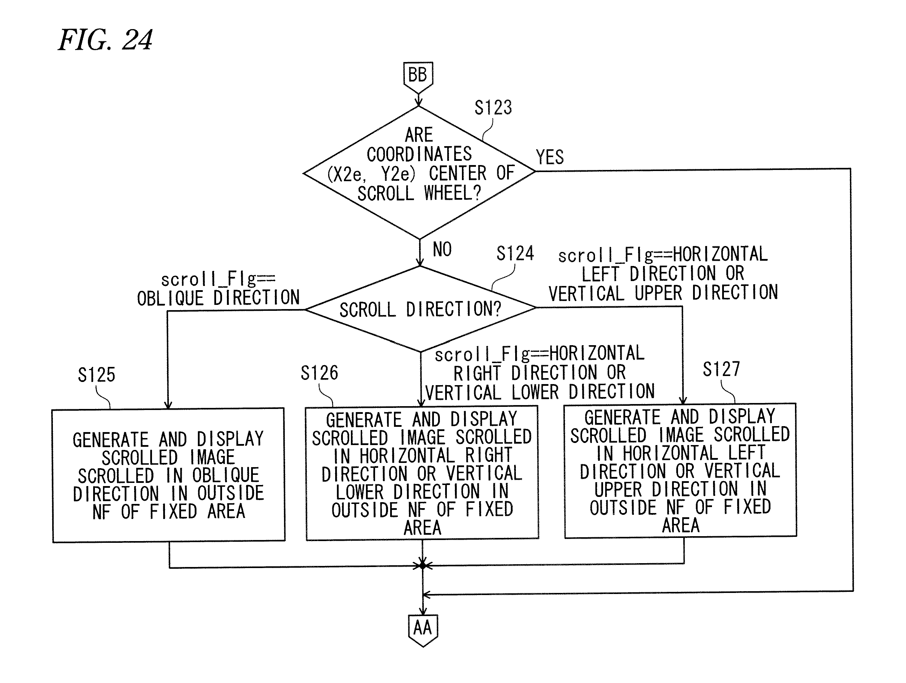

In the case of determining that the touch input manipulation in step S118 is the manipulation on the scroll wheel SW, the scroll wheel processing unit 23 determines whether or not the touch input manipulation is a manipulation of dragging toward the center of the scroll wheel SW in Fig. 24 (S123). Concretely, the scroll wheel processing unit 23 determines whether or not coordinates (X2e, Y2e) after drag of the second contact point by the touch input manipulation in step S118 are substantially the same as coordinates of the center of the scroll wheel (S123).

In the case of determining that the coordinates (X2e, Y2e) after drag of the second contact point by the touch input manipulation in step S123 are substantially the same as the coordinates of the center of the scroll wheel SW, according to the scroll flag stored in the information storage medium 25 (S124), the scroll wheel processing unit 23 generates and displays a scrolled image in which an image displayed in the outside NF of the fixed area just before the drag of the second finger on the scroll wheel SW is scrolled in the scroll direction corresponding to the scroll flag (S125 to S127).

Concretely, in step S124, the scroll wheel processing unit 23 refers to the information storage medium 25 in which the scroll flag determined in step S108 is stored, and determines a scroll direction corresponding to the scroll flag stored in the information storage medium 25 (S124).

The scroll wheel processing unit 23 instructs the fixed area outside display processing unit 17 to generate a scrolled image in which the scrolled image displayed in the outside NF of the fixed area is scrolled at a scroll speed S2 according to a rotational angle by the touch input manipulation of step S118 in an oblique direction which is the scroll direction determined in step S124 (for example, an oblique left upper direction in the case of performing the manipulation on the scroll wheel SW as shown in the state V of Fig. 21, or an oblique right lower direction in the case of performing the manipulation on the scroll wheel SW as shown in the state W of Fig. 21) (S125).

The fixed area outside display processing unit 17 generates the scrolled image in which the scrolled image displayed in the display area of the outside NF of the fixed area is scrolled at the scroll speed S2 according to the rotational angle in the oblique direction based on the instructions by the scroll wheel processing unit 23 (S125). The fixed area outside display processing unit 17 outputs the generated scrolled image to the display image generating unit 18 (S125). The display image generating unit 18 outputs the outputted scrolled image to the display control unit 19 (S125). The display control unit 19 displays the outputted scrolled image on the display screen of the display unit 5 (S125).

Also, the scroll wheel processing unit 23 instructs the fixed area outside display processing unit 17 to generate a scrolled image in which the scrolled image displayed in the outside NF of the fixed area is scrolled at the scroll speed S2 according to the rotational angle by the touch input manipulation of step S118 in a horizontal right direction or a vertical lower direction which is the scroll direction determined in step S124 (S126).

The fixed area outside display processing unit 17 generates the scrolled image in which the scrolled image displayed in the display area of the outside NF of the fixed area is scrolled at the scroll speed S2 according to the rotational angle in the horizontal right direction or the vertical lower direction based on the instructions by the scroll wheel processing unit 23 (S 126). The fixed area outside display processing unit 17 outputs the generated scrolled image to the display image generating unit 18 (S126). The display image generating unit 18 outputs the outputted scrolled image to the display control unit 19 (S126). The display control unit 19 displays the outputted scrolled image on the display screen of the display unit 5 (S 126).

Also, the scroll wheel processing unit 23 instructs the fixed area outside display processing unit 17 to generate a scrolled image in which the scrolled image displayed in the outside NF of the fixed area is scrolled at the scroll speed S2 according to the rotational angle by the touch input manipulation of step S118 in a horizontal left direction or a vertical upper direction which is the scroll direction determined in step S124 (S127).

The fixed area outside display processing unit 17 generates the scrolled image in which the scrolled image displayed in the display area of the outside NF of the fixed area is scrolled at the scroll speed S2 according to the rotational angle in the horizontal left direction or the vertical upper direction based on the instructions by the scroll wheel processing unit 23 (S127). The fixed area outside display processing unit 17 outputs the generated scrolled image to the display image generating unit 18 (S127). The display image generating unit 18 outputs the outputted scrolled image to the display control unit 19 (S 127). The display control unit 19 displays the outputted scrolled image on the display screen of the display unit 5 (S127).

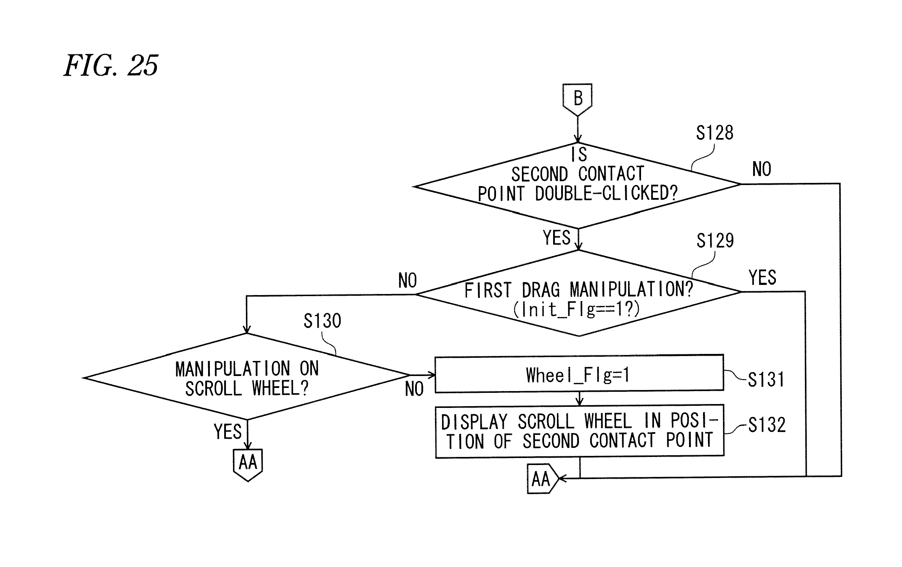

After the scrolled image is displayed according to any of step S125 to step S127, the scroll wheel processing unit 23 determines whether or not to perform a touch input manipulation in which the second finger double-clicks the outside NF of the fixed area in a state in which the first finger touches the fixed area F in Fig. 25 (S128).

In the case of determining that the touch input manipulation in step S128 is performed, the scroll wheel processing unit 23 determines whether or not the first drag manipulation is performed, that is, the initial flag is "1" (S129).

The scroll wheel processing unit 23 determines whether or not the touch input manipulation in step S 128 is a manipulation using the scroll wheel SW (S 130). In the case of determining that the touch input manipulation in step S130 is not the manipulation using the scroll wheel SW, the scroll wheel processing unit 23 writes information to the effect that "wheel flag = 1" into the information storage medium 25 (S131), and displays the scroll wheel SW around the second finger of the outside NF of the fixed area double-clicked by the second finger (S132).

In addition, when the second finger touches the outside NF of the fixed area and newly drags the outside NF of the fixed area in a predetermined direction by a predetermined distance in a state in which the first finger touches the fixed area F, the operations of steps S101 to S132 described above are repeated.

As described above, the mobile telephone 10c of the fourth embodiment determines that a predetermined rectangular area including the first contact point at which the first finger touches an image displayed on the display screen of the display unit 5 is the fixed area F in the whole image, and determines that a display area excluding the fixed area F in the whole image and including the second contact point at which the second finger touches the image is the outside NF of the fixed area.

Further, the mobile telephone 10c generates a fixed image with the predetermined rectangular area determined as the fixed area F, and generates a scrolled image in which an image displayed in the display area determined as the outside NF of the fixed area is scrolled in the scroll direction determined according to coordinates of the second contact point with respect to the display screen of the display unit 5, a direction and a distance of drag of the second finger. The mobile telephone 10 displays a combined image obtained by combining the generated fixed image with the scrolled image on the display screen of the display unit 5.

Further, the mobile telephone 10c displays the scroll wheel SW in the outside NF of the fixed area when the second finger double-clicks the outside NF of the fixed area. The mobile telephone 10c generates and displays a scrolled image in which the scrolled image displayed in the outside NF of the fixed area is scrolled at the scroll speed S2 according to the rotational angle in the case of performing a touch input manipulation of drag in a predetermined direction or rotation in a right or left direction on this scroll wheel SW.

Consequently, according to the mobile telephone 10c of the fourth embodiment, a part of the area in the contents displayed on the display screen can be fixed and also the other area of the outside of a target of fixing in the display screen can be scrolled according to an intuitive and simple manipulation. As a result, a user can manipulate the scroll direction with respect to the image displayed in the outside NF of the fixed area or a display split place or a fixed place of the image displayed on the display screen of the display unit 5 by the intuitive and simple manipulation of touch and drag of the fingers, and can easily implement selection of the fixed area F and scrolling of the outside NF of the fixed area by only the manipulation of at least two fingers.

Further, according to the mobile telephone 10c, the scroll direction and the scroll speed can be defined to suit preferences of the user by a visibly intuitive manipulation in which the scroll direction with respect to the scrolled image displayed in the outside NF of the fixed area is only a direction of operation of the finger on the scroll wheel SW and the scroll speed S2 corresponds to an angle of movement to the periphery of the scroll wheel. As a result, according to the mobile telephone 10c, a load of frequent drag manipulations of the finger of the scroll side can be reduced.

(MODIFIED EXAMPLE 1 OF FOURTH EMBODIMENT)

13. CONFIGURATION OF MOBILE TELEPHONE 10C1 OF MODIFIED EXAMPLE 1 OF FOURTH EMBODIMENT

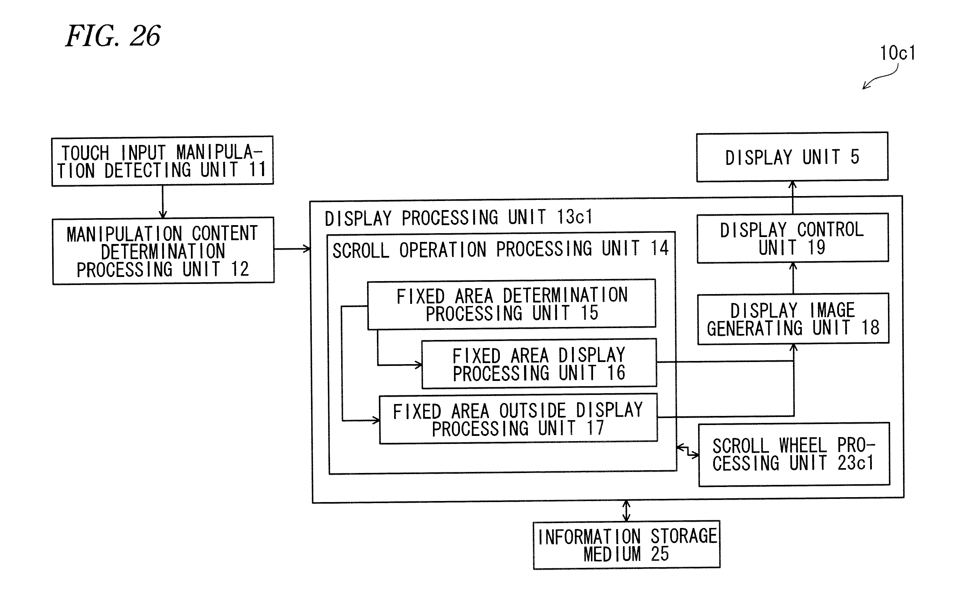

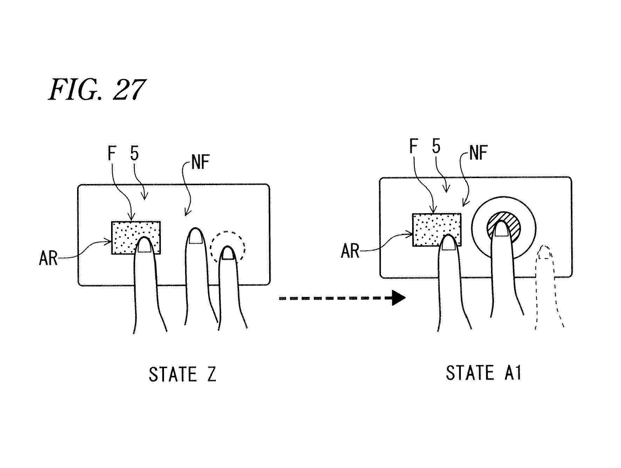

Fig. 26 is an explanatory diagram describing an outline of operation of the mobile telephone 10c1 of the modified example 1 of the fourth embodiment. The mobile telephone 10c1 of the modified example 1 of the fourth embodiment is configured to replace the scroll wheel processing unit 23 of the mobile telephone 10c of the fourth embodiment shown in Fig. 26 with a scroll wheel processing unit 23c1. The scroll wheel processing unit 23c1 further includes a function of displaying a scroll wheel SW in the scroll wheel processing unit 23 of the fourth embodiment. The function of displaying the scroll wheel SW will be described with reference to Fig. 27.

14. OUTLINE OF OPERATION OF SCROLL WHEEL PROCESSING UNIT 23C1

A difference between the scroll wheel processing unit 23c1 and the scroll wheel processing unit 23 in an outline of operation of the scroll wheel processing unit 23c1 will be described with reference to Fig. 27. Fig. 27 is an explanatory diagram showing one example of a touch input manipulation using the scroll wheel SW in the modified example 1 of the fourth embodiment. In addition, in Fig. 27, "the index finger" of a user is described as a first finger and "the middle finger" is described as a second finger and "the ring finger" is described as a third finger.

In a state Z of Fig. 27, on a display unit 5, a fixed image is displayed within a range AR of a predetermined rectangular area showing a fixed area F touched by the first finger, and a scrolled image scrolled is displayed in the outside NF of the fixed area which is a display area excluding the fixed area F from the whole display screen and including a second contact point touched by the second finger.

The scroll wheel processing unit 23c1 determines whether or not to perform a touch input manipulation in which the third finger double-clicks or clicks a certain position in the outside NF of the fixed area in this state Z. In the case of determining that the touch input manipulation is performed, the scroll wheel processing unit 23c1 displays the concentric scroll wheel SW respectively having diameters with predetermined lengths around a position touched by the second finger as shown in a state A1. The lengths of the respective diameters of this scroll wheel SW are preferably predefined in operation of the scroll wheel processing unit 23c1 or an information storage medium 25. In addition, in the modified example 1 of the fourth embodiment, when a touch input manipulation in which the first finger touches the fixed area and the second finger touches the outside of the fixed area and the third finger double-clicks or clicks the outside of the fixed area is a manipulation using the scroll wheel SW, the scroll wheel processing unit 23c1 writes information to the effect that "wheel flag = 1" into the information storage medium 25. Also, it is preferable that the third finger should not touch the display screen of the display unit 5 after the third finger double-clicks or clicks the outside of the fixed area.

15. EXPLANATION ABOUT OPERATION OF MOBILE TELEPHONE 10C1 OF MODIFIED EXAMPLE 1 OF FOURTH EMBODIMENT

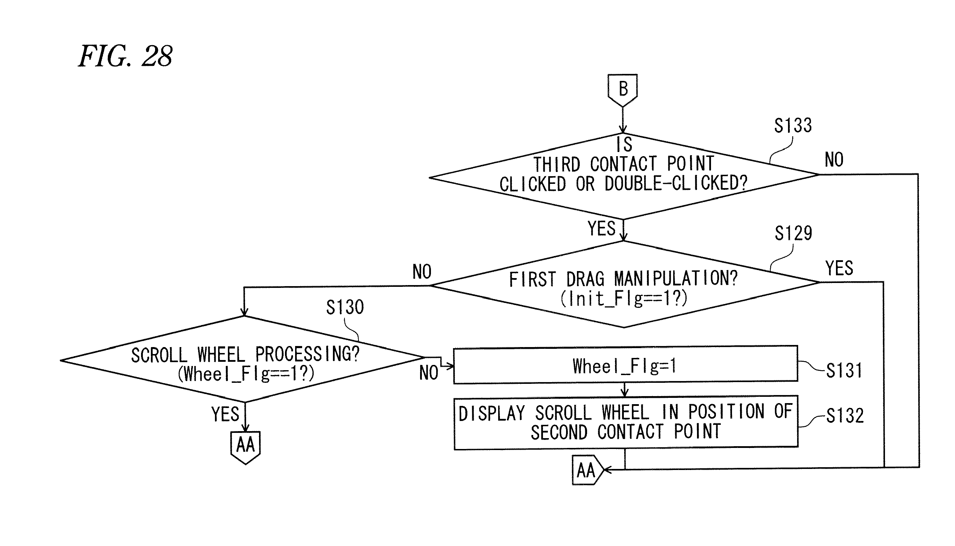

Fig. 28 is a flowchart describing a part of the operation of the scroll wheel processing unit 23c1 of the mobile telephone 10c1 in the modified example 1 of the fourth embodiment. In addition, the mobile telephone 10c1 implements the contents of operation shown in Figs. 22, 23 and 24 and also implements the contents of operation shown in Fig. 28 with which the contents of operation shown in Fig. 25 are replaced. That is, the mobile telephone 10c1 implements the contents of operation shown in Figs. 22, 23, 24 and 28. Consequently, explanation about the contents of operation shown in Figs. 22, 23 and 24 is given in the fourth embodiment, so that explanation about the contents is omitted.

In Fig. 28, the scroll wheel processing unit 23c1 determines whether or not to perform a touch input manipulation in which the first finger touches the fixed area F and the second finger touches the outside NF of the fixed area and the third finger double-clicks or clicks the outside NF of the fixed area (S133). In the case of determining that the touch input manipulation is performed, the scroll wheel processing unit 23c1 determines whether or not the first drag manipulation is performed, that is, an initial flag is "1" (S129).

The scroll wheel processing unit 23c1 determines whether or not the touch input manipulation in which the third finger double-clicks or clicks the outside of the fixed area in step S133 is a manipulation using the scroll wheel, that is, the wheel flag is "1" (S130). In the case of determining that the touch input manipulation in step S130 is not the manipulation using the scroll wheel, the scroll wheel processing unit 23c1 writes information to the effect that "wheel flag = 1" into the information storage medium 25 (S131), and displays the scroll wheel SW in any position of the outside NF of the fixed area double-clicked or clicked by the third finger (S132). However, the scroll wheel processing unit 23c1 preferably displays the scroll wheel around the second contact point touched by the second finger.

Consequently, according to the mobile telephone 10c1 of the modified example 1 of the fourth embodiment, the scroll wheel SW can be displayed on the display screen of the display unit 5 as means equivalent to the scroll wheel processing unit 23 of the fourth embodiment by an intuitive and simple manipulation in which the first finger touches the fixed area F and the second finger touches the outside NF of the fixed area and the third finger double-clicks or clicks the outside NF of the fixed area.

(MODIFIED EXAMPLE 2 OF FOURTH EMBODIMENT)

16. CONFIGURATION OF MOBILE TELEPHONE 10C2 OF MODIFIED EXAMPLE 2 OF FOURTH EMBODIMENT

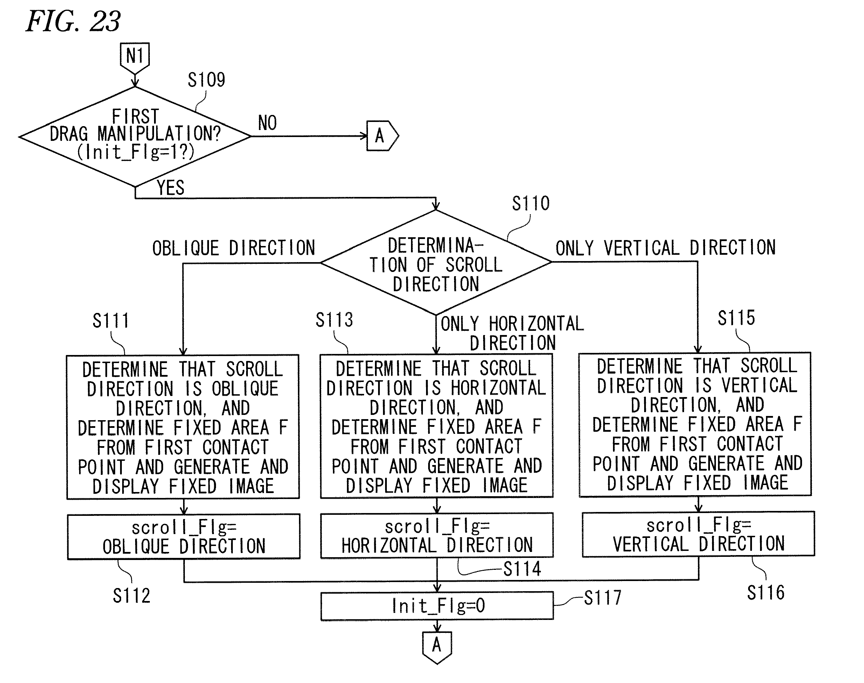

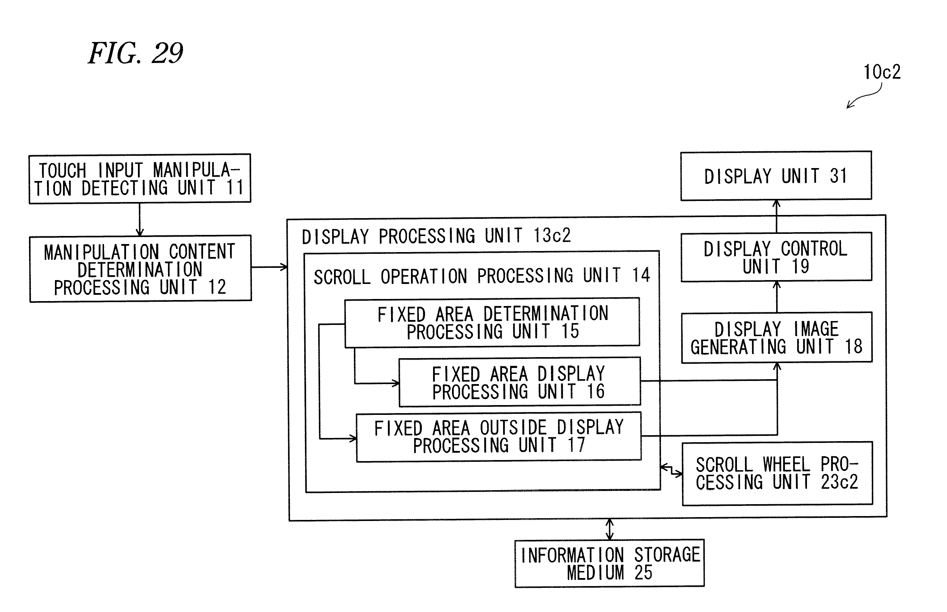

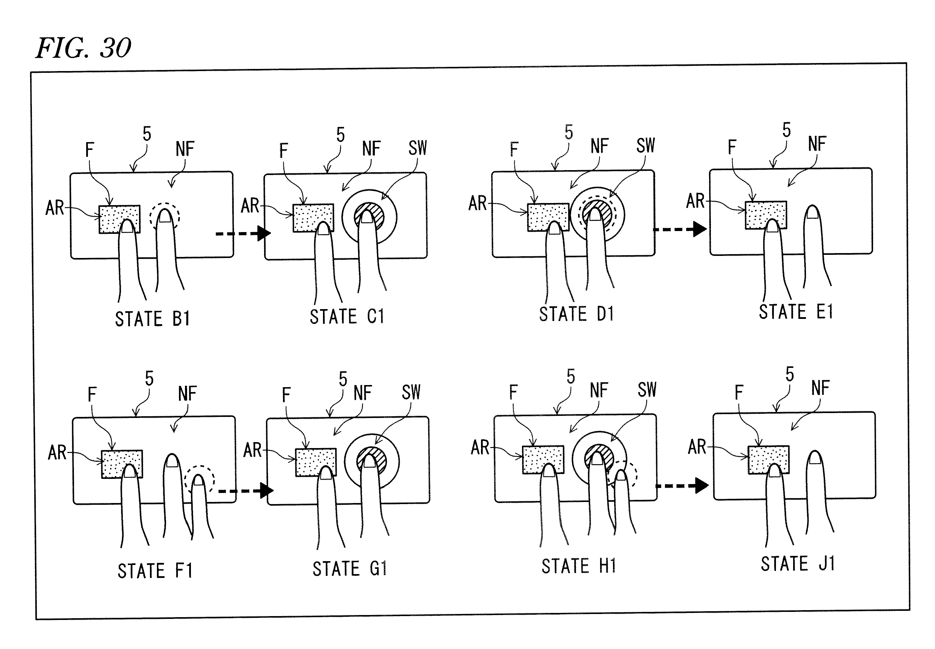

Fig. 29 is an explanatory diagram describing an outline of operation of the mobile telephone 10c2 of the modified example 2 of the fourth embodiment. The mobile telephone 10c2 of the modified example 2 of the fourth embodiment is configured to replace the scroll wheel processing unit 23 of the mobile telephone 10c of the fourth embodiment shown in Fig. 23 or the scroll wheel processing unit 23c1 of the mobile telephone 10c1 of the modified example 1 of the fourth embodiment shown in Fig. 26 with a scroll wheel processing unit 23c2. The scroll wheel processing unit 23c2 further includes a function of hiding a scroll wheel in the scroll wheel processing unit 23 of the mobile telephone 10c of the fourth embodiment or the scroll wheel processing unit 23c1 of the modified example 1 of the fourth embodiment. The function of hiding the scroll wheel SW will be described with reference to Fig. 30.

17. OUTLINE OF OPERATION OF SCROLL WHEEL PROCESSING UNIT 23C2

A difference between the scroll wheel processing unit 23c2 and the scroll wheel processing unit 23 or the scroll wheel processing unit 23c1 in an outline of operation of the scroll wheel processing unit 23c2 will be described with reference to Fig. 30. Fig. 30 is an explanatory diagram showing one example of a touch input manipulation using the scroll wheel SW in the modified example 2 of the fourth embodiment. In addition, in Fig. 30, "the index finger" of a user is described as a first finger and "the middle finger" is described as a second finger and "the ring finger" is described as a third finger.

In a state B1 of Fig. 30, on a display unit 5, a fixed image is displayed within a range AR of a predetermined rectangular area showing a fixed area F touched by the first finger, and a scrolled image scrolled is displayed in the outside NF of the fixed area which is a display area excluding the fixed area F from the whole display screen and including a second contact point touched by the second finger.

The scroll wheel processing unit 23c2 determines whether or not to perform a touch input manipulation in which the second finger double-clicks a certain position in the outside NF of the fixed area in this state B1. In the case of determining that the touch input manipulation is performed, the scroll wheel processing unit 23c2 displays the concentric scroll wheel SW respectively having diameters with predetermined lengths around a position touched by the second finger as shown in a state C1. The lengths of the respective diameters of this scroll wheel SW are preferably predefined in operation of the scroll wheel processing unit 23c2 or an information storage medium 25. Also, it is preferable that the second finger should touch the display screen of the display unit 5 after the second finger double-clicks the outside of the fixed area.

In a state F1 of Fig. 30, on the display unit 5, a fixed image is displayed within a range AR of a predetermined rectangular area showing a fixed area F touched by the first finger, and a scrolled image scrolled is displayed in the outside NF of the fixed area which is a display area excluding the fixed area F from the whole display screen and including a second contact point touched by the second finger.

The scroll wheel processing unit 23c2 determines whether or not to perform a touch input manipulation in which the third finger double-clicks or clicks a certain position in the outside NF of the fixed area in this state F1. In the case of determining that the touch input manipulation is performed, the scroll wheel processing unit 23c2 displays the concentric scroll wheel SW respectively having diameters with predetermined lengths around a position touched by the second finger as shown in a state G1. The lengths of the respective diameters of this scroll wheel SW are preferably predefined in operation of the scroll wheel processing unit 23c2 or the information storage medium 25. Also, it is preferable that the third finger should not touch the display screen of the display unit 5 after the third finger double-clicks or clicks the outside of the fixed area.

Also, the scroll wheel processing unit 23c2 determines whether or not to perform a touch input manipulation in which the second finger double-clicks the scroll wheel SW in a state D1. In the case of determining that the touch input manipulation is performed, the scroll wheel processing unit 23c2 hides the scroll wheel SW displayed in the state D1 as shown in a state E1. Also, it is preferable that the second finger should touch the display screen of the display unit 5 after the second finger double-clicks the scroll wheel SW.

Also, the scroll wheel processing unit 23c2 determines whether or not to perform a touch input manipulation in which the third finger double-clicks or clicks a certain position in the outside NF of the fixed area in a state H1. In the case of determining that the touch input manipulation is performed, the scroll wheel processing unit 23c2 hides the scroll wheel SW displayed in the state H1 as shown in a state J1. Also, it is preferable that the third finger should not touch the display screen of the display unit 5 after the third finger double-clicks or clicks the outside of the fixed area.

In addition, in the modified example 2 of the fourth embodiment, the scroll wheel processing unit 23c2 writes information to the effect that "wheel flag = 1" into the information storage medium 25 when the scroll wheel SW is displayed. Also, the scroll wheel processing unit 23c2 writes information to the effect that "wheel flag = 0" into the information storage medium 25 when the scroll wheel SW is hidden.

18. EXPLANATION ABOUT OPERATION OF MOBILE TELEPHONE 10C2 OF MODIFIED EXAMPLE 2 OF FOURTH EMBODIMENT

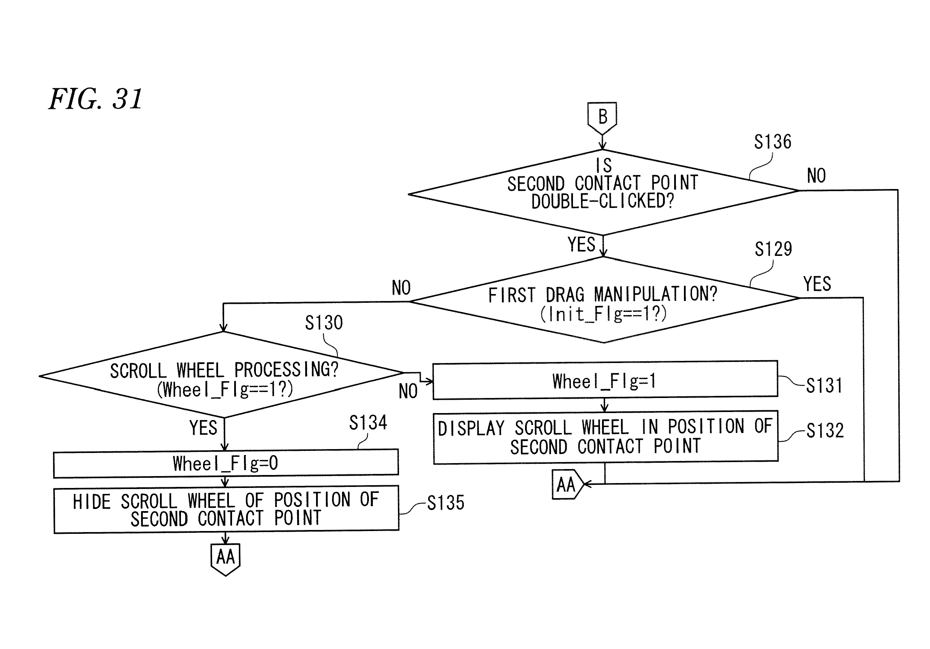

Fig. 31 is a flowchart describing a part of the operation of the scroll wheel processing unit 23c2 of the mobile telephone 10c2 in the case of displaying or hiding the scroll wheel SW by a touch input manipulation corresponding to the states B1, C1, D1 and E1 of Fig. 30 in the modified example 2 of the fourth embodiment, that is, the touch input manipulation in which the second finger double-clicks a certain position in the outside NF of the fixed area. In addition, the mobile telephone 10c2 in the case of the operation implements the contents of operation shown in Figs. 22, 23 and 24 and also implements the contents of operation shown in Fig. 31 with which the contents of operation shown in Fig. 25 are replaced. That is, the mobile telephone 10c2 implements the contents of operation shown in Figs. 22, 23, 24 and 31.

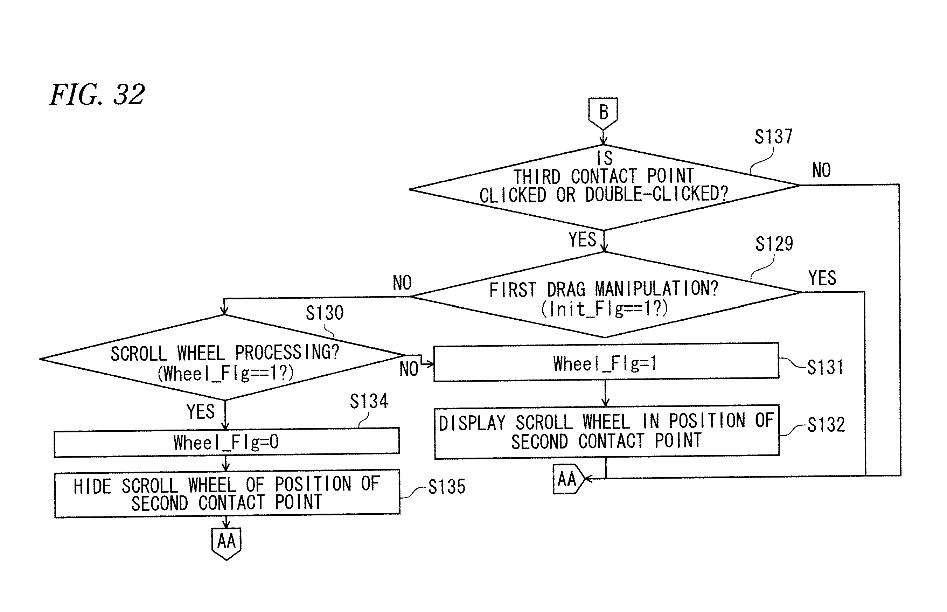

Fig. 32 is a flowchart describing a part of the operation of the scroll wheel processing unit 23c2 of the mobile telephone 10c2 in the case of displaying or hiding the scroll wheel SW by a touch input manipulation corresponding to the states F1, G1, H1 and J1 of Fig. 30 in the modified example 2 of the fourth embodiment, that is, the touch input manipulation in which the third finger double-clicks or clicks a certain position in the outside NF of the fixed area. In addition, the mobile telephone 10c2 in the case of the operation implements the contents of operation shown in Figs. 22, 23 and 24 and also implements the contents of operation shown in Fig. 31 with which the contents of operation shown in Fig. 28 are replaced. That is, the mobile telephone 10c2 implements the contents of operation shown in Figs. 22, 23, 24 and 32. Consequently, explanation about the contents of operation shown in Figs. 22, 23 and 24 is given in the fourth embodiment, so that explanation about the contents is omitted.

In Fig. 31 or 32, the scroll wheel processing unit 23c2 determines whether or not to perform a touch input manipulation in which the first finger touches the fixed area F and the second finger touches the outside NF of the fixed area and the second finger double-clicks a certain position in the outside NF of the fixed area (S135) or the third finger double-clicks or clicks the outside NF of the fixed area (S137) as shown in the state B1 or the state F1 of Fig. 30. In the case of determining that the touch input manipulation in step S135 or step S137 is performed, the scroll wheel processing unit 23c2 determines whether or not the first drag manipulation is performed, that is, an initial flag is "1" (S129).

In the case of determining that the initial flag is not "1" in step S129, the scroll wheel processing unit 23c2 determines whether or not the touch input manipulation in which the second finger double-clicks the outside of the fixed area in step S135 or the third finger double-clicks or clicks the outside of the fixed area in step S137 is a manipulation using the scroll wheel, that is, the wheel flag is "1" (S130). In the case of determining that the touch input manipulation is not the manipulation using the scroll wheel SW, the scroll wheel processing unit 23c2 writes information to the effect that "wheel flag = 1" into the information storage medium 25 (S131), and displays the scroll wheel SW in a certain position of the outside NF of the fixed area (S132). However, the scroll wheel processing unit 23 preferably displays the scroll wheel SW around the position touched by the second finger as shown in the state C1 or the state G1 of Fig. 30.

Also, the scroll wheel processing unit 23c2 determines whether or not to perform a touch input manipulation in which the second finger double-clicks the scroll wheel SW or the third finger double-clicks or clicks the scroll wheel SW as shown in the state C1 or the state G1 of Fig. 30 as the manipulation using the scroll wheel SW particularly in step S 130 (S 130).

In the case of determining that the touch input manipulation in step S130 is performed, the scroll wheel processing unit 23c2 writes information to the effect that "wheel flag = 0" into the information storage medium 25 (S134), and hides the scroll wheel SW displayed around the second contact point of the second finger as shown in the state D1 or the state H1 of Fig. 30 as shown in the state E1 or the state J1 of Fig. 30 (S 135).

Consequently, according to the mobile telephone 10c2 of the modified example 2 of the fourth embodiment, the scroll wheel SW can be displayed as means equivalent to the scroll wheel processing unit 23 of the fourth embodiment by an intuitive and simple manipulation in which the first finger touches the fixed area F and the second finger double-clicks the outside NF of the fixed area in a state in which the scroll wheel is not displayed.

Also, according to the mobile telephone 10c2, the scroll wheel SW can be displayed as the means equivalent to the scroll wheel processing unit 23 of the fourth embodiment by an intuitive and simple manipulation in which the first finger touches the fixed area F and the second finger touches the outside NF of the fixed area and the third finger double-clicks or clicks the outside NF of the fixed area in a state in which the scroll wheel SW is not displayed.

Also, according to the mobile telephone 10c2, the scroll wheel SW can be hidden by an intuitive and simple manipulation in which the first finger touches the fixed area F and the second finger double-clicks the scroll wheel SW displayed in the outside NF of the fixed area in a state in which the scroll wheel SW is displayed.

Also, according to the mobile telephone 10c2, the scroll wheel SW can be hidden by an intuitive and simple manipulation in which the first finger touches the fixed area F and the second finger touches the outside NF of the fixed area and the third finger double-clicks or clicks the outside NF of the fixed area in a state in which the scroll wheel SW is displayed.

(FIFTH EMBODIMENT)

19. EXPLANATION ABOUT CONFIGURATION OF MOBILE TELEPHONE 10D OF FIFTH EMBODIMENT

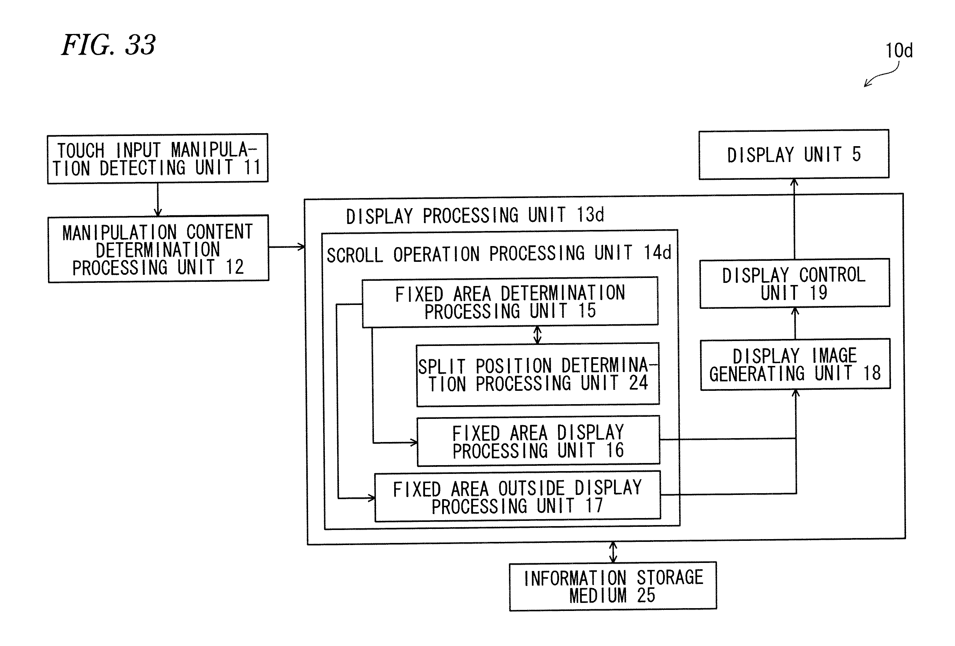

Fig. 33 is a block diagram showing an internal configuration of the mobile telephone 10d which is one example of an electronic apparatus of the invention. As shown in Fig. 33, the mobile telephone 10d includes a display processing unit 13d having a scroll operation processing unit 14d further including a split position determination processing unit 24 in the scroll operation processing unit 14 of the mobile telephone 10 of the first embodiment. Since the other configuration excluding this split position determination processing unit 24 is the same as that of the mobile telephone 10 of the first embodiment, explanation about the same contents is omitted.

20. EXPLANATION ABOUT OUTLINE OF OPERATION OF SPLIT POSITION DETERMINATION PROCESSING UNIT 24

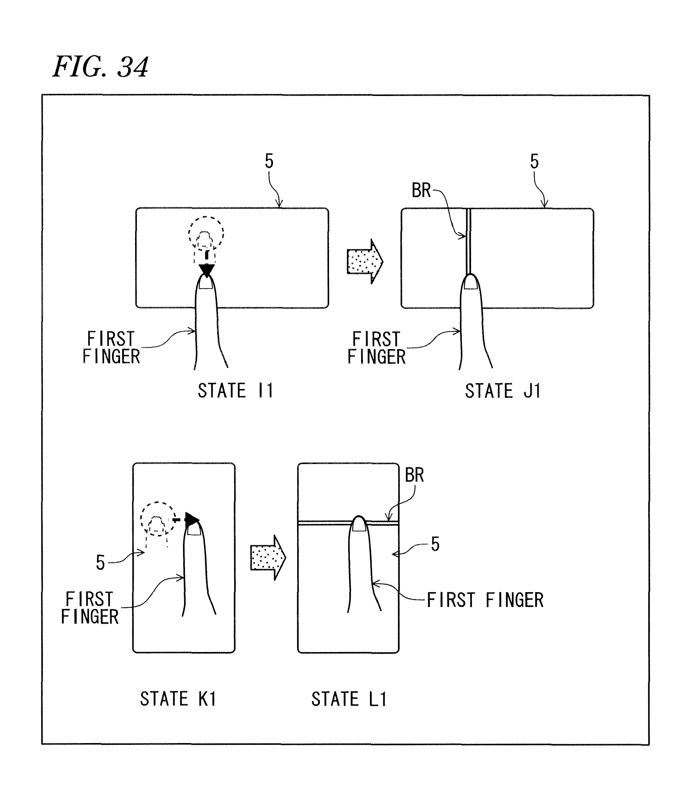

Fig. 34 is an explanatory diagram showing one example of a touch input manipulation in the fifth embodiment, and shows one example at the time when a first finger drags a display screen of a display unit 5 in a horizontal direction or a vertical direction. In addition, in Fig. 34, an image browsing application operates on the display unit 5 of the mobile telephone 10d. In addition, image data stored in an information storage medium 25 is displayed on the display screen of the display unit 5 of the mobile telephone 10d shown in Fig. 34.

A state I1 of Fig. 34 shows a situation in which the first finger touches a certain position of the display screen of the display unit 5. The split position determination processing unit 24 determines whether or not to perform a touch input manipulation in which the first finger drags a first contact point touched by the first finger on the display screen of the display unit 5 in a vertical lower direction in the state I1. In the case of determining that the touch input manipulation is performed, the split position determination processing unit 24 displays a display split boundary line BR in the vertical lower direction in which the first finger drags the first contact point as shown in a state J1. Further, the split position determination processing unit 24 displays and splits the display screen of the display unit 5 into a fixed area F and the outside NF of the fixed area by the display split boundary line BR displayed. The split position determination processing unit 24 outputs information to the effect that the display screen is displayed and split to a fixed area determination processing unit 15. In addition, the split position determination processing unit 24 preferably together outputs information to the effect that the display split boundary line BR is included in the fixed area F to the fixed area determination processing unit 15.

When the display screen is displayed and split by the display split boundary line BR, based on information outputted by the split position determination processing unit 24, the fixed area determination processing unit 15 determines that a display area of a predetermined rectangular area including the first contact point touched by the first finger and including the display split boundary line BR in the state J1 is the fixed area F, and determines that a display area excluding the fixed area F in the whole display screen of the display unit 5 is the outside NF of the fixed area. Also, the split position determination processing unit 24 determines that a horizontal direction perpendicular to the vertical direction in which the display split boundary line BR is displayed is a scroll direction with respect to a scrolled image displayed in the outside NF of the fixed area.

On the other hand, a state K1 of Fig. 34 shows a situation in which the first finger touches a certain position of the display screen of the display unit 5. The split position determination processing unit 24 determines whether or not to perform a touch input manipulation in which the first finger drags the first contact point touched by the first finger on the display screen of the display unit 5 in a horizontal right direction in the state K1. In the case of determining that the touch input manipulation is performed, the split position determination processing unit 24 displays a display split boundary line BR in the horizontal right direction in which the first finger drags the first contact point as shown in a state L1. Further, the split position determination processing unit 24 displays and splits the display screen of the display unit 5 into a fixed area F and the outside NF of the fixed area by the display split boundary line BR displayed. The split position determination processing unit 24 outputs information to the effect that the display screen is displayed and split to the fixed area determination processing unit 15. The split position determination processing unit 24 preferably together outputs information to the effect that the display split boundary line BR is included in the fixed area F to the fixed area determination processing unit 15.

When the display screen is displayed and split by the display split boundary line BR, based on information outputted by the split position determination processing unit 24, the fixed area determination processing unit 15 determines that a display area of a predetermined rectangular area including the first contact point touched by the first finger and including the display split boundary line BR in the state L1 is the fixed area F, and determines that a display area excluding the fixed area F in the whole display screen of the display unit 5 is the outside NF of the fixed area. Also, the split position determination processing unit 24 determines that a vertical direction perpendicular to the horizontal direction in which the display split boundary line BR is displayed is a scroll direction with respect to a scrolled image displayed in the outside NF of the fixed area.

21. EXPLANATION ABOUT OPERATION OF MOBILE TELEPHONE 10D OF FIFTH EMBODIMENT

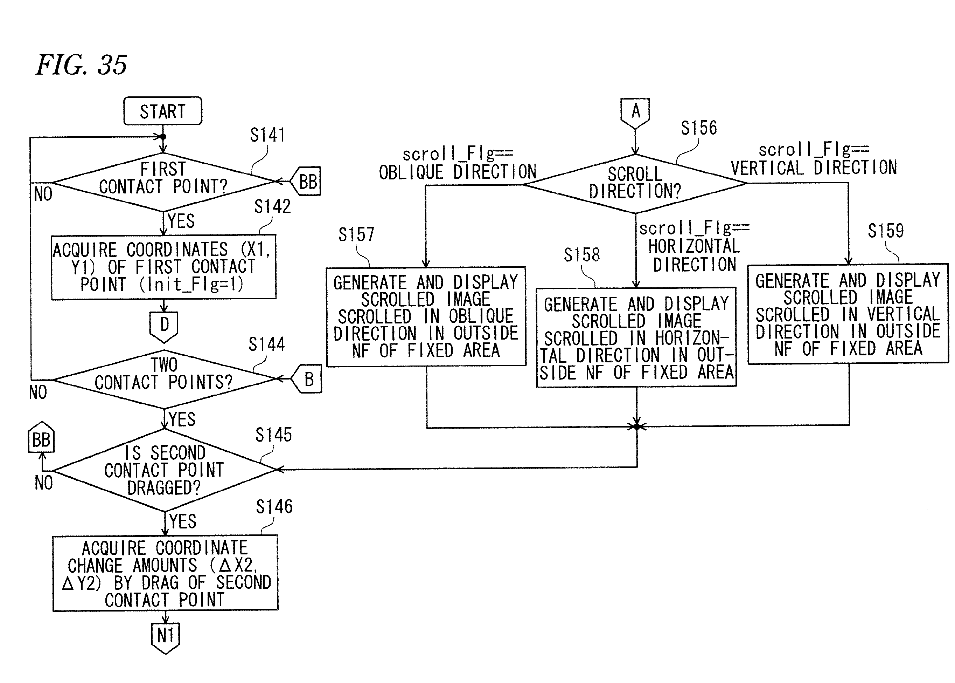

Figs. 35 to 37 are flowcharts showing operation of the mobile telephone 10d of the fifth embodiment, respectively. Also, prior to the following explanation, any image shall be previously displayed on the display screen of the display unit 5 of the mobile telephone 10d.

In Fig. 35, a manipulation content determination processing unit 12 determines whether or not to perform a touch input manipulation in which a first finger touches the display unit 5 (S141). In the case of determining that the touch input manipulation in step S141 is performed, the manipulation content determination processing unit 12 acquires information about coordinates (X1, Y1) of a first contact point touched by the first finger based on the touch input manipulation, and writes the information about coordinates of the first contact point and information to the effect that "initial flag (Init_Flg) = 1" into the information storage medium 25 (S142).

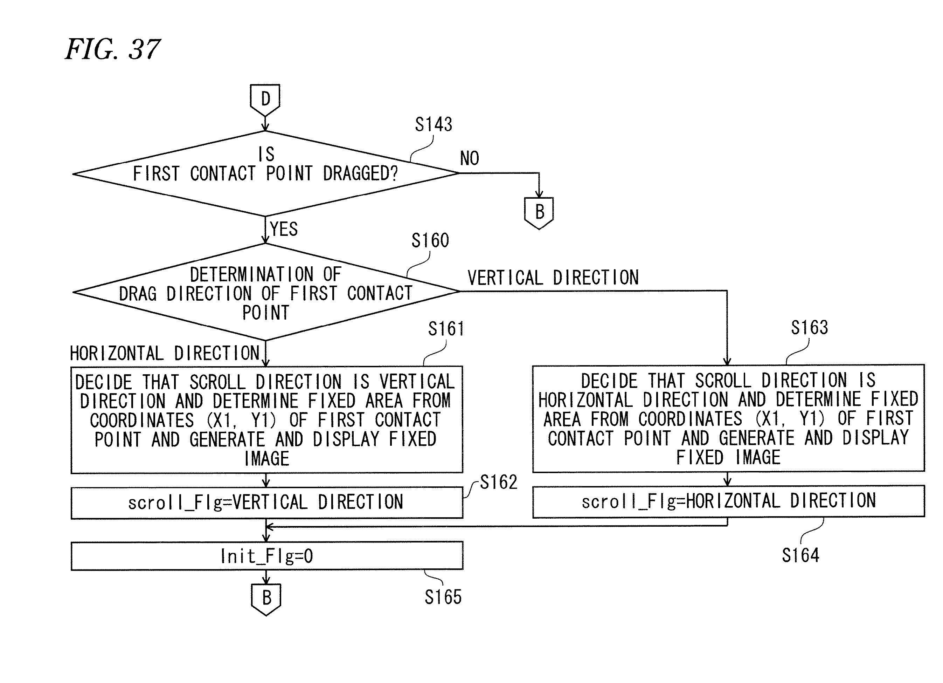

After the information to the effect that the initial flag is "1" is written into the information storage medium 25, the split position determination processing unit 24 determines whether or not to perform a touch input manipulation in which the first finger drags the first contact point touched by the first finger on the display screen of the display unit 5 in a predetermined direction by a predetermined distance in Fig. 37 (S143). In the case of determining that the touch input manipulation in step S143 is not performed, the manipulation content determination processing unit 12 determines whether or not to perform a touch input manipulation in which both of the first finger and the second finger touch the display screen of the display unit 5 (S 144).

In the case of determining that the touch input manipulation in step S144 is performed, the manipulation content determination processing unit 12 determines whether or not to perform a touch input manipulation in which the second finger touches the display unit 5 and then drags the display unit 5 in a predetermined direction by a predetermined distance (S145).

In the case of determining that the touch input manipulation in step S145 is performed, the manipulation content determination processing unit 12 acquires information about coordinate change amounts ($\Delta$X2, $\Delta$Y2) of the second contact point dragged based on the touch input manipulation, and writes the information about the coordinate change amounts into the information storage medium 25 (S146).

In addition, the manipulation content determination processing unit 12 acquires the information about the coordinate change amounts ($\Delta$X2, $\Delta$Y2) of the second contact point by acquiring the information about the coordinate change amounts ($\Delta$X2, $\Delta$Y2) of the second contact point based on coordinates (X2s, Y2s) before drag of the second contact point and coordinates (X2e, Y2e) after drag of the second contact point at the time when the second finger touches the display unit 5.

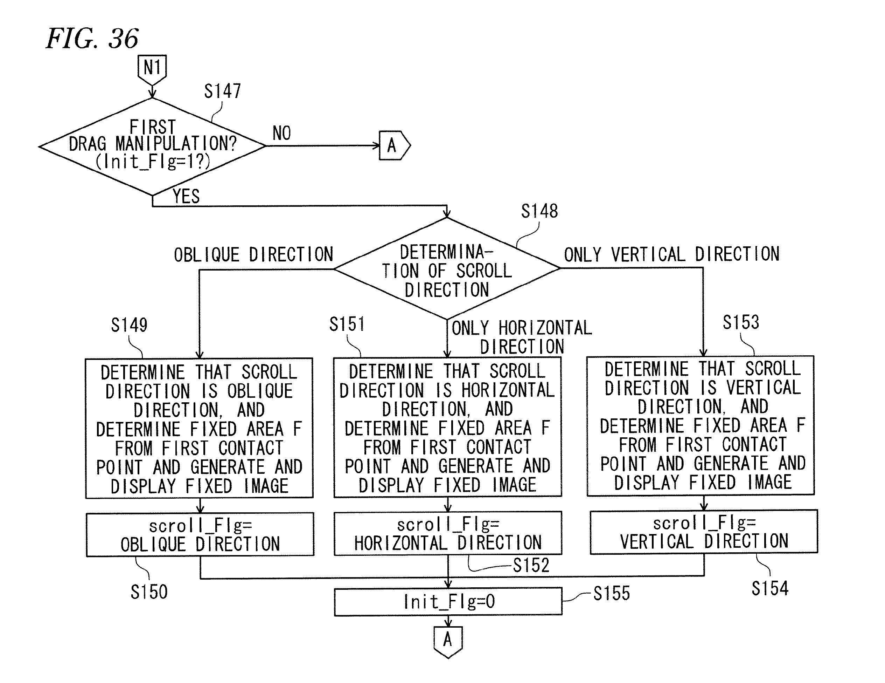

After the information about the coordinate change amounts ($\Delta$X2, $\Delta$Y2) of the second contact point is acquired in step S146, the manipulation content determination processing unit 12 determines whether or not drag of the second finger is the first drag, that is, the initial flag is "1" in Fig. 36 (S147). In the case of determining that the drag of the second finger is the first drag in step S147, the fixed area determination processing unit 15 determines a scroll direction with respect to an image displayed in the outside NF of the fixed area excluding the predetermined fixed area F including the first contact point from the whole display screen of the display unit 5 and including the second contact point according to coordinates of the second contact point by the second finger with respect to the display screen, a direction and a distance of drag from the second contact point (S148).

In addition, the fixed area determination processing unit 15 preferably determines the scroll direction of the image of the outside NF of the fixed area including the second contact point based on coordinates of the second contact point on the display screen of the display unit 5 and the coordinate change amounts ($\Delta$X2, $\Delta$Y2) of the second contact point acquired in step S146. For example, when $\Delta$X2 of the coordinate change amounts ($\Delta$X2, $\Delta$Y2) of the second contact point is substantially zero, the fixed area determination processing unit 15 determines that the scroll direction is only a vertical direction. Also, when $\Delta Y2$ of the coordinate change amounts $(\Delta X2, \Delta Y2)$ of the second contact point is substantially zero, the fixed area determination processing unit 15 determines that the scroll direction is only a horizontal direction. Also, when both $\Delta X2$ and $\Delta Y2$ of the coordinate change amounts $(\Delta X2, \Delta Y2)$ of the second contact point are not substantially zero, the fixed area determination processing unit 15 determines that the scroll direction is an oblique direction.

In the case of determining that the scroll direction in step S148 is the oblique direction, the fixed area determination processing unit 15 determines that scrolling is performed in the oblique direction with respect to the image of the outside NF of the fixed area including the second contact point according to the drag of the second finger, and also determines that a predetermined rectangular area including the first contact point is the fixed area F (S149). Simultaneously, the fixed area determination processing unit 15 determines that a display area excluding the fixed area F from the whole display screen of the display unit 5 and including the second contact point is the outside NF of the fixed area (S 149).

Further, a fixed area display processing unit 16 generates a fixed image displayed in the fixed area F determined by the fixed area determination processing unit 15, and outputs the generated fixed image to a display image generating unit 18. The display image generating unit 18 outputs the fixed image to a display control unit 19, and the display control unit 19 displays the fixed image on the display screen of the display unit 5 (S 149). The fixed area determination processing unit 15 writes information to the effect that "scroll flag (Scroll_Flg) = oblique direction" into the information storage medium 25 (S150).

In the case of determining that the scroll direction in step S148 is only the horizontal direction, the fixed area determination processing unit 15 determines that scrolling is performed in the horizontal direction with respect to the image of the outside NF of the fixed area including the second contact point according to the drag of the second finger, and also determines that a predetermined rectangular area including the first contact point is the fixed area F (S151). Simultaneously, the fixed area determination processing unit 15 determines that a display area excluding the fixed area F from the whole display screen of the display unit 5 and including the second contact point is the outside NF of the fixed area (S151).

Further, the fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S151). The fixed area determination processing unit 15 writes information to the effect that "scroll flag (Scroll_Flg) = horizontal direction" into the information storage medium 25 (S152).

In the case of determining that the scroll direction in step S148 is only the vertical direction, the fixed area determination processing unit 15 determines that scrolling is performed in the vertical direction with respect to the image of the outside NF of the fixed area including the second contact point according to the drag of the second finger, and also determines that a predetermined rectangular area including the first contact point is the fixed area F (S153). Simultaneously, the fixed area determination processing unit 15 determines that a display area excluding the fixed area F from the whole display screen of the display unit 5 and including the second contact point is the outside NF of the fixed area (S153).

Further, the fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S153). The fixed area determination processing unit 15 writes information to the effect that "scroll flag (Scroll_Flg) = vertical direction" into the information storage medium 25 (S1554).

After the scroll flag is written into the information storage medium 25 in step S149, step S151 or step S153, the manipulation content determination processing unit 12 updates information about the initial flag by writing information to the effect that "initial flag = 0" into the information storage medium 25 (S 155).

After information about the initial flag is updated in step S1555, according to the scroll flag stored in the information storage medium 25 (S156), a fixed area outside display processing unit 17 generates and displays a scrolled image in which an image displayed in the outside NF of the fixed area just before the drag of the second finger is scrolled in the scroll direction determined by the fixed area determination processing unit 15 (S157 to S159).

Concretely, when the scroll flag indicates the oblique direction, the fixed area outside display processing unit 17 generates the scrolled image in which the image displayed in the outside NF of the fixed area just before the drag of the second finger is scrolled in the oblique direction, and outputs the generated scrolled image to the display image generating unit 18. The display image generating unit 18 outputs the scrolled image to the display control unit 19, and the display control unit 19 displays the scrolled image on the display screen of the display unit 5 (S157).

Also, when the scroll flag indicates the horizontal direction, the fixed area outside display processing unit 17 generates the scrolled image in which the image displayed in the outside NF of the fixed area just before the drag of the second finger is scrolled in the horizontal direction, and outputs the generated scrolled image to the display image generating unit 18. The display image generating unit 18 outputs the scrolled image to the display control unit 19, and the display control unit 19 displays the scrolled image on the display screen of the display unit 5 (S 158).

Also, when the scroll flag indicates the vertical direction, the fixed area outside display processing unit 17 generates the scrolled image in which the image displayed in the outside NF of the fixed area just before the drag of the second finger is scrolled in the vertical direction, and outputs the generated scrolled image to the display image generating unit 18. The display image generating unit 18 outputs the scrolled image to the display control unit 19, and the display control unit 19 displays the scrolled image on the display screen of the display unit 5 (S159).

After the scrolled image is displayed on the display unit 5, the manipulation content determination processing unit 12 determines whether or not to perform a touch input manipulation in which the second finger touches the display unit 5 and then newly drags the display unit 5 in a predetermined direction by a predetermined distance (S145).

In the case of determining that the touch input manipulation in step S145 is not performed, the manipulation content determination processing unit 12 determines whether or not to perform a touch input manipulation in which the first finger touches the display unit 5 (S141).

In the case of determining that the touch input manipulation in step S141 is performed, the manipulation content determination processing unit 12 acquires information about coordinates (X1, Y1) of the first contact point touched by the first finger based on the touch input manipulation, and writes the information about coordinates of the first contact point and information to the effect that "initial flag (Init_Flg) = 1" into the information storage medium 25 (S 142).

Thereafter, the split position determination processing unit 24 determines whether or not to perform a touch input manipulation in which the first finger drags the first contact point touched by the first finger on the display screen of the display unit 5 in a predetermined direction by a predetermined distance (S143). In the case of determining that the touch input manipulation in step S143 is performed, the split position determination processing unit 24 determines a direction of drag of the first finger (S160). The split position determination processing unit 24 can acquire this direction of drag of the first finger from the manipulation content determination processing unit 12.

In the case of determining that the direction of drag of the first finger in step S160 is a horizontal direction, the split position determination processing unit 24 displays the display split boundary line BR in the horizontal direction in which the first finger drags the first contact point. The split position determination processing unit 24 displays and splits the display screen of the display unit 5 into the fixed area F and the outside NF of the fixed area by the display split boundary line BR displayed. The split position determination processing unit 24 outputs information to the effect that the display screen is displayed and split to the fixed area determination processing unit 15.

Further, when the display screen is displayed and split by the display split boundary line BR, based on information outputted by the split position determination processing unit 24, the fixed area determination processing unit 15 determines that a display area of a predetermined rectangular area including the first contact point touched by the first finger and including the display split boundary line BR is the fixed area F, and determines that a display area excluding the fixed area F in the whole display screen of the display unit 5 is the outside NF of the fixed area. In addition, a state in which one of the two display areas displayed and split by the display split boundary line BR is the fixed area F is preferably predefined in operation of the split position determination processing unit 24. Also, the split position determination processing unit 24 temporarily determines which two display areas displayed and split by the display split boundary line BR is the fixed area F and also, in the case of determining that there are two contact points, that is, touch of the second finger exists in step S145 described below, the fixed area determination processing unit 15 may formally determine that a display area including coordinates of the second contact point is the outside NF of the fixed area and determine that a display area without including the coordinates of the second contact point is the fixed area F by the coordinates of the second contact point by the second finger with respect to the display screen. In addition, the fixed area determination processing unit 15 notifies the fixed area outside display processing unit 17 and the fixed area display processing unit 16 of this determined result, and a fixed image and a scrolled image respectively displayed in the fixed area F and the outside NF of the fixed area formally determined are respectively displayed according to the notification.

Also, the split position determination processing unit 24 determines that a vertical direction perpendicular to the horizontal direction in which the display split boundary line BR is displayed is a scroll direction with respect to the scrolled image displayed in the outside of the fixed area (S161).

At this time, the fixed area display processing unit 16 generates a fixed image displayed in the fixed area F determined by the fixed area determination processing unit 15, and outputs the generated fixed image to the display image generating unit 18. The display image generating unit 18 outputs the fixed image to the display control unit 19, and the display control unit 19 displays the fixed image on the display unit 5 (S161).

The fixed area determination processing unit 15 writes information to the effect that "scroll flag (Scroll_Flg) = vertical direction" into the information storage medium 25 (S162).

Also, in the case of determining that the direction of drag of the first finger in step S160 is a vertical direction, the split position determination processing unit 24 displays the display split boundary line BR in the vertical direction in which the first finger drags the first contact point. The split position determination processing unit 24 displays and splits the display screen of the display unit 5 into the fixed area F and the outside NF of the fixed area by the display split boundary line BR displayed. The split position determination processing unit 24 outputs information to the effect that the display screen is displayed and split to the fixed area determination processing unit 15.

Further, when the display screen is displayed and split by the display split boundary line BR, based on information outputted by the split position determination processing unit 24, the fixed area determination processing unit 15 determines that a display area of a predetermined rectangular area including the first contact point touched by the first finger and including the display split boundary line BR is the fixed area F, and determines that a display area excluding the fixed area F in the whole display screen of the display unit 5 is the outside NF of the fixed area. In addition, a state in which one of the two display areas displayed and split by the display split boundary line BR is the fixed area F is preferably predefined in operation of the split position determination processing unit 24. Also, the split position determination processing unit 24 temporarily determines which two display areas displayed and split by the display split boundary line BR is the fixed area F and also, in the case of determining that there are two contact points, that is, touch of the second finger exists in step S145 described below, the fixed area determination processing unit 15 may formally determine that a display area including coordinates of the second contact point is the outside NF of the fixed area and determine that a display area without including the coordinates of the second contact point is the fixed area F by the coordinates of the second contact point by the second finger with respect to the display screen. In addition, the fixed area determination processing unit 15 notifies the fixed area outside display processing unit 17 and the fixed area display processing unit 16 of this determined result, and a fixed image and a scrolled image respectively displayed in the fixed area F and the outside NF of the fixed area formally determined are respectively displayed according to the notification.

Also, the split position determination processing unit 24 determines that a horizontal direction perpendicular to the vertical direction in which the display split boundary line BR is displayed is a scroll direction with respect to the scrolled image displayed in the outside of the fixed area (S163).

At this time, the fixed area display processing unit 16 generates a fixed image displayed in the fixed area determined by the fixed area determination processing unit 15, and outputs the generated fixed image to the display image generating unit 18. The display image generating unit 18 outputs the fixed image to the display control unit 19, and the display control unit 19 displays the fixed image on the display unit 5 (S163).

The fixed area determination processing unit 15 writes information to the effect that "scroll flag (Scroll_Flg) = horizontal direction" into the information storage medium 25 (S164).

After the scroll flag is written into the information storage medium 25 in step S162 or step S164, the manipulation content determination processing unit 12 updates information about the initial flag by writing information to the effect that "initial flag = 0" into the information storage medium 25 (S165).

In addition, in the case of determining that a touch input manipulation in which the second finger drags the display unit 5 in a predetermined direction by a predetermined distance in a state in which both of the first finger and the second finger touch the display unit 5 is performed, the operations of steps S146 to S165 described above are repeated.

As described above, the mobile telephone 10d of the fifth embodiment determines that a predetermined rectangular area including the first contact point at which the first finger touches an image displayed on the display screen of the display unit 5 is the fixed area F in the whole image, and determines that a display area excluding the fixed area F in the whole image and including the second contact point at which the second finger touches the image is the outside NF of the fixed area.

Further, the mobile telephone 10d generates a fixed image with the predetermined rectangular area determined as the fixed area F, and generates a scrolled image in which an image corresponding to the display area determined as the outside NF of the fixed area is scrolled in the scroll direction determined according to coordinates of the second contact point with respect to the display screen of the display unit 5, a direction and a distance of drag of the second finger. The mobile telephone 10d displays a combined image obtained by combining the generated fixed image with the scrolled image on the display screen of the display unit 5.

Further, the mobile telephone 10d displays the display split boundary line BR showing a display split state of the fixed area F and the outside NF of the fixed area according to a direction of drag of the first finger by a predetermined distance in a state in which only the first finger touches the display screen or in a state in which the first finger touches the fixed area and the second finger touches the outside of the fixed area. The mobile telephone 10d scrolls the scrolled image displayed in the outside NF of the fixed area in a direction perpendicular to a display direction of this display split boundary line BR according to drag of the second finger by a predetermined distance.

Consequently, according to the mobile telephone 10d of the fifth embodiment, a part of the area in the contents displayed on the display screen can be fixed and also the other area of the outside of a target of fixing in the display screen can be scrolled according to an intuitive and simple manipulation. As a result, a user can manipulate the scroll direction with respect to the image displayed in the outside NF of the fixed area or a display split place or a fixed place of the image displayed on the display screen of the display unit 5 by the intuitive and simple manipulation of touch and drag of the fingers, and can easily implement selection of the fixed area and scrolling of the outside of the fixed area by only the manipulation of at least two fingers.

Also, according to the mobile telephone 10d, display splitting into the fixed area F and the outside NF of the fixed area can be implemented along a direction of drag of the first finger by a predetermined distance by the intuitive and simple manipulation.

In addition, in the mobile telephone 10d, when the case of the processing for displaying the display split boundary line BR showing the display split state of the fixed area F and the outside NF of the fixed area according to the direction of drag of the first finger by the predetermined distance in the state in which only the first finger touches the display screen is not distinguished from the case of simple scroll processing of the whole display screen by drag of the first finger by the predetermined distance, this can be avoided by starting a start position of drag of the first finger from the edge of the display screen or forming a menu manipulation of clearly showing execution of the processing separately.

(SIXTH EMBODIMENT)

22. EXPLANATION ABOUT CONFIGURATION OF MOBILE TELEPHONE 10E OF SIXTH EMBODIMENT

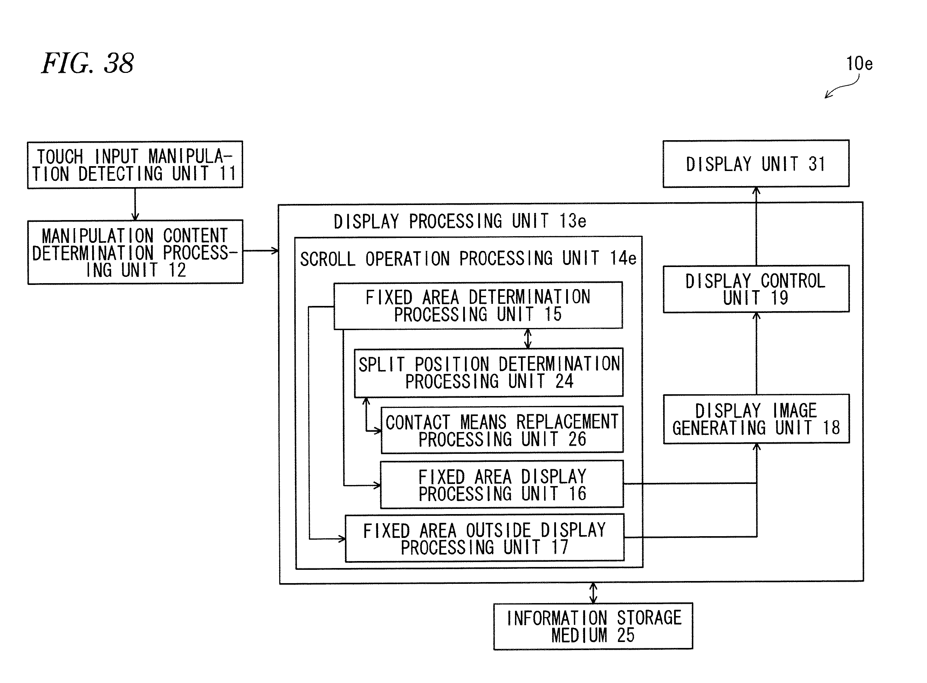

Fig. 38 is a block diagram showing an internal configuration of the mobile telephone 10e which is one example of an electronic apparatus of the invention. As shown in Fig. 33, the mobile telephone 10e includes a display processing unit 13e having a scroll operation processing unit 14e further including a contact means replacement processing unit 26 in the scroll operation processing unit 14d of the mobile telephone 10d of the fifth embodiment. Since the other configuration excluding this contact means replacement processing unit 26 is the same as that of the mobile telephone 10d of the fifth embodiment, explanation about the same contents is omitted.

23. EXPLANATION ABOUT OUTLINE OF OPERATION OF CONTACT MEANS REPLACEMENT PROCESSING UNIT 26

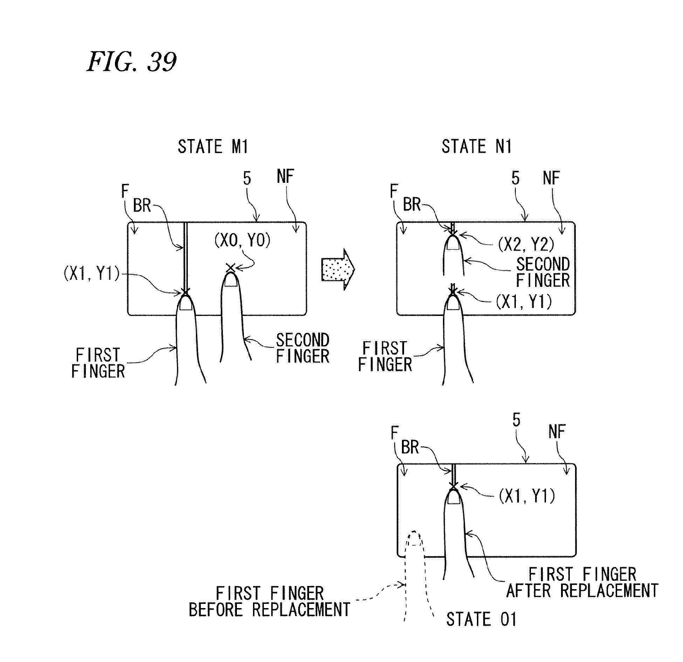

Fig. 39 is an explanatory diagram showing one example of a touch input manipulation in the sixth embodiment, and shows one example at the time when a first finger of a user in contact with a display split boundary line BR is replaced with a second finger. In addition, in the sixth embodiment, contact means refers to means for touching the display split boundary line BR. Hereinafter, as one example of the contact means, the finger of the user is described, but, for example, a stylus pen may be used instead of the finger. In addition, in Fig. 39, an image browsing application operates on a display screen of a display unit 5 of the mobile telephone 10e. Also, image data stored in an information storage medium 25 is displayed on the display screen of the display unit 5 of the mobile telephone 10e shown in Fig. 39. Further, in explanation of Fig. 39, a fixed area determination processing unit 15 shall determine that a scroll direction with respect to a scrolled image is a horizontal direction.

A state M1 of Fig. 39 shows a situation in which a first finger touches coordinates (X1, Y1) of a first contact point on the display split boundary line BR included in a fixed area F and a second finger touches coordinates (X0, Y0) of a second contact point of the outside NF of the fixed excluding the fixed area F in the display screen of the display unit 5. When the touch of the second finger makes transition to coordinates (X2, Y2) on the display split boundary line BR as shown in a state N1, the contact means replacement processing unit 26 displays the display split boundary line BR in a mode capable of visually highlighting the display split boundary line BR. For example, when the display split boundary line BR is displayed in black, the contact means replacement processing unit 26 displays the display split boundary line BR in red. Moreover, the contact means replacement processing unit 26 may display the display split boundary line BR by blinking. Furthermore, various modes capable of visual highlighting can be applied.

The contact means replacement processing unit 26 compares the coordinates (X2, Y2) after transition of the touch of the second finger with the first contact point (X1, Y1) touched by the first finger. In the case of determining that the X coordinate (X2) of the coordinates after transition of the touch of the second finger is substantially equal to the X coordinate (X1) of the first contact point touched by the first finger, the contact means replacement processing unit 26 replaces the coordinates (X2, Y2) after transition of the touch of the second finger with coordinates (X1, Y1) of a new first contact point as shown in a state O1. Accordingly, the second finger touching the coordinates (X1, Y1) of the first contact point newly replaced is replaced with a new first finger, and movement of the first finger before the replacement can be released. In addition, Fig. 39 shows an example in which the display split boundary line BR is displayed in a vertical direction, but the above explanation can similarly be applied to the case where the display split boundary line BR is displayed in a horizontal direction.

24. EXPLANATION ABOUT OPERATION OF MOBILE TELEPHONE 10E OF SIXTH EMBODIMENT

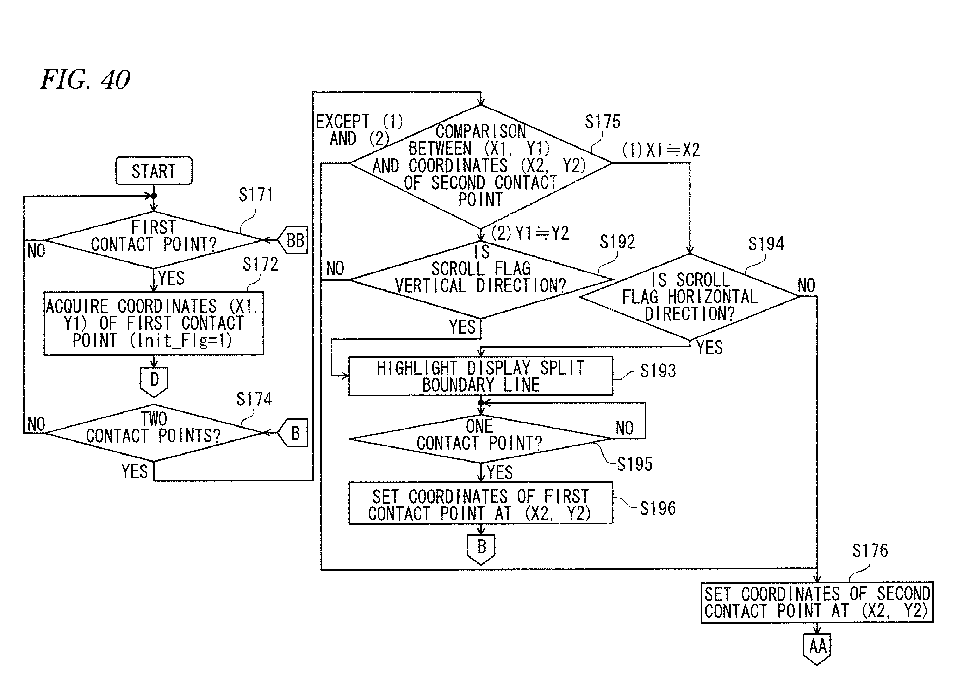

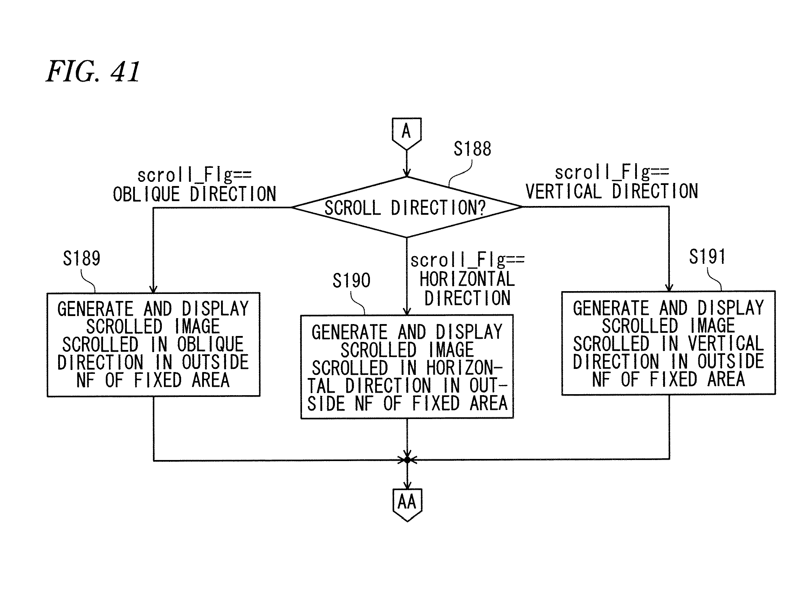

Figs. 40 to 43 are flowcharts showing operation of the mobile telephone 10e of the sixth embodiment, respectively. Also, prior to the following explanation, any image shall be previously displayed on the display screen of the display unit 5 of the mobile telephone 10e.

In Fig. 40, a manipulation content determination processing unit 12 determines whether or not to perform a touch input manipulation in which a first finger touches the display unit 5 (S171). In the case of determining that the touch input manipulation in step S171 is performed, the manipulation content determination processing unit 12 acquires information about coordinates (X1, Y1) of a first contact point touched by the first finger based on the touch input manipulation, and writes the information about coordinates of the first contact point and information to the effect that "initial flag (Init_Flg) = 1" into the information storage medium 25 (S172).

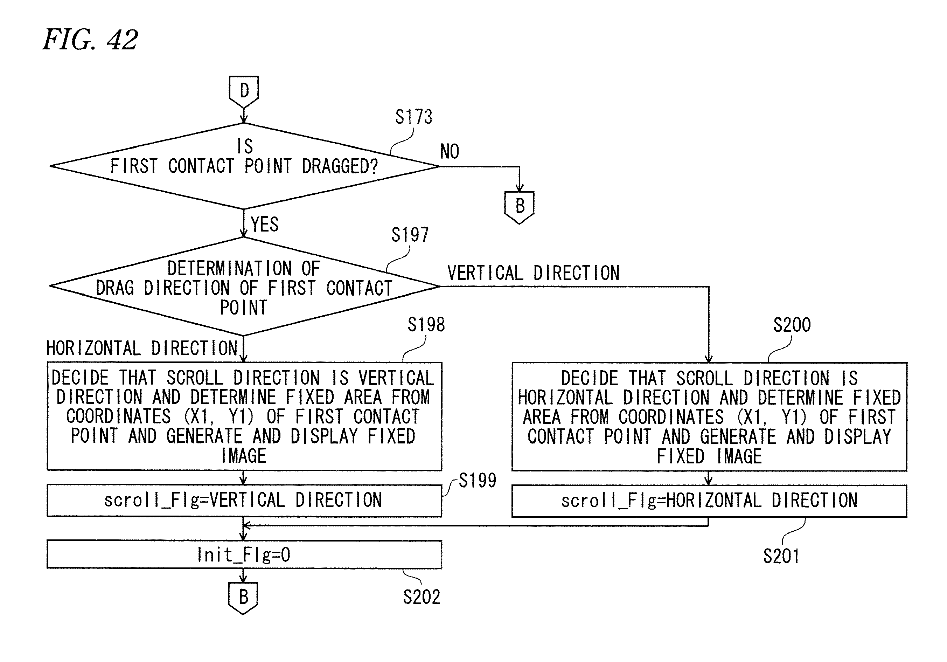

After the information to the effect that the initial flag is "1" is written into the information storage medium 25, a split position determination processing unit 24 determines whether or not to perform a touch input manipulation in which the first finger drags the first contact point touched by the first finger on the display screen of the display unit 5 in a predetermined direction by a predetermined distance in Fig. 42 (S173). In the case of determining that the touch input manipulation in step S 173 is not performed, the manipulation content determination processing unit 12 determines whether or not to perform a touch input manipulation in which both of the first finger and the second finger touch the display screen of the display unit 5 (S 174).

In the case of determining that the touch input manipulation in step S174 is performed, the contact means replacement processing unit 26 compares the coordinates (X1, Y1) of the first contact point touched by the first finger with a second contact point (X2, Y2) touched by the second finger (S175). Concretely, this comparison determines whether or not the X coordinate (X1) of the first contact point is substantially equal to the X coordinate (X2) of the second contact point, or whether or not the Y coordinate (Y1) of the first contact point is substantially equal to the Y coordinate (Y2) of the second contact point.

In the case of determining that the X coordinate (X1) of the first contact point is completely different from the X coordinate (X2) of the second contact point and the Y coordinate (Y1) of the first contact point is completely different from the Y coordinate (Y2) of the second contact point, the contact means replacement processing unit 26 fixes and maintains the coordinates (X2, Y2) without changing the coordinates (X2, Y2) of the second contact point (S176). That is, in this case, mutual replacement of the first finger with the second finger of a user which is contact means is not performed.

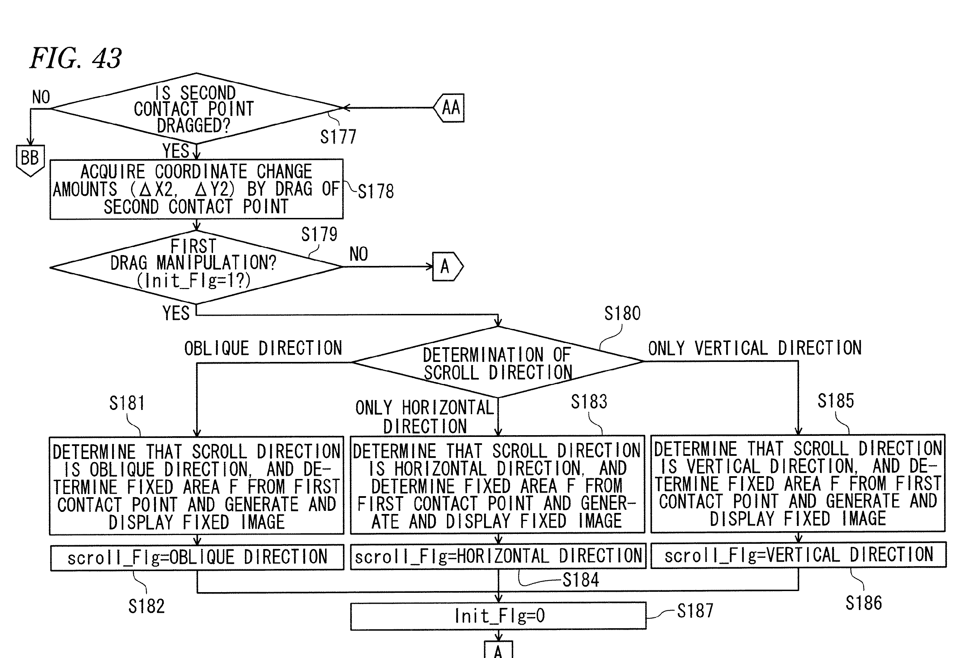

After step S 176, the manipulation content determination processing unit 12 determines whether or not to perform a touch input manipulation in which the second finger drags the display screen in a predetermined direction by a predetermined distance after step S176 in Fig. 43 (S177). In the case of determining that the touch input manipulation in step S 177 is performed, the manipulation content determination processing unit 12 acquires information about coordinate change amounts ($\Delta$X2, $\Delta$Y2) of the second contact point dragged based on the touch input manipulation, and writes the information about the coordinate change amounts into the information storage medium 25 (S178).

In addition, the manipulation content determination processing unit 12 acquires the information about the coordinate change amounts ($\Delta$X2, $\Delta$Y2) of the second contact point by acquiring the information about the coordinate change amounts ($\Delta$X2, $\Delta$Y2) of the second contact point based on coordinates (X2s, Y2s) before drag of the second contact point and coordinates (X2e, Y2e) after drag of the second contact point at the time when the second finger touches the display unit 5.

The manipulation content determination processing unit 12 determines whether or not drag of the second finger is the first drag, that is, the initial flag is "1" (S179). In the case of determining that the drag of the second finger is the first drag in step S179, the fixed area determination processing unit 15 determines a scroll direction with respect to an image displayed in the outside NF of the fixed area excluding the predetermined fixed area F including the first contact point from the whole display screen of the display unit 5 and including the second contact point according to coordinates of the second contact point by the second finger with respect to the display screen, a direction and a distance of drag from the second contact point (S180).

In addition, the fixed area determination processing unit 15 preferably determines the scroll direction of the image of the outside NF of the fixed area including the second contact point based on coordinates of the second contact point on the display screen of the display unit 5 and the coordinate change amounts ($\Delta$X2, $\Delta$Y2) of the second contact point acquired in step S 146. For example, when $\Delta$X2 of the coordinate change amounts ($\Delta$X2, $\Delta$Y2) of the second contact point is substantially zero, the fixed area determination processing unit 15 determines that the scroll direction is only a vertical direction. Also, when $\Delta$Y2 of the coordinate change amounts ($\Delta$X2, $\Delta$Y2) of the second contact point is substantially zero, the fixed area determination processing unit 15 determines that the scroll direction is only a horizontal direction. Also, when both $\Delta$X2 and $\Delta$Y2 of the coordinate change amounts ($\Delta$X2, $\Delta$Y2) of the second contact point are not substantially zero, the fixed area determination processing unit 15 determines that the scroll direction is an oblique direction.

In the case of determining that the scroll direction in step S180 is the oblique direction, the fixed area determination processing unit 15 determines that scrolling is performed in the oblique direction with respect to the image of the outside NF of the fixed area including the second contact point according to the drag of the second finger, and also determines that a predetermined rectangular area including the first contact point is the fixed area F (S181). Simultaneously, the fixed area determination processing unit 15 determines that a display area excluding the fixed area F from the whole display screen of the display unit 5 and including the second contact point is the outside NF of the fixed area (S181).

Further, a fixed area display processing unit 16 generates a fixed image displayed in the fixed area determined by the fixed area determination processing unit 15, and outputs the generated fixed image to a display image generating unit 18. The display image generating unit 18 outputs the fixed image to a display control unit 19, and the display control unit 19 displays the fixed image on the display screen of the display unit 5 (S 181). The fixed area determination processing unit 15 writes information to the effect that "scroll flag (Scroll_Flg) = oblique direction" into the information storage medium 25 (S182).

In the case of determining that the scroll direction in step S180 is only the horizontal direction, the fixed area determination processing unit 15 determines that scrolling is performed in the horizontal direction with respect to the image of the outside NF of the fixed area including the second contact point according to the drag of the second finger, and also determines that a predetermined rectangular area including the first contact point is the fixed area F (S183). Simultaneously, the fixed area determination processing unit 15 determines that a display area excluding the fixed area F from the whole display screen of the display unit 5 and including the second contact point is the outside NF of the fixed area (S 183).

Further, the fixed area display processing unit 16 generates a fixed image displayed in the fixed area determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S1883). The fixed area determination processing unit 15 writes information to the effect that "scroll flag (Scroll_Flg) = horizontal direction" into the information storage medium 25 (S184).

In the case of determining that the scroll direction in step S180 is only the vertical direction, the fixed area determination processing unit 15 determines that scrolling is performed in the vertical direction with respect to the image of the outside NF of the fixed area including the second contact point according to the drag of the second finger, and also determines that a predetermined rectangular area including the first contact point is the fixed area F (S 185). Simultaneously, the fixed area determination processing unit 15 determines that a display area excluding the fixed area F from the whole display screen of the display unit 5 and including the second contact point is the outside NF of the fixed area (S 185).

Further, the fixed area display processing unit 16 generates a fixed image displayed in the fixed area determined by the fixed area determination processing unit 15, and outputs the generated fixed image to the display image generating unit 18. The display image generating unit 18 outputs the fixed image to the display control unit 19, and the display control unit 19 displays the fixed image on the display screen of the display unit 5 (S 186). The fixed area determination processing unit 15 writes information to the effect that "scroll flag (Scroll_Flg) = vertical direction" into the information storage medium 25 (S186).

After the scroll flag is written into the information storage medium 25 in step S182, step S1884 or step S186, the manipulation content determination processing unit 12 updates information about the initial flag by writing information to the effect that "initial flag = 0" into the information storage medium 25 (S 187).

After information about the initial flag is updated in step S 187, according to the scroll flag stored in the information storage medium 25 (S188), a fixed area outside display processing unit 17 generates and displays a scrolled image in which an image displayed in the outside NF of the fixed area just before the drag of the second finger is scrolled in the scroll direction determined by the fixed area determination processing unit 15 (S189 to S191).

Concretely, when the scroll flag indicates the oblique direction, the fixed area outside display processing unit 17 generates the scrolled image in which the image displayed in the outside NF of the fixed area just before the drag of the second finger is scrolled in the oblique direction, and outputs the generated scrolled image to the display image generating unit 18. The display image generating unit 18 outputs the scrolled image to the display control unit 19, and the display control unit 19 displays the scrolled image on the display screen of the display unit 5 (S189).

Also, when the scroll flag indicates the horizontal direction, the fixed area outside display processing unit 17 generates the scrolled image in which the image displayed in the outside NF of the fixed area just before the drag of the second finger is scrolled in the horizontal direction, and outputs the generated scrolled image to the display image generating unit 18. The display image generating unit 18 outputs the scrolled image to the display control unit 19, and the display control unit 19 displays the scrolled image on the display screen of the display unit 5 (S190).

Also, when the scroll flag indicates the vertical direction, the fixed area outside display processing unit 17 generates the scrolled image in which the image displayed in the outside NF of the fixed area just before the drag of the second finger is scrolled in the vertical direction, and outputs the generated scrolled image to the display image generating unit 18. The display image generating unit 18 outputs the scrolled image to the display control unit 19, and the display control unit 19 displays the scrolled image on the display screen of the display unit 5 (S 191).

After the scrolled image is displayed on the display unit 5, the manipulation content determination processing unit 12 determines whether or not to perform a touch input manipulation in which the second finger touches the display unit 5 and then newly drags the display unit 5 in a predetermined direction by a predetermined distance (S177).

In the case of determining that the touch input manipulation in step S 177 is not performed, the manipulation content determination processing unit 12 determines whether or not to perform a touch input manipulation in which the first finger touches the display unit 5 (S171).

In the case of determining that the touch input manipulation in step S171 is performed, the manipulation content determination processing unit 12 acquires information about coordinates (X1, Y1) of the first contact point touched by the first finger based on the touch input manipulation, and writes the information about coordinates of the first contact point and information to the effect that "initial flag (Init_Flg) = 1" into the information storage medium 25 (S172).

Thereafter, the split position determination processing unit 24 determines whether or not to perform a touch input manipulation in which the first finger drags the first contact point touched by the first finger on the display screen of the display unit 5 in a predetermined direction by a predetermined distance (S173). In the case of determining that the touch input manipulation in step S 173 is performed, the split position determination processing unit 24 determines a direction of drag of the first finger (S197). The split position determination processing unit 24 can acquire this direction of drag of the first finger from the manipulation content determination processing unit 12.

In the case of determining that the direction of drag of the first finger in step S197 is a horizontal direction, the split position determination processing unit 24 displays the display split boundary line BR in the horizontal direction in which the first finger drags the first contact point. The split position determination processing unit 24 displays and splits the display screen of the display unit 5 into the fixed area F and the outside NF of the fixed area by the display split boundary line BR displayed. The split position determination processing unit 24 outputs information to the effect that the display screen is displayed and split to the fixed area determination processing unit 15.

Further, when the display screen is displayed and split by the display split boundary line BR, based on information outputted by the split position determination processing unit 24, the fixed area determination processing unit 15 determines that a display area of a predetermined rectangular area including the first contact point touched by the first finger and including the display split boundary line BR is the fixed area F, and determines that a display area excluding the fixed area F in the whole display screen of the display unit 5 is the outside NF of the fixed area. In addition, a state in which one of the two display areas displayed and split by the display split boundary line BR is the fixed area F is preferably predefined in operation of the split position determination processing unit 24. Also, the split position determination processing unit 24 temporarily determines which two display areas displayed and split by the display split boundary line BR is the fixed area F and also, in the case of determining that there are two contact points in a state in which mutual replacement of the first finger with the second finger of a user which is contact means is not performed in step S176 described below, the fixed area determination processing unit 15 may formally determine that a display area including coordinates of the second contact point is the outside NF of the fixed area and determine that a display area without including the coordinates of the second contact point is the fixed area F by the coordinates of the second contact point by the second finger with respect to the display screen. In addition, the fixed area determination processing unit 15 notifies the fixed area outside display processing unit 17 and the fixed area display processing unit 16 of this determined result, and a fixed image and a scrolled image respectively displayed in the fixed area F and the outside NF of the fixed area formally determined are respectively displayed according to the notification.

Also, the split position determination processing unit 24 determines that a vertical direction perpendicular to the horizontal direction in which the display split boundary line BR is displayed is a scroll direction with respect to the scrolled image displayed in the outside of the fixed area (S 198).

At this time, the fixed area display processing unit 16 generates a fixed image displayed in the fixed area determined by the fixed area determination processing unit 15, and outputs the generated fixed image to the display image generating unit 18. The display image generating unit 18 outputs the fixed image to the display control unit 19, and the display control unit 19 displays the fixed image on the display unit 5 (S198).

The fixed area determination processing unit 15 writes information to the effect that "scroll flag (Scroll_Flg) = vertical direction" into the information storage medium 25 (S199).

Also, in the case of determining that the direction of drag of the first finger in step S197 is a vertical direction, the split position determination processing unit 24 displays the display split boundary line BR in the vertical direction in which the first finger drags the first contact point. The split position determination processing unit 24 displays and splits the display screen of the display unit 5 into the fixed area F and the outside NF of the fixed area by the display split boundary line BR displayed. The split position determination processing unit 24 outputs information to the effect that the display screen is displayed and split to the fixed area determination processing unit 15.

Further, when the display screen is displayed and split by the display split boundary line BR, based on information outputted by the split position determination processing unit 24, the fixed area determination processing unit 15 determines that a display area of a predetermined rectangular area including the first contact point touched by the first finger and including the display split boundary line BR is the fixed area F, and determines that a display area excluding the fixed area F in the whole display screen of the display unit 5 is the outside NF of the fixed area. In addition, a state in which one of the two display areas displayed and split by the display split boundary line BR is the fixed area F is preferably predefined in operation of the split position determination processing unit 24. Also, the split position determination processing unit 24 temporarily determines which two display areas displayed and split by the display split boundary line BR is the fixed area F and also, in the case of determining that there are two contact points in a state in which mutual replacement of the first finger with the second finger of a user which is contact means is not performed in step S 176 described below, the fixed area determination processing unit 15 may formally determine that a display area including coordinates of the second contact point is the outside NF of the fixed area and determine that a display area without including the coordinates of the second contact point is the fixed area F by the coordinates of the second contact point by the second finger with respect to the display screen. In addition, the fixed area determination processing unit 15 notifies the fixed area outside display processing unit 17 and the fixed area display processing unit 16 of this determined result, and a fixed image and a scrolled image respectively displayed in the fixed area F and the outside NF of the fixed area formally determined are respectively displayed according to the notification.

Also, the split position determination processing unit 24 determines that a horizontal direction perpendicular to the vertical direction in which the display split boundary line BR is displayed is a scroll direction with respect to the scrolled image displayed in the outside of the fixed area (S200).

At this time, the fixed area display processing unit 16 generates a fixed image displayed in the fixed area determined by the fixed area determination processing unit 15, and outputs the generated fixed image to the display image generating unit 18. The display image generating unit 18 outputs the fixed image to the display control unit 19, and the display control unit 19 displays the fixed image on the display unit 5 (S200).

The fixed area determination processing unit 15 writes information to the effect that "scroll flag (Scroll_Flg) = horizontal direction" into the information storage medium 25 (S201).

After the scroll flag is written into the information storage medium 25 in step S162 or step S164, the manipulation content determination processing unit 12 writes information to the effect that "initial flag = 0" into the information storage medium 25 (S202).

After the information to the effect that "initial flag = 0" is written into the information storage medium 25, the manipulation content determination processing unit 12 determines whether or not to perform a touch input manipulation in which both of the first finger and the second finger touch the display unit 5 (S174).

In the case of determining that the touch input manipulation in step S174 is performed, the contact means replacement processing unit 26 compares the coordinates (X1, Y1) of the first contact point touched by the first finger with the second contact point (X2, Y2) touched by the second finger (S175). As described above, this comparison determines whether or not the X coordinate (X1) of the first contact point is substantially equal to the X coordinate (X2) of the second contact point, or whether or not the Y coordinate (Y1) of the first contact point is substantially equal to the Y coordinate (Y2) of the second contact point.

In the case of determining that the X coordinate (X1) of the first contact point is substantially equal to the X coordinate (X2) of the second contact point, the contact means replacement processing unit 26 determines whether or not information to the effect that the scroll flag indicates the horizontal direction is stored in the information storage medium 25 in step S200 (S194). In the case of determining that the information to the effect that the scroll flag indicates the horizontal direction is not stored in the information storage medium 25 in step S200, the contact means replacement processing unit 26 fixes and maintains the coordinates (X2, Y2) without changing the coordinates (X2, Y2) of the second contact point (S176). That is, in this case, mutual replacement of the first finger with the second finger of a user which is contact means is not performed.

On the other hand, in the case of determining that the information to the effect that the scroll flag indicates the horizontal direction is stored in the information storage medium 25 in step S200, the contact means replacement processing unit 26 displays the display split boundary line BR in a mode capable of visually highlighting the display split boundary line BR displayed on the display screen of the display unit 5 in step S200 (S193).

Also, in the case of determining that the Y coordinate (Y1) of the first contact point is substantially equal to the Y coordinate (Y2) of the second contact point, the contact means replacement processing unit 26 determines whether or not information to the effect that the scroll flag indicates the vertical direction is stored in the information storage medium 25 in step S199 (S 192). In the case of determining that the information to the effect that the scroll flag indicates the vertical direction is not stored in the information storage medium 25 in step S199, the contact means replacement processing unit 26 fixes and maintains the coordinates (X2, Y2) without changing the coordinates (X2, Y2) of the second contact point (S176). That is, in this case, mutual replacement of the first finger with the second finger of a user which is contact means is not performed.

On the other hand, in the case of determining that the information to the effect that the scroll flag indicates the vertical direction is stored in the information storage medium 25 in step S199, the contact means replacement processing unit 26 displays the display split boundary line BR in a mode capable of visually highlighting the display split boundary line BR displayed on the display screen of the display unit 5 in step S199 (S193).

After the display split boundary line BR is displayed in the mode capable of visually highlighting the display split boundary line BR, the contact means replacement processing unit 26 determines whether or not to perform a touch input manipulation in which the finger touching the display screen of the display unit 5 is in one place of the contact point of the second finger (S 195). That is, in this step S 195, it is determined whether or not the first contact point of the first finger is released and the second contact point of the second finger is replaced with a first contact point of a new first finger by the touch input manipulation.

In the case of determining that the touch input manipulation in step S 195 is performed, the contact means replacement processing unit 26 replaces the coordinates (X2, Y2) of the second contact point of the second finger in comparison of step S175 with coordinates (X1, Y1) of the first contact point of the new first finger in the touch input manipulation (S196). Accordingly, the finger used as the second finger before replacement of step S196 can be used as the first finger after the replacement, and it becomes unnecessary to use the finger used as the second finger before replacement of step S196 after the replacement, and the finger can be used in other manipulations etc.

In addition, in the case of determining that the touch input manipulation in which both of the first finger and the second finger touch the display screen of the display unit 5 is performed, the processing of steps S175 to S202 is repeated.

As described above, the mobile telephone 10e of the sixth embodiment determines that a predetermined rectangular area including the first contact point at which the first finger touches an image displayed on the display screen of the display unit 5 is the fixed area F in the whole image, and determines that a display area excluding the fixed area F in the whole image and including the second contact point at which the second finger touches the image is the outside NF of the fixed area.

Further, the mobile telephone 10e generates a fixed image with the predetermined rectangular area determined as the fixed area F, and generates a scrolled image in which an image corresponding to the display area determined as the outside NF of the fixed area is scrolled in the scroll direction determined according to coordinates of the second contact point with respect to the display screen of the display unit 5, a direction and a distance of drag of the second finger. The mobile telephone 10e displays a combined image obtained by combining the generated fixed image with the scrolled image on the display screen of the display unit 5.

Further, the mobile telephone 10e displays the display split boundary line BR showing a display split state of the fixed area F and the outside NF of the fixed area according to a direction of drag of the first finger by a predetermined distance in a state in which only the first finger touches the display screen or in a state in which the first finger touches the fixed area and the second finger touches the outside of the fixed area. The mobile telephone 10e scrolls the scrolled image displayed in the outside of the fixed area in a direction perpendicular to a display direction of this display split boundary line BR according to drag of the second finger by a predetermined distance.

Further, the mobile telephone 10e replaces the second finger touching the second contact point with the first finger touching the first contact point in the case of determining that the X coordinate or the Y coordinate of the second contact point newly touched by the second finger is substantially equal to the X coordinate or the Y coordinate of the first contact point touched by the first finger when the display split boundary line BR is displayed.

Consequently, according to the mobile telephone 10e of the sixth embodiment, a part of the area in the contents displayed on the display screen can be fixed and also the other area of the outside of a target of fixing in the display screen can be scrolled according to an intuitive and simple manipulation. As a result, a user can manipulate the scroll direction with respect to the image displayed in the outside NF of the fixed area or a display split place or a fixed place of the image displayed on the display screen of the display unit 5 by the intuitive and simple manipulation of touch and drag of the fingers, and can easily implement selection of the fixed area and scrolling of the outside of the fixed area by only the manipulation of at least two fingers.

Also, according to the mobile telephone 10e, display splitting into the fixed area F and the outside NF of the fixed area can be implemented along a direction of drag of the first finger by a predetermined distance by the intuitive and simple manipulation.

Also, according to the mobile telephone 10e, the second finger can mutually be replaced with the first finger by an intuitive and simple manipulation in which the second contact point is replaced with the first contact point. Further, the replaced first finger can be used in other manipulations.

The various embodiments have been described above with reference to the accompanying drawings, but it goes without saying that the electronic apparatus, the display method and the program of the invention are not limited to such examples. It will be apparent that persons skilled in the art can reach change examples or modified examples of the various embodiments and combination examples of the various embodiments within the scope described in the claims, and it will be understood that those examples naturally belong to the technical scope of the invention.

In addition, in the explanation of each of the embodiments described above, the fixed area determination processing unit 15 sets the scroll flag (Scroll_Flg) in the information storage medium 25 according to the scrollable direction in the case scrollable in any of the oblique direction, the horizontal direction and the vertical direction according to the coordinates of the second contact point with respect to the display screen of the display unit 5, a direction and a distance of drag of the second contact point. However, the fixed area determination processing unit 15 may set the scroll

flag in the information storage medium 25 in the oblique direction, the horizontal direction or the vertical direction according to an explicit drag direction of the second finger.

**[0378]** In addition, in the explanation of each of the embodiments described above, the predetermined range AR showing the fixed area in the image displayed on the display unit 5 is represented in the rectangular shape. However, the predetermined range AR showing the fixed area is not particularly limited to the rectangular shape, and any preset shapes such as a circular shape or a cloud shape may be used.

**[0379]** In addition, in the second embodiment described above, the inertial scroll determination processing unit 20 determines that the inertial scroll is executed in the horizontal left direction based on the flick manipulation described above in the state I of Fig. 8. That is, the state I of Fig. 8 is a state in which the flowerbed image is displayed as the fixed image corresponding to the fixed area F and the night view image is displayed as the scrolled image of the moment to execute the inertial scroll in the horizontal left direction. When the second finger touches any position in the outside NF of the fixed area in which the scrolled image is displayed inside the display screen in such a state I, the scroll stop processing unit 21 stops execution of the inertial scroll in the horizontal left direction executed to the outside NF of the fixed area. Here, the scroll stop processing unit 21 may respectively instruct the fixed area display processing unit 16 and the fixed area outside display processing unit 17 to display the flowerbed image displayed in the fixed area F and the night view image displayed as the scrolled image of the moment to stop execution of the inertial scroll in the horizontal left direction on the display unit 5 so as to respectively have the same size as shown in a state J'.

**[0380]** In this case, the fixed area display processing unit 16 generates the flowerbed image displayed in the fixed area F based on the instructions outputted by the fixed area determination processing unit 15, and outputs the flowerbed image to the display image generating unit 18. Also, the fixed area outside display processing unit 17 generates the night view image which is the scrolled image displayed in the outside NF of the fixed area based on the instructions outputted by the fixed area determination processing unit 15, and outputs the night view image to the display image generating unit 18. The display image generating unit 18 outputs a combined image (see the state J') constructed so that the outputted the fixed image and the scrolled image respectively have the same size to the display control unit 19. The display control unit 19 displays the outputted combined image on the display screen of the display unit 5.

**[0381]** In addition, in each of the embodiments described above, the mobile telephones 10 to 10e have been described by way of example. However, the electronic apparatus of the invention is not limited to the mobile telephones 10 to 10e, and can widely be applied to electronic apparatuses such as a PC (Personal Computer) or a digital camera.

**[0382]** In addition, the present application is based on Japanese patent application (patent application No. 2010-111545) filed on May 13, 2010, and the contents of the patent application are hereby incorporated by reference.

## Industrial Applicability

**[0383]** The invention is useful as an electronic apparatus, a display method and a program capable of splitting information displayed on a display screen into a fixed area and the outside of the fixed area and scrolling the information displayed in a display area of the outside of the fixed area.

## Description of Reference Sipns

**[0384]**

| | |
|---|---|
| 5: | Display Unit |
| 10, 10a, 10b, 10c, 10c1, 10c2, 10d, 10e: | Mobile Telephone |
| 11: | Touch Input Manipulation Detecting Unit |
| 12: | Manipulation Content Determination Processing Unit |
| 13, 13a, 13b, 13c, 13c1, 13c2, 13d, 13e: | Display Processing Unit |
| 14, 14d, 14e: | Scroll Operation Processing Unit |
| 15: | Fixed Area Determination Processing Unit |
| 16: | Fixed Area Display Processing Unit |
| 17: | Fixed Area Outside Display Processing Unit |
| 18: | Display Image Generating Unit |
| 19: | Display Control Unit |
| 20: | Inertial Scroll Determination Processing Unit |
| 21: | Scroll Stop Processing Unit |
| 22: | Fixed Area Movement/Copy Processing Unit |
| 23, 23c1, 23c2: | Scroll Wheel Processing Unit |
| 24: | Split Position Determination Processing Unit |
| 25: | Information Storage Medium |

| 26: | Contact Means Replacement Processing Unit |
| AR: | Range Of Rectangular Area |
| BR: | Display Split Boundary Line |
| F: | Fixed Area |
| NF: | Outside Of Fixed Area |
| SW: | Scroll Wheel |

**Claims**

1. An electronic apparatus comprising:

   a display unit for displaying an image;
   a touch input manipulation detecting unit which is arranged on the display unit and detects a touch input manipulation;
   a fixed area determination processing unit for determining a fixed area comprising a first contact point and an outside of the fixed area comprising a second contact point based on the first contact point and the second contact point when the first contact point is fixed and the second contact point is moved in a predetermined direction in a case where the touch input manipulation detecting unit detects two contact points of a touch input manipulation;
   a fixed area display processing unit for generating an image corresponding to the fixed area determined by the fixed area determination processing unit;
   a fixed area outside display processing unit for generating an image which is obtained by scrolling an image corresponding to the outside of the fixed area determined by the fixed area determination processing unit in the predetermined direction in which the second contact point is moved;
   a display image generating unit for generating an image displayed on the display unit based on the images generated by the fixed area display processing unit and the fixed area outside display processing unit, respectively; and
   a display control unit for performing control such that the image generated by the display image generating unit is displayed on the display unit.

2. The electronic apparatus according to claim 1, further comprising:

   an inertial scroll determination unit for determining whether the image generated by the fixed area outside display processing unit is scrolled inertially, based on movement of the second contact point in a state in which contact with the second contact point is maintained; and
   a scroll stop processing unit, in a case where the inertial scroll determination unit determines that the image is scrolled inertially, for stopping the inertial scroll when the touch input manipulation detecting unit detects a new touch input manipulation.

3. The electronic apparatus according to claim 1, further comprising:

   a scroll stop processing unit for instructing the display image generating unit to release a split display state of the fixed area and the outside of the fixed area determined by the fixed area determination processing unit when contact with the second contact point is broken, and to generate the image generated by the fixed area display processing unit as the image displayed on the display unit.

4. The electronic apparatus according to claim 1, further comprising:

   a scroll stop processing unit for instructing the display image generating unit to release a split display state of the fixed area and the outside of the fixed area determined by the fixed area determination processing unit when contact with the first contact point is broken, and to generate the image generated by the fixed area outside display processing unit as the image displayed on the display unit.

5. The electronic apparatus according to any one of claims 1-4, further comprising:

   a fixed area movement/copy processing unit for instructing the display image generating unit to release a split display state of the fixed area and the outside of the fixed area determined by the fixed area determination processing unit when the first contact point is moved in a predetermined direction in a state in which contact with the first contact point is maintained, and to generate the image generated by the fixed area display processing unit which is moved or copied to a previous position of the image generated by the fixed area outside display processing unit.

6. The electronic apparatus according to claim 5, further comprising:

   a scroll wheel processing unit for displaying a scroll wheel in the vicinity of the second contact point based on a predetermined touch input manipulation detected by the touch input manipulation detecting unit.

7. The electronic apparatus according to claim 6,
   wherein the scroll wheel processing unit hides a scroll wheel displayed in the vicinity of the second contact point based on a predetermined touch input manipulation detected by the touch input manipulation detecting unit.

8. The electronic apparatus according to claim 6 or 7,
   wherein the scroll wheel processing unit instructs the fixed area outside display processing unit to generate an image obtained by scrolling the image generated by the fixed area outside display processing unit in a right direction or a lower direction based on a touch input manipulation indicating movement in a right direction in the periphery of the scroll wheel.

9. The electronic apparatus according to claim 6 or 7,
   wherein the scroll wheel processing unit instructs the fixed area outside display processing unit to generate an image obtained by scrolling the image generated by the fixed area outside display processing unit in a left direction or an upper direction based on a touch input manipulation indicating movement in a left direction in the periphery of the scroll wheel.

10. The electronic apparatus according to claim 8 or 9,
    wherein based on a touch input manipulation including a predetermined movement angle in the periphery of the scroll wheel, the scroll wheel processing unit instructs the fixed area outside display processing unit to generate an image obtained by scrolling the image generated by the fixed area outside display processing unit at a scroll speed corresponding to the movement angle.

11. The electronic apparatus according to claim 6 or 7,
    wherein based on a touch input manipulation including a predetermined movement direction and a predetermined movement angle from the center toward the periphery of the scroll wheel, the scroll wheel processing unit instructs the fixed area outside display processing unit to generate an image obtained by scrolling the image generated by the fixed area outside display processing unit at a scroll speed according to the movement direction and the movement angle corresponding to the touch input manipulation.

12. The electronic apparatus according to any one of claims 6-11,
    wherein the scroll wheel processing unit instructs the fixed area outside display processing unit to generate an image at which a scroll with respect to the image generated by the fixed area outside display processing unit is stopped, based on a touch input manipulation indicating movement toward the center of the scroll wheel.

13. The electronic apparatus according to claim 12, further comprising:

    a split position determination processing unit, based on movement of the first contact point in an upper or lower direction in a state in which contact with the first contact point is maintained, for splitting a screen of the display unit into the fixed area comprising the first contact point after the movement as an upper end or a lower end and the outside of the fixed area comprising the second contact point,
    wherein the split position determination processing unit outputs, to the fixed area determination processing unit, the fixed area and the outside of the fixed area into which the screen is split.

14. The electronic apparatus according to claim 12, further comprising:

    a split position determination processing unit, based on movement of the first contact point in a left or right direction in a state in which contact with the first contact point is maintained, for splitting a screen of the display unit into the fixed area comprising the first contact point after the movement as a left end or a right end and the outside of the fixed area comprising the second contact point,
wherein the split position determination processing unit outputs, to the fixed area determination processing unit, the fixed area and the outside of the fixed area into which the screen is split.

**15.** The electronic apparatus according to claim 13 or 14, further comprising:

a contact finger replacement processing unit, in a case where the first contact point is at a boundary between the fixed area and the outside of the fixed area into which the screen is split by the split position determination processing unit, for identifiably displaying the boundary when the second contact point is moved on the same axis as an axis horizontal or vertical to the boundary by a touch input manipulation detected by the touch input manipulation detecting unit.

**16.** The electronic apparatus according to claim 15,
wherein the contact finger replacement processing unit allows a finger touching the second contact point to be replaced with a finger touching the first contact point when the second contact point is moved in the same position as the first contact point at the boundary which is identifiably displayed.

**17.** A display method comprising the steps of:

displaying an image on a display unit;
detecting a predetermined touch input manipulation on the display unit;
determining a fixed area comprising a first contact point and an outside of the fixed area comprising a second contact point based on the first contact point and the second contact point when the first contact point is fixed and the second contact point is moved in a predetermined direction in a case where there are two contact points of the detected touch input manipulation;
generating an image corresponding to the determined fixed area;
generating an image which is obtained by scrolling an image corresponding to the outside of the determined fixed area in the predetermined direction in which the second contact point is moved;
generating an image displayed on the display unit based on each of the generated images, and
performing control such that the generated image is displayed on the display unit.

**18.** A program for causing a computer comprising a display unit to execute the steps of:

displaying an image on the display unit;
detecting a predetermined touch input manipulation on the display unit;
determining a fixed area comprising a first contact point and an outside of the fixed area comprising a second contact point based on the first contact point and the second contact point when the first contact point is fixed and the second contact point is moved in a predetermined direction in a case where there are two contact points of the detected touch input manipulation;
generating an image corresponding to the determined fixed area;
generating an image which is obtained by scrolling an image corresponding to the outside of the determined fixed area in the predetermined direction in which the second contact point is moved;
generating an image displayed on the display unit based on each of the generated images, and
performing control such that the generated image is displayed on the display unit.

**Amended claims under Art. 19.1 PCT**

**1.** (Amended) An electronic apparatus comprising:

a display unit for displaying an image;
a touch input manipulation detecting unit which is arranged on the display unit and detects a touch input manipulation;
a fixed area determination processing unit for determining a fixed area comprising a first contact point and an outside of the fixed area comprising a second contact point based on the first contact point and the second contact point when the first contact point is fixed and the second contact point is moved in a predetermined direction in a case where the touch input manipulation detecting unit detects two contact points of a touch input manipulation;

a fixed area display processing unit for generating an image corresponding to the fixed area determined by the fixed area determination processing unit;

a fixed area outside display processing unit for generating an image which is obtained by scrolling an image corresponding to the outside of the fixed area determined by the fixed area determination processing unit in the predetermined direction in which the second contact point is moved;

a display image generating unit for generating an image displayed on the display unit based on the images generated by the fixed area display processing unit and the fixed area outside display processing unit, respectively; and

a display control unit for performing control such that the image generated by the display image generating unit is displayed on the display unit,

wherein the fixed area display processing unit releases a split display state of the fixed area and the outside of the fixed area when contact with any one of the contact points is broken.

2. The electronic apparatus according to claim 1, further comprising:

an inertial scroll determination unit for determining whether the image generated by the fixed area outside display processing unit is scrolled inertially, based on movement of the second contact point in a state in which contact with the second contact point is maintained; and

a scroll stop processing unit, in a case where the inertial scroll determination unit determines that the image is scrolled inertially, for stopping the inertial scroll when the touch input manipulation detecting unit detects a new touch input manipulation.

3. The electronic apparatus according to claim 1, further comprising:

a scroll stop processing unit for instructing the display image generating unit to release a split display state of the fixed area and the outside of the fixed area determined by the fixed area determination processing unit when contact with the second contact point is broken, and to generate the image generated by the fixed area display processing unit as the image displayed on the display unit.

4. The electronic apparatus according to claim 1, further comprising:

a scroll stop processing unit for instructing the display image generating unit to release a split display state of the fixed area and the outside of the fixed area determined by the fixed area determination processing unit when contact with the first contact point is broken, and to generate the image generated by the fixed area outside display processing unit as the image displayed on the display unit.

5. The electronic apparatus according to any one of claims 1-4, further comprising:

a fixed area movement/copy processing unit for instructing the display image generating unit to release a split display state of the fixed area and the outside of the fixed area determined by the fixed area determination processing unit when the first contact point is moved in a predetermined direction in a state in which contact with the first contact point is maintained, and to generate the image generated by the fixed area display processing unit which is moved or copied to a previous position of the image generated by the fixed area outside display processing unit.

6. The electronic apparatus according to claim 5, further comprising:

a scroll wheel processing unit for displaying a scroll wheel in the vicinity of the second contact point based on a predetermined touch input manipulation detected by the touch input manipulation detecting unit.

7. The electronic apparatus according to claim 6,
wherein the scroll wheel processing unit hides a scroll wheel displayed in the vicinity of the second contact point based on a predetermined touch input manipulation detected by the touch input manipulation detecting unit.

8. The electronic apparatus according to claim 6 or 7,
wherein the scroll wheel processing unit instructs the fixed area outside display processing unit to generate an image obtained by scrolling the image generated by the fixed area outside display processing unit in a right direction or a lower direction based on a touch input manipulation indicating movement in a right direction in the periphery of the scroll wheel.

**9.** The electronic apparatus according to claim 6 or 7,
wherein the scroll wheel processing unit instructs the fixed area outside display processing unit to generate an image obtained by scrolling the image generated by the fixed area outside display processing unit in a left direction or an upper direction based on a touch input manipulation indicating movement in a left direction in the periphery of the scroll wheel.

**10.** The electronic apparatus according to claim 8 or 9,
wherein based on a touch input manipulation including a predetermined movement angle in the periphery of the scroll wheel, the scroll wheel processing unit instructs the fixed area outside display processing unit to generate an image obtained by scrolling the image generated by the fixed area outside display processing unit at a scroll speed corresponding to the movement angle.

**11.** The electronic apparatus according to claim 6 or 7,
wherein based on a touch input manipulation including a predetermined movement direction and a predetermined movement angle from the center toward the periphery of the scroll wheel, the scroll wheel processing unit instructs the fixed area outside display processing unit to generate an image obtained by scrolling the image generated by the fixed area outside display processing unit at a scroll speed according to the movement direction and the movement angle corresponding to the touch input manipulation.

**12.** The electronic apparatus according to any one of claims 6-11,
wherein the scroll wheel processing unit instructs the fixed area outside display processing unit to generate an image at which a scroll with respect to the image generated by the fixed area outside display processing unit is stopped, based on a touch input manipulation indicating movement toward the center of the scroll wheel.

**13.** The electronic apparatus according to claim 12, further comprising:

a split position determination processing unit, based on movement of the first contact point in an upper or lower direction in a state in which contact with the first contact point is maintained, for splitting a screen of the display unit into the fixed area comprising the first contact point after the movement as an upper end or a lower end and the outside of the fixed area comprising the second contact point,
wherein the split position determination processing unit outputs, to the fixed area determination processing unit, the fixed area and the outside of the fixed area into which the screen is split.

**14.** The electronic apparatus according to claim 12, further comprising:

a split position determination processing unit, based on movement of the first contact point in a left or right direction in a state in which contact with the first contact point is maintained, for splitting a screen of the display unit into the fixed area comprising the first contact point after the movement as a left end or a right end and the outside of the fixed area comprising the second contact point,
wherein the split position determination processing unit outputs, to the fixed area determination processing unit, the fixed area and the outside of the fixed area into which the screen is split.

**15.** The electronic apparatus according to claim 13 or 14, further comprising:

a contact finger replacement processing unit, in a case where the first contact point is at a boundary between the fixed area and the outside of the fixed area into which the screen is split by the split position determination processing unit, for identifiably displaying the boundary when the second contact point is moved on the same axis as an axis horizontal or vertical to the boundary by a touch input manipulation detected by the touch input manipulation detecting unit.

**16.** The electronic apparatus according to claim 15,
wherein the contact finger replacement processing unit allows a finger touching the second contact point to be replaced with a finger touching the first contact point when the second contact point is moved in the same position as the first contact point at the boundary which is identifiably displayed.

**17.** (Amended) A display method comprising the steps of:

displaying an image on a display unit;

detecting a predetermined touch input manipulation on the display unit;

determining a fixed area comprising a first contact point and an outside of the fixed area comprising a second contact point based on the first contact point and the second contact point when the first contact point is fixed and the second contact point is moved in a predetermined direction in a case where there are two contact points of the detected touch input manipulation;

generating an image corresponding to the determined fixed area;

generating an image which is obtained by scrolling an image corresponding to the outside of the determined fixed area in the predetermined direction in which the second contact point is moved;

generating an image displayed on the display unit based on each of the generated images,

performing control such that the generated image is displayed on the display unit;

and

releasing a split display state of the fixed area and the outside of the fixed area when contact with any one of the contact points is broken.

**18.** (Amended) A program for causing a computer comprising a display unit to execute the steps of:

displaying an image on the display unit;

detecting a predetermined touch input manipulation on the display unit;

determining a fixed area comprising a first contact point and an outside of the fixed area comprising a second contact point based on the first contact point and the second contact point when the first contact point is fixed and the second contact point is moved in a predetermined direction in a case where there are two contact points of the detected touch input manipulation;

generating an image corresponding to the determined fixed area;

generating an image which is obtained by scrolling an image corresponding to the outside of the determined fixed area in the predetermined direction in which the second contact point is moved;

generating an image displayed on the display unit based on each of the generated images,

performing control such that the generated image is displayed on the display unit;

and

releasing a split display state of the fixed area and the outside of the fixed area when contact with any one of the contact points is broken.

*FIG. 1*

10

EP 2 570 904 A1

```
┌─────────────────────────────┐          ┌──────────────────────────┐
│ TOUCH INPUT MANIPULA-        │          │   DISPLAY UNIT 5         │
│ TION DETECTING UNIT 11       │          └──────────────────────────┘
└─────────────────────────────┘                       ▲
              │                  ┌─────────────────────┼─────────────────┐
              ▼                  │ DISPLAY PROCESSING UNIT 13            │
┌─────────────────────────────┐ │                     │                 │
│ MANIPULATION CONTENT        │ │  ┌──────────────────────────────────┐ │
│ DETERMINATION PROCESS-      │─┼─▶│ SCROLL OPERATION PROCESSING UNIT 14│ │
│ ING UNIT 12                 │ │  │                                   │ │
└─────────────────────────────┘ │  │  ┌────────────────────────────┐  │ │
                                 │  │  │ FIXED AREA DETERMINATION    │  │ │
                                 │  │  │ PROCESSING UNIT 15          │  │ │
                                 │  │  └────────────────────────────┘  │ │
                                 │  │  ┌────────────────────────────┐  │ │
                                 │  │  │ FIXED AREA DISPLAY          │  │ │
                                 │  │  │ PROCESSING UNIT 16          │  │ │
                                 │  │  └────────────────────────────┘  │ │
                                 │  │  ┌────────────────────────────┐  │ │
                                 │  │  │ FIXED AREA OUTSIDE DISPLAY  │  │ │
                                 │  │  │ PROCESSING UNIT 17          │  │ │
                                 │  │  └────────────────────────────┘  │ │
                                 │  └───────────────────────────────────┘ │
                                 └─────────────────────────────────────────┘
```

DISPLAY CONTROL UNIT 19

DISPLAY IMAGE GENERATING UNIT 18

INFORMATION STORAGE MEDIUM 25

*FIG. 2*

STATE A

5

FIRST CONTACT POINT
(TOUCH OF MIDDLE FINGER)

201

STATE B

5

F

AR

SECOND CONTACT POINT
(TOUCH AND DRAG OF
INDEX FINGER)

NF

202

EP 2 570 904 A1

FIG. 3

STATE C

STATE D

STATE E

*FIG. 4*

STATE F　　　　　　STATE G　　　　　　STATE H

EP 2 570 904 A1

*FIG. 5*

START

S1 FIRST CONTACT POINT? — NO / YES

S2 ACQUIRE COORDINATES (X1, Y1) OF FIRST CONTACT POINT (Init_Flg=1)

S3 TWO CONTACT POINTS? — NO / YES ← B

S4 IS SECOND CONTACT POINT DRAGGED? — NO → B / YES

S5 ACQUIRE COORDINATE CHANGE AMOUNTS (△X2, △Y2) BY DRAG OF SECOND CONTACT POINT

N1

A

S15 SCROLL DIRECTION?

scroll_Flg== OBLIQUE DIRECTION

scroll_Flg== VERTICAL DIRECTION

scroll_Flg== HORIZONTAL DIRECTION

S16 GENERATE AND DISPLAY SCROLLED IMAGE SCROLLED IN OBLIQUE DIRECTION IN OUTSIDE NF OF FIXED AREA

S17 GENERATE AND DISPLAY SCROLLED IMAGE SCROLLED IN HORIZON- TAL DIRECTION IN OUT- SIDE NF OF FIXED AREA

S18 GENERATE AND DISPLAY SCROLLED IMAGE SCROLLED IN VERTICAL DIRECTION IN OUTSIDE NF OF FIXED AREA

EP 2 570 904 A1

*FIG. 6*

N1

↓

S6
FIRST DRAG MANIPULATION? (Init_Flg=1?)  —NO→ A

↓ YES

S7
DETERMINATION OF SCROLL DIRECTION

OBLIQUE DIRECTION ←   → ONLY VERTICAL DIRECTION

ONLY HORIZONTAL DIRECTION

S8
DETERMINE THAT SCROLL DIRECTION IS OBLIQUE DIRECTION, AND DETERMINE FIXED AREA F FROM FIRST CONTACT POINT AND GENERATE AND DISPLAY FIXED IMAGE

S10
DETERMINE THAT SCROLL DIRECTION IS HORIZONTAL DIRECTION, AND DETERMINE FIXED AREA F FROM FIRST CONTACT POINT AND GENERATE AND DISPLAY FIXED IMAGE

S12
DETERMINE THAT SCROLL DIRECTION IS VERTICAL DIRECTION, AND DETERMINE FIXED AREA F FROM FIRST CONTACT POINT AND GENERATE AND DISPLAY FIXED IMAGE

scroll_Flg= OBLIQUE DIRECTION

scroll_Flg= HORIZONTAL DIRECTION

scroll_Flg= VERTICAL DIRECTION

S9

S11

S13

S14
Init_Flg=0

↓

A

EP 2 570 904 A1

FIG. 7

TOUCH INPUT MANIPULA-
TION DETECTING UNIT 11

MANIPULATION CONTENT
DETERMINATION
PROCESSING UNIT 12

DISPLAY UNIT 5

DISPLAY PROCESSING UNIT 13a

SCROLL OPERATION PROCESSING UNIT 14

FIXED AREA DETERMINATION
PROCESSING UNIT 15

FIXED AREA DISPLAY
PROCESSING UNIT 16

FIXED AREA OUTSIDE DISPLAY
PROCESSING UNIT 17

DISPLAY CONTROL
UNIT 19

DISPLAY IMAGE
GENERATING UNIT 18

SCROLL STOP PROCESSING
UNIT 21

INERTIAL SCROLL
DETERMINATION
PROCESSING UNIT 20

INFORMATION STORAGE
MEDIUM 25

10a

EP 2 570 904 A1

FIG. 8

STATE J
STATE J'
STATE I
STATE K
STATE L

F, NF, N4

*FIG. 9*

START

D S21

FIRST CONTACT POINT? — NO

YES

S22

ACQUIRE COORDINATES (X1, Y1) OF FIRST
CONTACT POINT (Init_Flg=1)

S23

TWO CONTACT POINTS? — C NO

YES

S24

IS SECOND
CONTACT POINT DRAGGED? — B NO

AA

YES

S25

INERTIAL SCROLL
MANIPULATION? — YES

NO

S29

ACQUIRE COORDINATE CHANGE AMOUNTS (△X2,
△Y2) BY DRAG OF SECOND CONTACT POINT

N1

B

S48

INERTIAL
SCROLL PROCESSING?
(Inertia_Flg==1?) — NO

YES

S49

STOP INERTIAL SCROLL

Inertia_Flg=0

S50

Inertia_Flg=1

S26

ACQUIRE DRAG TIME (△T2) AND
COORDINATE CHANGE AMOUNTS
(△X2, △Y2) BY DRAG OF SECOND
CONTACT POINT

S27

CALCULATE INERTIAL SCROLL
SPEED S1

S28

EP 2 570 904 A1

*FIG. 10*

N1

↓

S30

FIRST
DRAG MANIPULATION?
(Init_Flg=1?) —— NO —— A

↓ YES

S31

OBLIQUE DIRECTION —— DETERMINA-
TION OF SCROLL
DIRECTION —— ONLY VERTICAL DIRECTION

ONLY HORIZONTAL
DIRECTION

S32

DETERMINE THAT SCROLL
DIRECTION IS OBLIQUE
DIRECTION, AND
DETERMINE FIXED AREA F
FROM FIRST CONTACT
POINT AND GENERATE AND
DISPLAY FIXED IMAGE

S34

DETERMINE THAT SCROLL
DIRECTION IS HORIZONTAL
DIRECTION, AND
DETERMINE FIXED AREA F
FROM FIRST CONTACT
POINT AND GENERATE AND
DISPLAY FIXED IMAGE

S36

DETERMINE THAT SCROLL
DIRECTION IS VERTICAL
DIRECTION, AND
DETERMINE FIXED AREA F
FROM FIRST CONTACT
POINT AND GENERATE AND
DISPLAY FIXED IMAGE

scroll_Flg=
OBLIQUE DIRECTION

scroll_Flg=
HORIZONTAL DIRECTION

scroll_Flg=
VERTICAL DIRECTION

S33

S35

S37

Init_Flg=0 —— S38

↓

A

EP 2 570 904 A1

60

# FIG. 11

A

INERTIAL SCROLL PROCESSING? (Inertia_Flg==1?) — S39 — YES

NO ↓ S40 SCROLL DIRECTION?

scroll_Flg== OBLIQUE DIRECTION

scroll_Flg== VERTICAL DIRECTION

scroll_Flg== HORIZONTAL DIRECTION

S41: GENERATE AND DISPLAY SCROLLED IMAGE SCROLLED IN OBLIQUE DIRECTION IN OUTSIDE NF OF FIXED AREA

S42: GENERATE AND DISPLAY SCROLLED IMAGE SCROLLED IN HORIZONTAL DIRECTION IN OUTSIDE NF OF FIXED AREA

S43: GENERATE AND DISPLAY SCROLLED IMAGE SCROLLED IN VERTICAL DIRECTION IN OUTSIDE NF OF FIXED AREA

S44 SCROLL DIRECTION?

scroll_Flg== OBLIQUE DIRECTION

scroll_Flg== VERTICAL DIRECTION

scroll_Flg== HORIZONTAL DIRECTION

S45: GENERATE AND DISPLAY SCROLLED IMAGE INERTIALLY SCROLLED IN OBLIQUE DIRECTION IN OUTSIDE NF OF FIXED AREA

S46: GENERATE AND DISPLAY SCROLLED IMAGE INERTIALLY SCROLLED IN HORIZONTAL DIRECTION IN OUTSIDE NF OF FIXED AREA

S47: GENERATE AND DISPLAY SCROLLED IMAGE INERTIALLY SCROLLED IN VERTICAL DIRECTION IN OUTSIDE NF OF FIXED AREA

AA

EP 2 570 904 A1

*FIG. 12*

C

SUBSTANTIALLY FIRST
CONTACT POINT

SUBSTANTIALLY SECOND
CONTACT POINT

S51

REMAINING
CONTACT POINT?

NO CONTACT
POINT

S52

RELEASE DISPLAY
SPLIT AND DISPLAY
FIXED IMAGE

SHIFT PROCESSING TO
EITHER STATE BY
SYSTEM SETTING

S53

RELEASE DISPLAY SPLIT
AND DISPLAY SCROLLED
IMAGE

D

*FIG. 13*

10b

TOUCH INPUT MANIPULA-
TION DETECTING UNIT 11

DISPLAY UNIT 5

MANIPULATION CONTENT
DETERMINATION PROCESS-
ING UNIT 12

DISPLAY PROCESSING UNIT 13b

SCROLL OPERATION PROCESSING UNIT 14

DISPLAY CONTROL
UNIT 19

FIXED AREA DETERMINATION
PROCESSING UNIT 15

DISPLAY IMAGE
GENERATING UNIT 18

FIXED AREA DISPLAY
PROCESSING UNIT 16

FIXED AREA OUTSIDE DISPLAY
PROCESSING UNIT 17

FIXED AREA
MOVEMENT/COPY
PROCESSING UNIT 22

SCROLL STOP PROCESSING
UNIT 21

INERTIAL SCROLL
DETERMINATION
PROCESSING UNIT 20

INFORMATION STORAGE
MEDIUM 25

EP 2 570 904 A1

FIG. 14

STATE C

STATE D

STATE E

STATE M

EP 2 570 904 A1

EP 2 570 904 A1

*FIG. 15*

FIG. 16

E

IS SECOND CONTACT POINT DRAGGED? — S70

NO → B

YES

AA

S72 — Inertia_Flg=1

S73 — ACQUIRE DRAG TIME (△T2) AND COORDINATE CHANGE AMOUNTS (△X2, △Y2) BY DRAG OF SECOND CONTACT POINT

S71 — INERTIAL SCROLL MANIPULATION? — YES

S74 — CALCULATE INERTIAL SCROLL SPEED S1

NO

S75 — ACQUIRE COORDINATE CHANGE AMOUNTS (△X2, △Y2) BY DRAG OF SECOND CONTACT POINT

S76 — FIRST DRAG MANIPULATION? (Init_Flg=1?) — NO → A

YES

S77 — DETERMINATION OF SCROLL DIRECTION

OBLIQUE DIRECTION

ONLY VERTICAL DIRECTION

ONLY HORIZONTAL DIRECTION

S78 — DETERMINE THAT SCROLL DIRECTION IS OBLIQUE DIRECTION, AND DETERMINE FIXED AREA F FROM FIRST CONTACT POINT AND GENERATE AND DISPLAY FIXED IMAGE

S80 — DETERMINE THAT SCROLL DIRECTION IS HORIZONTAL DIRECTION, AND DETERMINE FIXED AREA F FROM FIRST CONTACT POINT AND GENERATE AND DISPLAY FIXED IMAGE

S82 — DETERMINE THAT SCROLL DIRECTION IS VERTICAL DIRECTION, AND DETERMINE FIXED AREA F FROM FIRST CONTACT POINT AND GENERATE AND DISPLAY FIXED IMAGE

scroll_Flg=OBLIQUE DIRECTION

scroll_Flg=X DIRECTION — S81

scroll_Flg=Y DIRECTION

S79

Init_Flg=0 — S84

S83

A

EP 2 570 904 A1

*FIG. 17*

A

INERTIAL SCROLL PROCESSING? (Inertia_Flg==1?) — S85
— YES

NO ↓ SCROLL DIRECTION? — S86

scroll_Flg== OBLIQUE DIRECTION
scroll_Flg== HORIZONTAL DIRECTION
scroll_Flg== VERTICAL DIRECTION

S87
GENERATE AND DISPLAY SCROLLED IMAGE SCROLLED IN OBLIQUE DIRECTION IN OUTSIDE NF OF FIXED AREA

S88
GENERATE AND DISPLAY SCROLLED IMAGE SCROLLED IN HORIZONTAL DIRECTION IN OUTSIDE NF OF FIXED AREA

S89
GENERATE AND DISPLAY SCROLLED IMAGE SCROLLED IN VERTICAL DIRECTION IN OUTSIDE NF OF FIXED AREA

SCROLL DIRECTION? — S90

scroll_Flg== OBLIQUE DIRECTION
scroll_Flg== HORIZONTAL DIRECTION
scroll_Flg== VERTICAL DIRECTION

S91
GENERATE AND DISPLAY SCROLLED IMAGE INERTIALLY SCROLLED IN OBLIQUE DIRECTION IN OUTSIDE NF OF FIXED AREA

S92
GENERATE AND DISPLAY SCROLLED IMAGE INERTIALLY SCROLLED IN HORIZONTAL DIRECTION IN OUTSIDE NF OF FIXED AREA

S93
GENERATE AND DISPLAY SCROLLED IMAGE INERTIALLY SCROLLED IN VERTICAL DIRECTION IN OUTSIDE NF OF FIXED AREA

AA

EP 2 570 904 A1

*FIG. 18*

C

S97

SUBSTANTIALLY FIRST
CONTACT POINT

REMAINING
CONTACT POINT?

SUBSTANTIALLY SECOND
CONTACT POINT

NO CONTACT
POINT

S98

RELEASE DISPLAY
SPLIT AND DISPLAY
FIXED IMAGE

SHIFT PROCESSING TO
EITHER STATE BY
SYSTEM SETTING

S99

RELEASE DISPLAY SPLIT
AND DISPLAY SCROLLED
IMAGE

D

EP 2 570 904 A1

FIG. 19

10c

TOUCH INPUT MANIPULA-
TION DETECTING UNIT 11

DISPLAY UNIT 5

MANIPULATION CONTENT
DETERMINATION
PROCESSING UNIT 12

DISPLAY PROCESSING UNIT 13c

SCROLL OPERATION PROCESSING UNIT 14

DISPLAY CONTROL
UNIT 19

FIXED AREA DETERMINATION
PROCESSING UNIT 15

DISPLAY IMAGE
GENERATING UNIT 18

FIXED AREA DISPLAY
PROCESSING UNIT 16

FIXED AREA OUTSIDE DISPLAY
PROCESSING UNIT 17

SCROLL WHEEL
PROCESSING UNIT 23

INFORMATION STORAGE
MEDIUM 25

EP 2 570 904 A1

*FIG. 20*

STATE R  5  F  NF  AR

STATE S  5  F  NF  AR

STATE T  5  F  NF  AR

STATE O  5  SW  F  NF  AR

STATE Q  5  F  NF  AR

STATE N  5  F  NF  AR

STATE P  5  F  NF  AR

FIG. 21

STATE U

STATE V

STATE W

STATE X

STATE Y

## FIG. 22

START — D — S101

FIRST CONTACT POINT? — NO

YES — S102

ACQUIRE COORDINATES (X1, Y1) OF FIRST CONTACT POINT (Init_Flg=1)

Wheel_Flg=0 — S103

TWO CONTACT POINTS? — S104 — NO

YES — B

IS SECOND CONTACT POINT DRAGGED? — S105 — NO — AA

YES

MANIPULATION ON SCROLL WHEEL? — S106 — YES

NO — S107

ACQUIRE COORDINATE CHANGE AMOUNTS ($\Delta X2$, $\Delta Y2$) BY DRAG OF SECOND CONTACT POINT

ACQUIRE COORDINATE CHANGE ANGULAR AMOUNT ($\Delta \angle \alpha$) BY DRAG BY CHANGE IN FIRST DRAG START COORDINATES (X2s, Y2s) OF SECOND CONTACT POINT AND PRESENT DRAG END COORDINATES (X2e, Y2e) — S108

N1

A — S118

MANIPULATION ON SCROLL WHEEL? — YES — BB

NO — S119

SCROLL DIRECTION?

scroll_Flg== OBLIQUE — S120

GENERATE AND DISPLAY SCROLLED IMAGE SCROLLED IN OBLIQUE DIRECTION IN OUTSIDE NF OF FIXED AREA

scroll_Flg== HORIZONTAL DIRECTION — S121

GENERATE AND DISPLAY SCROLLED IMAGE SCROLLED IN HORIZONTAL DIRECTION IN OUTSIDE NF OF FIXED AREA

scroll_Flg== VERTICAL DIRECTION

GENERATE AND DISPLAY SCROLLED IMAGE SCROLLED IN VERTICAL DIRECTION IN OUTSIDE NF OF FIXED AREA — S122

AA

EP 2 570 904 A1

*FIG. 23*

N1
↓
S109
FIRST DRAG MANIPULATION? (Init_Flg=1?) — NO → A
↓ YES

S110
DETERMINATION OF SCROLL DIRECTION

OBLIQUE DIRECTION → S111
ONLY HORIZONTAL DIRECTION → S113
ONLY VERTICAL DIRECTION → S115

S111
DETERMINE THAT SCROLL DIRECTION IS OBLIQUE DIRECTION, AND DETERMINE FIXED AREA F FROM FIRST CONTACT POINT AND GENERATE AND DISPLAY FIXED IMAGE
↓
scroll_Flg= OBLIQUE DIRECTION
S112

S113
DETERMINE THAT SCROLL DIRECTION IS HORIZONTAL DIRECTION, AND DETERMINE FIXED AREA F FROM FIRST CONTACT POINT AND GENERATE AND DISPLAY FIXED IMAGE
↓
scroll_Flg= HORIZONTAL DIRECTION
S114

S115
DETERMINE THAT SCROLL DIRECTION IS VERTICAL DIRECTION, AND DETERMINE FIXED AREA F FROM FIRST CONTACT POINT AND GENERATE AND DISPLAY FIXED IMAGE
↓
scroll_Flg= VERTICAL DIRECTION
S116

Init_Flg=0 — S117
↓
A

EP 2 570 904 A1

*FIG. 24*

BB

S123

ARE COORDINATES (X2e, Y2e) CENTER OF SCROLL WHEEL? — YES

NO — S124

scroll_Flg== OBLIQUE DIRECTION

SCROLL DIRECTION?

scroll_Flg==HORIZONTAL LEFT DIRECTION OR VERTICAL UPPER DIRECTION

scroll_Flg==HORIZONTAL RIGHT DIRECTION OR VERTICAL LOWER DIRECTION

S125

GENERATE AND DISPLAY SCROLLED IMAGE SCROLLED IN OBLIQUE DIRECTION IN OUTSIDE NF OF FIXED AREA

S126

GENERATE AND DISPLAY SCROLLED IMAGE SCROLLED IN HORIZONTAL RIGHT DIRECTION OR VERTICAL LOWER DIRECTION IN OUTSIDE NF OF FIXED AREA

S127

GENERATE AND DISPLAY SCROLLED IMAGE SCROLLED IN HORIZONTAL LEFT DIRECTION OR VERTICAL UPPER DIRECTION IN OUTSIDE NF OF FIXED AREA

AA

EP 2 570 904 A1

*FIG. 25*

EP 2 570 904 A1

B

S128

IS SECOND CONTACT POINT DOUBLE-CLICKED?  —— NO

YES

S129

FIRST DRAG MANIPULATION? (Init_Flg==1?)  —— YES

NO

S130

MANIPULATION ON SCROLL WHEEL?  —— NO —— Wheel_Flg=1  ~S131

YES

AA

DISPLAY SCROLL WHEEL IN POSI-TION OF SECOND CONTACT POINT  ~S132

AA

FIG. 26

10c1

TOUCH INPUT MANIPULA-TION DETECTING UNIT 11

MANIPULATION CONTENT DETERMINATION PROCESSING UNIT 12

DISPLAY PROCESSING UNIT 13c1

SCROLL OPERATION PROCESSING UNIT 14

FIXED AREA DETERMINATION PROCESSING UNIT 15

FIXED AREA DISPLAY PROCESSING UNIT 16

FIXED AREA OUTSIDE DISPLAY PROCESSING UNIT 17

DISPLAY UNIT 5

DISPLAY CONTROL UNIT 19

DISPLAY IMAGE GENERATING UNIT 18

SCROLL WHEEL PRO-CESSING UNIT 23c1

INFORMATION STORAGE MEDIUM 25

EP 2 570 904 A1

*FIG. 27*

STATE Z          STATE A1

*FIG. 28*

B

S133

IS THIRD CONTACT POINT CLICKED OR DOUBLE-CLICKED?

NO

YES

S129

FIRST DRAG MANIPULATION? (Init_Flg==1?)

NO

YES

S130

SCROLL WHEEL PROCESSING? (Wheel_Flg==1?)

NO

Wheel_Flg=1

S131

YES

DISPLAY SCROLL WHEEL IN POSITION OF SECOND CONTACT POINT

S132

AA

AA

*FIG. 29*

10c2

TOUCH INPUT MANIPULA-
TION DETECTING UNIT 11

MANIPULATION CONTENT
DETERMINATION
PROCESSING UNIT 12

DISPLAY PROCESSING UNIT 13c2

SCROLL OPERATION PROCESSING UNIT 14

FIXED AREA DETERMINATION
PROCESSING UNIT 15

FIXED AREA DISPLAY
PROCESSING UNIT 16

FIXED AREA OUTSIDE DISPLAY
PROCESSING UNIT 17

DISPLAY UNIT 31

DISPLAY CONTROL
UNIT 19

DISPLAY IMAGE
GENERATING UNIT 18

SCROLL WHEEL PRO-
CESSING UNIT 23c2

INFORMATION STORAGE
MEDIUM 25

EP 2 570 904 A1

FIG. 30

STATE B1     STATE C1     STATE D1     STATE E1

STATE F1     STATE G1     STATE H1     STATE J1

EP 2 570 904 A1

*FIG. 31*

*FIG. 32*

B

S137

IS
THIRD CONTACT POINT
CLICKED OR DOUBLE-CLICKED?

NO

YES

S129

FIRST DRAG MANIPULATION?
(Init_Flg==1?)

NO

YES

S130

SCROLL WHEEL PROCESSING?
(Wheel_Flg==1?)

NO

Wheel_Flg=1

S131

YES

S134

Wheel_Flg=0

DISPLAY SCROLL WHEEL IN POSITION OF
SECOND CONTACT POINT

S132

HIDE SCROLL WHEEL OF POSITION OF
SECOND CONTACT POINT

S135

AA

AA

FIG. 33

10d

```
┌─────────────────────────┐                                              ┌─────────────────────┐
│ TOUCH INPUT MANIPULA-    │                                              │  DISPLAY UNIT 5     │
│ TION DETECTING UNIT 11   │                                              └─────────────────────┘
└─────────────────────────┘                                                        ▲
            │                    ┌──────────────────────────────────────────────────┼──────────┐
            ▼                    │  DISPLAY PROCESSING UNIT 13d                       │          │
┌─────────────────────────┐     │  ┌───────────────────────────────────┐  ┌──────────────────┐ │
│ MANIPULATION CONTENT     │     │  │ SCROLL OPERATION PROCESSING UNIT 14d│  │ DISPLAY CONTROL  │ │
│ DETERMINATION            │────▶│  │                                   │  │ UNIT 19          │ │
│ PROCESSING UNIT 12       │     │  │  ┌─────────────────────────────┐  │  └──────────────────┘ │
└─────────────────────────┘     │  │  │ FIXED AREA DETERMINATION    │  │           ▲            │
                                 │  │  │ PROCESSING UNIT 15          │  │  ┌──────────────────┐ │
                                 │  │  └─────────────────────────────┘  │  │ DISPLAY IMAGE    │ │
                                 │  │              ▲                     │  │ GENERATING UNIT 18│ │
                                 │  │  ┌─────────────────────────────┐  │  └──────────────────┘ │
                                 │  │  │ SPLIT POSITION DETERMINA-   │  │           ▲            │
                                 │  │  │ TION PROCESSING UNIT 24     │  │                        │
                                 │  │  └─────────────────────────────┘  │                        │
                                 │  │  ┌─────────────────────────────┐  │                        │
                                 │  │  │ FIXED AREA DISPLAY          │──┼──┘                        │
                                 │  │  │ PROCESSING UNIT 16          │  │                        │
                                 │  │  └─────────────────────────────┘  │                        │
                                 │  │  ┌─────────────────────────────┐  │                        │
                                 │  │  │ FIXED AREA OUTSIDE DISPLAY  │──┼──┘                        │
                                 │  │  │ PROCESSING UNIT 17          │  │                        │
                                 │  │  └─────────────────────────────┘  │                        │
                                 │  └───────────────────────────────────┘                        │
                                 └──────────────────────────────┬─────────────────────────────────┘
                                                                ▼
                                                    ┌─────────────────────┐
                                                    │ INFORMATION STORAGE │
                                                    │ MEDIUM 25           │
                                                    └─────────────────────┘
```

EP 2 570 904 A1

*FIG. 34*

STATE I1

FIRST FINGER

5

STATE J1

BR

5

FIRST FINGER

STATE K1

5

FIRST FINGER

STATE L1

BR

5

FIRST FINGER

*FIG. 35*

```
                        START
                          │
                          ▼
        NO ┌──────────< S141 >──────────┐ BB
           │      FIRST CONTACT POINT?   │
           │              │ YES          │ S142
           │              ▼
           │   ┌──────────────────────────┐
           │   │ ACQUIRE COORDINATES (X1,  │
           │   │ Y1) OF FIRST CONTACT      │
           │   │ POINT (Init_Flg=1)        │
           │   └──────────────────────────┘
           │              │
           │              ▼ D
           │              │
        NO │      < S144 >          B
           │   TWO CONTACT POINTS?
           │              │ YES
      BB   ▼
      NO   < S145 >
           IS SECOND CONTACT POINT DRAGGED?
                          │ YES  S146
                          ▼
              ┌──────────────────────────┐
              │ ACQUIRE COORDINATE        │
              │ CHANGE AMOUNTS (△X2,      │
              │ △Y2) BY DRAG OF SECOND    │
              │ CONTACT POINT             │
              └──────────────────────────┘
                          │
                          ▼ N1
```

```
                          A
                          │
                          ▼
scroll_Flg==            < S156 >            scroll_Flg==
OBLIQUE DIRECTION    SCROLL DIRECTION?      VERTICAL DIRECTION
        │                   │                       │
        │        scroll_Flg==                       │
        │        HORIZONTAL DIRECTION               │
   S157 │            S158  │                    S159 │
        ▼                  ▼                         ▼
┌──────────────┐  ┌──────────────────┐  ┌──────────────────┐
│ GENERATE AND │  │ GENERATE AND     │  │ GENERATE AND     │
│ DISPLAY      │  │ DISPLAY          │  │ DISPLAY          │
│ SCROLLED     │  │ SCROLLED IMAGE   │  │ SCROLLED IMAGE   │
│ IMAGE        │  │ SCROLLED IN      │  │ SCROLLED IN      │
│ SCROLLED IN  │  │ HORIZONTAL       │  │ VERTICAL         │
│ OBLIQUE      │  │ DIRECTION IN     │  │ DIRECTION IN     │
│ DIRECTION IN │  │ OUTSIDE NF OF    │  │ OUTSIDE NF OF    │
│ OUTSIDE NF   │  │ FIXED AREA       │  │ FIXED AREA       │
│ OF FIXED     │  └──────────────────┘  └──────────────────┘
│ AREA         │
└──────────────┘
```

EP 2 570 904 A1

*FIG. 36*

N1

↓

S147

FIRST DRAG MANIPULATION? (Init_Flg=1?) — NO → A

YES

↓

S148

OBLIQUE DIRECTION ← DETERMINATION OF SCROLL DIRECTION → ONLY VERTICAL DIRECTION

ONLY HORIZONTAL DIRECTION

S149

DETERMINE THAT SCROLL DIRECTION IS OBLIQUE DIRECTION, AND DETERMINE FIXED AREA F FROM FIRST CONTACT POINT AND GENERATE AND DISPLAY FIXED IMAGE

S151

DETERMINE THAT SCROLL DIRECTION IS HORIZONTAL DIRECTION, AND DETERMINE FIXED AREA F FROM FIRST CONTACT POINT AND GENERATE AND DISPLAY FIXED IMAGE

S153

DETERMINE THAT SCROLL DIRECTION IS VERTICAL DIRECTION, AND DETERMINE FIXED AREA F FROM FIRST CONTACT POINT AND GENERATE AND DISPLAY FIXED IMAGE

scroll_Flg= OBLIQUE DIRECTION

scroll_Flg= HORIZONTAL DIRECTION

S152

scroll_Flg= VERTICAL DIRECTION

S150

S154

Init_Flg=0 — S155

↓

A

*FIG. 37*

D

S143
IS FIRST CONTACT POINT DRAGGED? —— NO —— B

YES

S160
DETERMINATION OF DRAG DIRECTION OF FIRST CONTACT POINT —— VERTICAL DIRECTION

HORIZONTAL DIRECTION

S161
DECIDE THAT SCROLL DIRECTION IS VERTICAL DIRECTION AND DETERMINE FIXED AREA FROM COORDINATES (X1, Y1) OF FIRST CONTACT POINT AND GENERATE AND DISPLAY FIXED IMAGE

S163
DECIDE THAT SCROLL DIRECTION IS HORIZONTAL DIRECTION AND DETERMINE FIXED AREA FROM COORDINATES (X1, Y1) OF FIRST CONTACT POINT AND GENERATE AND DISPLAY FIXED IMAGE

S162
scroll_Flg=VERTICAL DIRECTION

scroll_Flg=HORIZONTAL DIRECTION
S164

Init_Flg=0

B
S165

EP 2 570 904 A1

FIG. 38

10e

TOUCH INPUT MANIPULA-
TION DETECTING UNIT 11

MANIPULATION CONTENT
DETERMINATION PROCESS-
ING UNIT 12

DISPLAY UNIT 31

DISPLAY PROCESSING UNIT 13e

SCROLL OPERATION PROCESSING UNIT 14e

FIXED AREA DETERMINATION
PROCESSING UNIT 15

SPLIT POSITION DETERMINATION
PROCESSING UNIT 24

CONTACT MEANS REPLACEMENT
PROCESSING UNIT 26

FIXED AREA DISPLAY
PROCESSING UNIT 16

FIXED AREA OUTSIDE DISPLAY
PROCESSING UNIT 17

DISPLAY CONTROL
UNIT 19

DISPLAY IMAGE
GENERATING UNIT 18

INFORMATION STORAGE
MEDIUM 25

EP 2 570 904 A1

FIG. 39

STATE M1

STATE N1

F BR
5 NF
(X0, Y0)
(X1, Y1)
FIRST FINGER
SECOND FINGER

F BR
5 NF
(X2, Y2)
SECOND FINGER
(X1, Y1)
FIRST FINGER

F BR
5 NF
(X1, Y1)
FIRST FINGER BEFORE REPLACEMENT
FIRST FINGER AFTER REPLACEMENT
STATE O1

*FIG. 40*

EP 2 570 904 A1

*FIG. 41*

EP 2 570 904 A1

A

S188

scroll_Flg==
OBLIQUE DIRECTION

SCROLL DIRECTION?

scroll_Flg==
VERTICAL DIRECTION

S189

GENERATE AND DISPLAY
SCROLLED IMAGE
SCROLLED IN OBLIQUE
DIRECTION IN OUTSIDE
NF OF FIXED AREA

S190

scroll_Flg==
HORIZONTAL
DIRECTION

GENERATE AND DISPLAY
SCROLLED IMAGE
SCROLLED IN HORIZON-
TAL DIRECTION IN OUT-
SIDE NF OF FIXED AREA

S191

GENERATE AND DISPLAY
SCROLLED IMAGE
SCROLLED IN VERTICAL
DIRECTION IN OUTSIDE
NF OF FIXED AREA

AA

*FIG. 42*

EP 2 570 904 A1

# FIG. 43

IS SECOND CONTACT POINT DRAGGED? — S177

NO → BB

YES ↓

ACQUIRE COORDINATE CHANGE AMOUNTS (△X2, △Y2) BY DRAG OF SECOND CONTACT POINT — S178

FIRST DRAG MANIPULATION? (Init_Flg=1?) — S179

NO → A

YES ↓

DETERMINATION OF SCROLL DIRECTION — S180

OBLIQUE DIRECTION

ONLY HORIZONTAL DIRECTION

ONLY VERTICAL DIRECTION

S181: DETERMINE THAT SCROLL DIRECTION IS OBLIQUE DIRECTION, AND DETERMINE FIXED AREA F FROM FIRST CONTACT POINT AND GENERATE AND DISPLAY FIXED IMAGE

S183: DETERMINE THAT SCROLL DIRECTION IS HORIZONTAL DIRECTION, AND DETERMINE FIXED AREA F FROM FIRST CONTACT POINT AND GENERATE AND DISPLAY FIXED IMAGE

S185: DETERMINE THAT SCROLL DIRECTION IS VERTICAL DIRECTION, AND DETERMINE FIXED AREA F FROM FIRST CONTACT POINT AND GENERATE AND DISPLAY FIXED IMAGE

scroll_Flg=OBLIQUE DIRECTION — S182

scroll_Flg=HORIZONTAL DIRECTION — S184

scroll_Flg=VERTICAL DIRECTION — S186

Init_Flg=0 — S187

→ A

EP 2 570 904 A1

# FIG. 44

STATE A0

201
(SCROLL BAR)

200 (ANCHOR)

STATE B0

203

202 (SCREEN SPLIT BAR)

204

EP 2 570 904 A1

# FIG. 45

STATE C0 → STATE D0

Labels: 206, 205 (ANCHOR), 207, 209, 208 (SCREEN SPLIT BAR), 210, 211

EP 2 570 904 A1

**INTERNATIONAL SEARCH REPORT**

| International application No. |
|---|
| PCT/JP2011/001169 |

A. CLASSIFICATION OF SUBJECT MATTER
*G06F3/048*(2006.01)i, *G06F3/041*(2006.01)i

According to International Patent Classification (IPC) or to both national classification and IPC

B. FIELDS SEARCHED

Minimum documentation searched (classification system followed by classification symbols)
G06F3/048, G06F3/041

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X <br> Y <br> A | JP 2010-86519 A  (Canon Inc.), <br> 15 April 2010 (15.04.2010), <br> paragraphs [0032] to [0052]; fig. 15 <br> & US 2010/0053221 A1 | 1,17-18 <br> 2 <br> 3-16 |
| Y | JP 10-161628 A  (Sony Corp.), <br> 19 June 1998 (19.06.1998), <br> paragraphs [0028] to [0029] <br> (Family: none) | 2 |
| A | JP 2008-508601 A  (Apple Inc.), <br> 21 March 2008 (21.03.2008), <br> entire text; all drawings <br> & WO 2006/020305 A2      & US 2006/0026521 A1 | 1-18 |

☐ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 May, 2011 (24.05.11) | 07 June, 2011 (07.06.11) |

| Name and mailing address of the ISA/ <br> Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007257220 A
- JP 2008508600 A